(19) **Europäisches Patentamt / European Patent Office / Office européen des brevets**

(11) **EP 4 251 708 B1**

(12) **EUROPEAN PATENT SPECIFICATION**

(45) Date of publication and mention
of the grant of the patent:
**11.02.2026 Bulletin 2026/07**

(21) Application number: **21896019.3**

(22) Date of filing: **26.11.2021**

(51) International Patent Classification (IPC):
*C10G 1/00* (2006.01)    *C08J 11/12* (2006.01)
*C08J 3/28* (2006.01)    *C10L 1/02* (2006.01)
*C11B 1/00* (2006.01)    *C08H 7/00* (2011.01)
*C10B 19/00* (2006.01)    *C10B 53/02* (2006.01)
*C10B 57/06* (2006.01)

(52) Cooperative Patent Classification (CPC):
**C10L 1/02; C08H 6/00; C08J 3/28; C10B 19/00;
C10B 53/02;** C08J 2397/00; C10B 57/06;
Y02E 50/10; Y02W 30/62

(86) International application number:
**PCT/CA2021/051699**

(87) International publication number:
**WO 2022/109749 (02.06.2022 Gazette 2022/22)**

---

(54) **METHOD FOR PRODUCING A HIGH-PHENOLIC-CONTENT BIOOIL**

VERFAHREN ZUR HERSTELLUNG EINES BIOÖLS MIT HOHEM PHENOLGEHALT

PROCÉDÉ DE PRODUCTON DE BIO-HUILE À TENEUR ÉLEVÉE EN COMPOSÉS PHÉNOLIQUES

---

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.11.2020 US 202063118719 P
30.04.2021 US 202163182470 P
25.08.2021 US 202163236815 P**

(43) Date of publication of application:
**04.10.2023 Bulletin 2023/40**

(73) Proprietor: **The University of New Brunswick
Fredericton, New Brunswick E3B 5A3 (CA)**

(72) Inventors:
• **SAHA, Gobinda**
**Fredericton, New Brunswick E3B 5A3 (CA)**
• **BISTO, Disha**
**Fredericton, New Brunswick E3B 5A3 (CA)**
• **AFZAL, Muhammad**
**Fredericton, New Brunswick E3B 5A3 (CA)**

(74) Representative: **HGF
HGF Limited
4th Floor, 1 City Square
Leeds LS1 2AL (GB)**

(56) References cited:
**CN-A- 105 868 445    CN-A- 111 233 941**

• KIM JOO-SIK ED - PANDEY ASHOK:
"Production, separation and applications of
phenolic-rich bio-oil - A re", BIORESOURCE
TECHNOLOGY, ELSEVIER, AMSTERDAM, NL,
vol. 178, 8 September 2014 (2014-09-08), pages
90 - 98, XP029125318, ISSN: 0960-8524, DOI:
10.1016/J.BIORTECH.2014.08.121
• YERRAYYA ATTADA ET AL: "Selective
production of phenols from lignin via microwave
pyrolysis using different carbonaceous
susceptors", BIORESOURCE TECHNOLOGY,
ELSEVIER, AMSTERDAM, NL, vol. 270, 12
September 2018 (2018-09-12), pages 519 - 528,
XP085511058, ISSN: 0960-8524, DOI: 10.1016/
J.BIORTECH.2018.09.051

EP 4 251 708 B1

- JOSEPH F. STANZIONE ET AL: "Lignin-Based Bio-Oil Mimic as Biobased Resin for Composite Applications", ACS SUSTAINABLE CHEMISTRY & ENGINEERING, vol. 1, no. 4, 13 February 2013 (2013-02-13), US, pages 419 - 426, XP055556344, ISSN: 2168-0485, DOI: 10.1021/sc3001492
- SHERIF FARAG, ET AL.,: "Impact of the heating mechanism on the yield and composition of bio-oilfrom pyrolysis of kraft lignin", BIOMASS AND BIOENERGY, vol. 95, 18 July 2016 (2016-07-18), pages 344 - 353, XP055941571
- SHERIF FARAG, DONGBAO FU, PHILIP G.JESSOP, JAMAL CHAOUKI: "Detailed compositional analysis and structural investigation of a bio-oilfrom microwave pyrolysis of kraft lignin", JOURNAL OF ANALYTICAL AND APPLIED PYROLYSIS, vol. 109, 1 September 2014 (2014-09-01), pages 249 - 257, XP055941579

Description

BACKGROUND

The uninterrupted fossil fuel extraction for consumption, as an energy source or raw material for chemicals, is leading to an energy crisis [85,87]. The need for alternate renewable sources has been globally recognized and supported through changes in laws and regulations [19,87,119,130]. Several lignocellulosic waste products from the agricultural and pulp and paper industries have shown potential in acquiring key bio-based chemical building blocks for applications, including chemical and energy production [74]. Concurrent technological advancement in material thermochemical conversion methodologies such as pyrolysis and liquefaction of lignocellulosic biomass has paved the way toward synthesizing high-yield biooil [87].

Pyrolysis, a relatively low-cost thermochemical method than compared to liquefaction [59], has been studied for biooil synthesis. The feedstock materials used in those studies include wood [17,67], cellulose [17,47], sawdust [16], corn stover [16,70,117,135], and Kraft lignin [10,13,22,24]. In pyrolysis, the microwave reactor temperature ($T_R$) and heating rate are the major variables that determine the yield of pyrolytic products. Research has shown that fast ($T_R$~500-650°C) and slow pyrolysis ($T_R$~400°C) produce two different outcomes, biooil and biochar, respectively [59]. Fast microwave pyrolysis produces a biooil with low oxygen but high carbon content along with superior heating value [57]. This former feature is of interest in the context of converting biooil into a low-viscous thermoplastic polymeric content. Crude and modified Kraft lignin (KL) biooils contain highly aromatic compounds that can replace petroleum-based chemicals in various applications [7,50,66]. The current global lignin production amounts to ~50 million tonnes per year. Although Kraft lignin is applied in water purification, soil treatment, and chemical production, it remains an underused by-product of the pulp and paper industry [7]. There have been attempts of using natural fibres and bio-based fillers in polymer manufacturing; however, most polymer matrices are made of petroleum-based by-products and diluents, e.g., vinyl-ester and styrene [4,96,118]. Studies have shown that crude or modified Kraft lignin biooil can be successfully used to synthesize resins that have comparable properties to petroleum-based resins [125,132].

BRIEF DESCRIPTION OF THE DRAWINGS

To facilitate further description of the embodiments, the following drawings are provided in which:

Figure 1 is a schematic diagram of a microwave pyrolysis system according to an embodiment of the present invention;

Figure 2 is an illustration of a gas chromatography/mass spectrometry system: Clarus SQ 8 MS and Clarus 680 GC;

Figure 3 is a normality plot of KL biooil yield AOV residuals;

Figure 4 is KL biooil yield vs. wt. % spruce/hemp biochar in the feedstock;

Figure 5 is a two-way interaction plot that shows the combined impact of wt.% microwave receptor and microwave receptor type on KL biooil yield;

Figure 6 is a KL biooil yield vs. power level applied during microwave pyrolysis;

Figure 7 is a photograph of KL biooil samples ;

Figure 8 is composition of KL biooil from KL-spruce biochar trials;

Figure 9 is composition of KL biooil from KL-hemp biochar trials;

Figure 10 is a brief compositional insight of microwave receptors;

Figure 11 is monosaccharides in KL biooil;

Figure 12 is Ketones in KL biooil;

Figure 13 is Esters in KL biooil;

Figure 14 is a chart of Phenolic distribution for KL-spruce trials;

Figure 15 is a chart of Phenolic distribution for KL-hemp trials;

Figure 16 is a diagram of depolymerisation of feedstock to form creosol;

Figure 17 is a diagram of depolymerisation of feedstock to form guaiacol;

Figure 18 is a diagram of depolymerisation of feedstock to form 4-Ethylguaiacol;

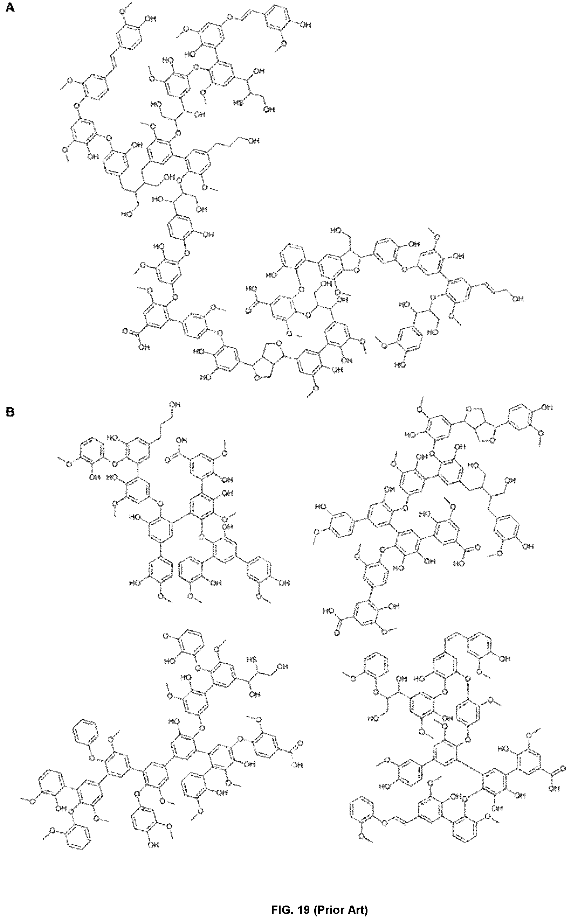

Figure 19 are constitutional structural schemes for prior art softwood Kraft lignin, with "A" designating the Acetone insoluble fraction (AIKL) and "B" designating the acetone soluble fraction (ASKL);

Figure 20 is a graph of KL biochar yield;

Figure 21 is a graph of chemical composition of KL biooil samples synthesized in the presence of spruce biochar according to a method according to an aspect of the present disclosure;

Figure 22 is a graph of major chemical groups in biooil from KL-spruce trials according to methods according to aspects of the present disclosure; and

Figure 23 is a graph of major chemical groups in biooil from KL-hemp trials according to methods according to aspects of the present disclosure.

## DETAILED DESCRIPTION OF EXAMPLES OF EMBODIMENTS

The present disclosure relates to investigating the impact of using spruce and hemp biochar, at varied ratios and operating temperatures, on the yield and composition of the biooil from pyrolyzed KL. The final goal of this present disclosure is to synthesize a biooil that can be taken as a precursor material for conversion into a novel bio-based thermoplastic polymer. Hence, testing and characterization of the biooil produced from the study described in the present disclosure are key to establish new 'optimal' feedstock and operating conditions and determining whether the biooil has to be upgraded.

The present disclosure relates to a method of pyrolysis of Kraft lignin, as defined in the appended claims.

At this stage, the observation and primary quantitative results are available to be discussed. The KL biooil synthesized is divided in two phases i.e., the light and heavy phases which are translucent off-white and opaque dark-brown, respectively. It was found an ice bath and cooling water of ≈16°C biooil yield is insufficient to reach 'expected' pyrolysis oil range, i.e. ≥ 20 wt. %. Spruce biochar, as a microwave receptor, demonstrated a higher average KL biooil yield at all power levels compared to hemp biochar. With increasing power level from 300 W to 600 W, the biooil yield increased while the biochar yield reduced. 50:50 ratio of KL and wood biochar feedstock exhibited the highest biooil yield. On pyrolyzing, KL turned into a shiny char that bonds with the spruce/hemp char to form agglomerates. In another aspect, further testing is conducted to analyze the biochar and biooil composition.

Microwave pyrolysis was chosen to treat KL as it allows for uniform heating and provides benefits such as cost avoidance by using a sample in original size and low ash production.

The feedstock and operating conditions investigated in this research were chosen after conducting literature review and understanding the current information gaps. To our knowledge, the impact of spruce and hemp biochar on KL biooil and biochar yields and compositions have not been investigated. The power levels, i.e. 300 W, 450 W and 600 W, were undertaken to attain the targeted feedstock temperature range, i.e. 450 - 650 °C and attempt to obtain a highly aromatic biooil with low moisture content. Based on previous knowledge, nitrogen was chosen as a pyrolysis atmosphere since it outputs a higher yield of phenols in lignin biooil over 450 - 750 °C compared to carbondioxide.

In another aspect, according to data obtained, we can conclude that the combination of spruce, 600 W and 50:50 KL-wood char feedstock ratio appear to be the most 'optimal' operating conditions to obtain the highest KL biooil yield in a microwave-assisted pyrolysis treatment in the presence of nitrogen. In order to form a KL bio-based polymer, the monomers present in the biooil have to be determined and studied in comparison to petrochemical monomers. Consequently, additional tests including, H NMR and GC-MS, are carried out to present the detailed composition of the biooil. The moisture, ash, C, H, N, O and S contents in the Kraft lignin and biochar were determined using proximate and ultimate analysis. SEM and FT-IR was also carried out to understand the morphological and chemical properties of the biochar.

In one aspect, the present disclosure relates to a method of pyrolysis of Kraft lignin, including providing a microwave generator system, providing a Kraft lignin feedstock in the system, providing a spruce and/or hemp biochar in the system as a microwave receptor, in a given amount as defined in claim 1, providing nitrogen atmosphere in the system, and energizing the system at a power level and heating the feedstock using microwave energy for a residence time to create a biochar from the feedstock. In another aspect, the biochar added as a microwave receptor is selected from the group consisting of a spruce biochar, a hemp biochar, and both a spruce biochar and a hemp biochar. In another aspect, the power level is in the range of 300 W to 600 W. In another aspect, the power level is selected from the group consisting of 300 W, 450 W and 600 W. In another aspect, the residence time is 30 minutes. In another aspect, the microwave power level and residence time is selected such that the temperature of the feedstock does not exceed 600 °C. In another aspect, the receptor is 50 wt.% in the feedstock. In another aspect, the wt. % of the receptor in the feedstock is selected from the group consisting of 50 wt.%, 60 wt.% and 70 wt.%. In another aspect, the present disclosure relates to a biooil with a phenolic content in the range of 86.6% to 97.9% produced according to methods described in this disclosure. In another aspect, the present disclosure relates to a biooil with a phenolic content in the range of 86.6% to 97.9%.

The present invention relates to a method of microwave pyrolysis of Kraft lignin ("KL") to boost the content of phenolic compounds in a biooil. The method relates to microwave pyrolysis process conditions based on Kraft lignin biomass with an interest in bio-replaced phenolic chemical blocks, a precursory material for thermoplastic polymeric chain derivation. The method relates to the synthesis and characterization of biooil leading to phenolic chemical blocks identification and yield. The method relates to a highly phenolic KL biooil applied in a controlled polymerisation process (e.g., ATRP or RAFT) to synthesize a Kraft lignin biooil-based thermoplastic.

The present inventors have found that the microwave receptor percentage and power level, as well as the interaction between microwave receptor percentage and microwave receptor type, have a significant contribution toward achieving both a high-yield biooil and a phenolic-rich composition. In one embodiment, a 50 wt.% microwave receptor in the feedstock yielded the highest biooil yield across most power levels studied, noting that pyrolysis of KL at 450 W and 600 W yielded relatively similar biooil yields. The obtained phenolic content ranged between 47-97% in the KL biooil samples, with high yield compounds accounting for creosol, guaiacol, and 4-ethylguaiacol. At increasing power levels, the phenolic content in KL biooil was primarily observed to decrease. In another embodiment, the method included an operating power level of 450 W applied to a 50 wt.% spruce biochar added to KL as microwave receptor.

EXAMPLES

MATERIALS AND METHODS

Microwave Pyrolysis

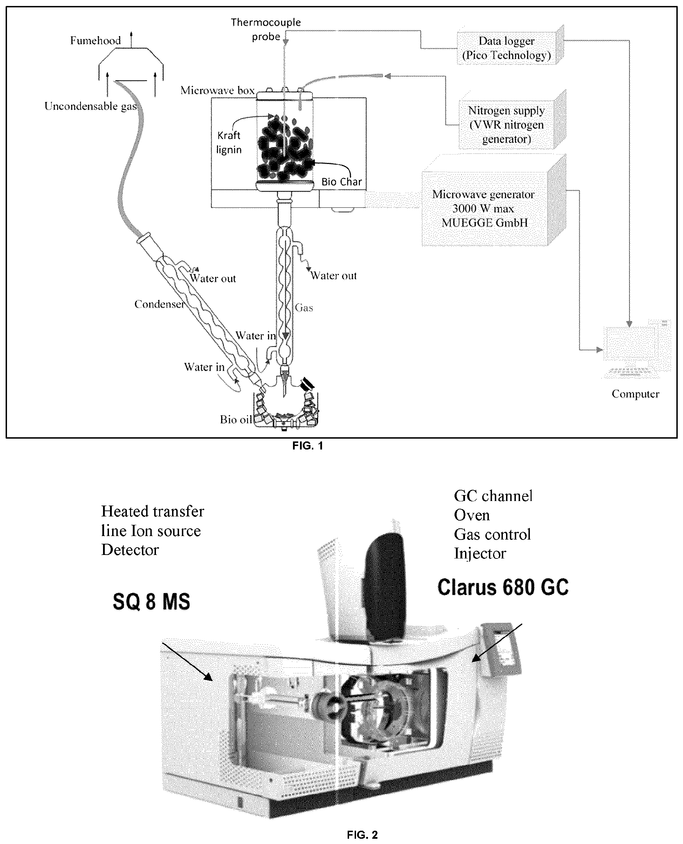

Nitrogen atmosphere was used to create an inert environment in the reactor. Compared to $CO_2$ and $H_2$, pyrolysis in $N_2$ atmosphere can produce higher and similar biooil yields, respectively. The Bioenergy and Bioproducts Research Laboratory (BBRL) is equipped with a VWR generator that uses a pressure swing adsorption to remove the oxygen, carbon dioxide and water vapor from air to provide high purity nitrogen. In order to promote uniform heating in the feedstock and to determine whether the compositional difference of microwave receptors generated from wood and grass biomass impacts the biooil yield and composition, spruce and hemp were selected for the pyrolysis process. Additionally, these biomass were locally sourced waste products, thus their valorization in the microwave pyrolysis process promotes a circular bioeconomy. Spruce and hemp biochar were produced in the BBRL. The biochar was synthesized by pyrolysis of 1 kg hemp and spruce at 2700 W for one hour in a nitrogen atmosphere; 100 g of biochar were added as microwave receptors. The power level and residence time were chosen based on previous research indicating that the lowest moisture content in biochar was achievable at 2700 W [133]. A schematic of the microwave pyrolysis system has been illustrated in Figure 1. The feedstock was made up of Kraft lignin and biochar mixture amounting to a total of 100 g.

The VWR generator extracts and converts air into nitrogen. Nitrogen was supplied at 95 psi and 1 SLPM. Before starting a trial, the system was purged with nitrogen for a minimum of 5 minutes, to ensure an oxygen-free environment, and the cooling water was stabilised at 20 °C. MUEGGE (manufacturer of the microwave system) software was used to select the desired power level (the power level dictates the reactor temperature). Stub tuners, mica sheet and Teflon sheet were used to ensure that the microwave reflection is always lower than 5%. PicoLogo software, connected to a thermocouple, records the reactor temperature with an error of $\pm$ 10 °C.

Water was supplied at 19-21 °C and maintained between 20-25 °C to cool the magnetron, power generator and condenser columns during pyrolysis. The feedstock was pyrolyzed by microwave heating to produce biochar, biooil and gas. The biochar was collected in the reactor, non-condensable gas flowed to the fume hood and condensable gas was partially cooled down and collected as biooil. The condensation system was made up of two water-cooled Allihn (bulb) condenser columns and a round bottomed flask placed in an ice bath. The biooil was collected and stored in a freezer.

The goal of the microwave pyrolysis trials was to determine the impact of (1) percentage of microwave receptor in the feedstock, (2) microwave receptor type and (3) microwave power level on the KL biooil yield and composition.

Material and Microwave Design-of-Experiments

A factorial design was used to carry out KL microwave pyrolysis and address the hypothesis connecting the biooil yield and composition. The parameters to be varied were percentage of microwave receptor applied in feedstock (3 levels), microwave receptor type (2 levels) and power level (3 levels), and as described in the Table 1.

Table 1: Microwave pyrolysis experiment factors

| Parameters | Levels | | |
|---|---|---|---|
| **Microwave Receptor Type** | Spruce | | Hemp |
| **wt. % Microwave Receptor in Feedstock** | 50 | 60 | 70 |
| **Power Level (%)** | 10 (350 W) | 15 (450 W) | 20 (600 W) |

Each combination, e.g., adding 50 wt. % of microwave receptor to KL in the feedstock pyrolyzed at 20 % (600 W), was repeated three times, amounting to a total of 54 runs for microwave pyrolysis of KL as described in Table 2. In order to reduce the experimenter's bias, the runs defined in Table 2 were carried out in a randomized trial order as generated in MiniTab. The randomized trial order can be found in Table 3.

*Table 2: Factorial design of experiments for KL microwave pyrolysis*

| Microwave Receptor Type | Power Level (W) | %wt. Microwave Receptor | Run | Microwave Receptor Type | Power Level (W) | %wt. Microwave Receptor | Run |
|---|---|---|---|---|---|---|---|
| Spruce | 300 | 50 | 1 | Hemp | 300 | 50 | 28 |
| | | | 2 | | | | 29 |
| | | | 3 | | | | 30 |
| | | 60 | 4 | | | 60 | 31 |
| | | | 5 | | | | 32 |
| | | | 6 | | | | 33 |
| | | 70 | 7 | | | 70 | 34 |
| | | | 8 | | | | 35 |
| | | | 9 | | | | 36 |
| | 450 | 50 | 10 | | 450 | 50 | 37 |
| | | | 11 | | | | 38 |
| | | | 12 | | | | 39 |
| | | 60 | 13 | | | 60 | 40 |
| | | | 14 | | | | 41 |
| | | | 15 | | | | 42 |
| | | 70 | 16 | | | 70 | 43 |
| | | | 17 | | | | 44 |
| | | | 18 | | | | 45 |
| | 600 | 50 | 19 | | 600 | 50 | 46 |
| | | | 20 | | | | 47 |
| | | | 21 | | | | 48 |
| | | 60 | 22 | | | 60 | 49 |
| | | | 23 | | | | 50 |
| | | | 24 | | | | 51 |
| | | 70 | 25 | | | 70 | 52 |
| | | | 26 | | | | 53 |
| | | | 27 | | | | 54 |

Table 3: Experimental results collected during microwave pyrolysis of Kraft lignin and microwave receptors

| Trial | Test | Kraft Lignin (9) | Biochar type | Biochar (9) | Time (min) | Power (W) | Start Temp | 15 min Temp | Biooil (9) | Biochar (9) | Gas (9) |
|---|---|---|---|---|---|---|---|---|---|---|---|
| | **Preliminary Trials** |
| | 1 | 40 | Spruce | 60 | 5 | 165 | | | 0 | - | - |
| | | | | | 16 | 285 | | | -0 | - | - |
| | 2 | 50 | Spruce | 50 | 45 | 285 | | | 0 | - | - |
| | 3 | 35 | Spruce | 65 | 45 | 320 | | | 4.7 | - | - |
| | 4 | 35 | Spruce | 65 | 30 | 420 | | | - | - | - |
| | 5 | 35 | Hemp | 65 | 45 | 400 | | | 6.8 | 55.3 | 37.9 |
| | 6 | 35 | Hemp | 65 | 30 | 443 | | | 5.5 | 73.5 | 21 |
| | 7 | 35 | Hemp | 65 | 30 | 443 | | | 4.9 | 74.3 | 20.8 |
| | 8 | 35 | Hemp | 65 | 60 | 450 | | | 6.8 | 73.2 | 20 |
| | 9 | 35 | Hemp | 65 | 60 | 750 | | | 6.3 | 73.2 | 20.5 |
| | **Factorial Design Trials** |
| 13 | 1 | 50 | Spruce | 50 | 30 | 600 | 20 | 19 | 14.4 | 47.9 | 37.7 |
| 15 | 2 | 30 | Spruce | 70 | 30 | 600 | 18 | 18 | 2.5 | 73.7 | 23.8 |
| 48 | 3 | 30 | Spruce | 70 | 30 | 450 | 24 | 19 | 4.2 | 74.2 | 21.6 |
| 52 | 4 | 50 | Spruce | 50 | 30 | 300 | 20 | 18 | 10.8 | 69.5 | 19.7 |
| 12 | 5 | 30 | Spruce | 70 | 30 | 450 | 24 | 19 | 8.4 | 65.9 | 25.7 |
| 44 | 6 | 40 | Hemp | 60 | 30 | 300 | 18 | 17.5 | 9.1 | 69.1 | 21.8 |
| 32 | 7 | 40 | Spruce | 60 | 30 | 600 | 17 | 17 | 10.4 | 64.7 | 24.9 |
| 17 | 8 | 40 | Spruce | 60 | 30 | 300 | 19 | 17 | 6.9 | 72.1 | 21 |
| 36 | 9 | 30 | Spruce | 70 | 30 | 300 | 19.5 | 19 | 0.8 | 77.8 | 21.4 |
| 45 | 10 | 30 | Hemp | 70 | 30 | 300 | 19 | 19 | 3.8 | 72.8 | 31 |
| 3 | 11 | 30 | Hemp | 70 | 30 | 450 | 17 | 16 | 7 | 73 | 20 |
| 46 | 12 | 50 | Spruce | 50 | 30 | 450 | 17 | 17 | 9.6 | 67.6 | 22.8 |
| 16 | 13 | 50 | Spruce | 50 | 30 | 300 | 18 | 17.5 | 8.4 | 72.3 | 19.3 |
| 43 | 14 | 50 | Hemp | 50 | 30 | 300 | 18 | 18 | 8.1 | 70.5 | 21.4 |
| 8 | 15 | 40 | Hemp | 60 | 30 | 300 | 18 | 18 | 9.4 | 70.5 | 20.1 |
| 49 | 16 | 50 | Spruce | 50 | 30 | 600 | 18 | 18 | 10.8 | 65.8 | 23.4 |
| 27 | 17 | 30 | Hemp | 70 | 30 | 300 | 18 | 17.5 | 8.3 | 73.5 | 18.2 |
| 53 | 18 | 40 | Spruce | 60 | 30 | 300 | 19 | 19 | 9.9 | 73.4 | 16.7 |
| 41 | 19 | 40 | Hemp | 60 | 30 | 600 | 19 | 19 | 9.5 | 66.5 | 24 |
| 19 | 20 | 50 | Hemp | 50 | 30 | 450 | 18 | 17.5 | 11.1 | 64.2 | 24.7 |
| 10 | 21 | 50 | Spruce | 50 | 30 | 450 | 18 | 17 | 2.7 | 68.5 | 28.8 |
| 25 | 22 | 50 | Hemp | 50 | 30 | 300 | 17.5 | 16.5 | 4.9 | 69.9 | 25.2 |
| 2 | 23 | 40 | Hemp | 60 | 30 | 450 | 18 | 18 | 8.4 | 67 | 24.6 |
| 51 | 24 | 30 | Spruce | 70 | 30 | 600 | 17 | 16 | 7.8 | 70.1 | 22.1 |
| 5 | 25 | 40 | Hemp | 60 | 30 | 600 | 17.5 | 17 | 9.4 | 65.6 | 25 |
| 33 | 26 | 30 | Spruce | 70 | 30 | 600 | 18 | 17 | 9.4 | 68.9 | 21.7 |

(continued)

| Factorial Design Trials | | | | | | | | | | | |
|---|---|---|---|---|---|---|---|---|---|---|---|
| 4 | 27 | 50 | Hemp | 50 | 30 | 600 | 17 | 17.5 | 9.9 | 63.5 | 26.6 |
| 7 | 28 | 50 | Hemp | 50 | 30 | 300 | 17 | 17.5 | 8.5 | 72.4 | 19.1 |
| 21 | 29 | 30 | Hemp | 70 | 30 | 450 | 17.5 | 17.5 | 8.1 | 75.9 | 16 |
| 39 | 30 | 30 | Hemp | 70 | 30 | 450 | 17 | 17 | 6.9 | 72.5 | 20.6 |
| 6 | 31 | 30 | Hemp | 70 | 30 | 600 | 17 | 17 | 8.1 | 70 | 21.9 |
| 47 | 32 | 40 | Spruce | 60 | 30 | 450 | 18 | 17.5 | 10.5 | 69.8 | 19.7 |
| 14 | 33 | 40 | Spruce | 60 | 30 | 600 | 18 | 17.5 | 11.1 | 65.3 | 23.6 |
| 42 | 34 | 30 | Hemp | 70 | 30 | 600 | 18 | 18 | 7 | 72 | 21 |
| 50 | 35 | 40 | Spruce | 60 | 30 | 600 | 18 | 18 | 10.6 | 63.6 | 25.8 |
| 54 | 36 | 30 | Spruce | 70 | 30 | 300 | 18 | 17.5 | 5.1 | 77.5 | 17.4 |
| 37 | 37 | 50 | Hemp | 50 | 30 | 450 | 17 | 17 | 8 | 68.4 | 23.6 |
| 24 | 38 | 30 | Hemp | 70 | 30 | 600 | 17 | 16.5 | 7.7 | 70 | 22.3 |
| 30 | 39 | 30 | Spruce | 70 | 30 | 450 | 17 | 16.5 | 8.3 | 70.5 | 21.2 |
| 29 | 40 | 40 | Spruce | 60 | 30 | 450 | 17 | 17 | 11 | 66 | 23 |
| 18 | 41 | 30 | Spruce | 70 | 30 | 300 | 16.5 | 16 | 1.7 | 75.7 | 22.6 |
| 35 | 42 | 40 | Spruce | 60 | 30 | 300 | 17 | 16 | 7.7 | 74.1 | 18.2 |
| 23 | 43 | 40 | Hemp | 60 | 30 | 600 | 16 | 16 | 9.2 | 65.7 | 25.1 |
| 22 | 44 | 50 | Hemp | 50 | 30 | 600 | 16 | 16 | 10.7 | 61.8 | 27.5 |
| 38 | 45 | 40 | Hemp | 60 | 30 | 450 | 16 | 16 | 9.1 | 67.9 | 23 |
| 31 | 46 | 50 | Spruce | 50 | 30 | 600 | 16 | 16 | 12.5 | 60.6 | 26.9 |
| 26 | 47 | 40 | Hemp | 60 | 30 | 300 | 17 | 17 | 8.1 | 70.8 | 21.1 |
| 34 | 48 | 50 | Spruce | 50 | 30 | 300 | 17 | 17 | 11.8 | 67 | 21.2 |
| 20 | 49 | 40 | Hemp | 60 | 30 | 450 | 17 | 17 | 9.5 | 66.8 | 23.7 |
| 1 | 50 | 50 | Hemp | 50 | 30 | 450 | 17 | 17 | 9.5 | 63.3 | 27.2 |
| 11 | 51 | 40 | Spruce | 60 | 30 | 450 | 17 | 17 | 9.4 | 67.9 | 22.7 |
| 40 | 52 | 50 | Hemp | 50 | 30 | 600 | 16 | 16 | 9.8 | 64.2 | 26 |
| 9 | 53 | 30 | Hemp | 70 | 30 | 300 | 15 | 15 | 6.8 | 75 | 18.2 |
| 28 | repeat 10 | 30 | Hemp | 70 | 30 | 300 | 16 | 15 | 6.5 | 76.5 | 17 |
| | 54 | 50 | Spruce | 50 | 30 | 450 | 16 | 16 | 10.5 | 65.9 | 23.6 |
| | repeat 21 | 50 | Spruce | 50 | 30 | 450 | 17 | 16 | 13.8 | 61.7 | 24.5 |

Based on the factorial design exercise, the statistical model for the study described in the present disclosure was created, as shown by Equation 1.

*Equation 1*

$$Y_{ijk} = \mu + \propto_i + \tau_j + \propto \tau_{ij} + \beta_k + \propto \beta_{ik} + \tau\beta_{jk} + \alpha\tau\beta_{ijk} + \varepsilon_{ijk}$$

$Y_{ijk}$ - microwave pyrolysis **output influenced by the process parameters**
$\infty_i$ - **microwave receptor percentage** as fixed effect with j= 1, 2, 3 (50, 60, 70)

$\tau_j$ - **microwave receptor type** as fixed effect with i= 1, 2 (spruce, hemp)

$\propto \tau_{ij}$ - interaction between **microwave receptor type and percentage**

$\beta_k$ - **power level** as fixed effect with k= 1,2,3 (300 W, 450 W, 600 W)

$\propto \beta_{ik}$ - interaction between **microwave receptor percentage and power level**

$\tau\beta_{jk}$ - interaction between **microwave receptor type and power level**

$\alpha\tau\beta_{ijk}$ - interaction between **microwave receptor percentage, microwave receptor type and power level**

The significance for hypothesis testing in the study described in the present disclosure was set at 0.1 as it would be expensive, e.g., recommendation to use a less effective feedstock and wrong cost estimations, to miss the impact of the above process parameters on the biooil yield based on the 54 samples. The microwave pyrolysis parameters for KL biooil yield optimization were evaluated by statistical and graphical analysis of 54 trials. In order to optimize for both KL biooil yield and phenolic content in the biooil, the factor combinations conducive for higher yields were used as the foundation for selection of KL biooil samples analyzed to investigate the impact on the chemical distribution. Sections "Optimized Conditions for KL Biooil Yield" and "Overview of Chemical Composition for KL Biooil" in this specification provide further information on the selection of the 12 KL biooil samples for GC-MS analysis. Characterization of the 12 samples did not only provide biooil compositional details for relevant factor combinations, but it was also cost-effective and favorable for the project timeline.

Biooil Characterization

The chemical composition of KL biooil was analyzed in order to discuss its suitability in a resinification process. Gas Chromatography-Mass Spectrometry (GC-MS) analysis was carried out to determine the concentration and yield of aromatic and aliphatic compounds in the biooil (<200 g/mol) [21]. During the GC-MS analysis, GC uses distinctive chemical properties to separate molecules into pure compounds. GC is followed by MS, whereby the pure compounds are accurately identified and quantified based on their mass-to-charge ratio [3]. GC-MS analysis was conducted with a PerkinElmer Clarus 680 GC coupled to a Clarus SQ 8 MS, as illustrated in Figure 2, at Dalhousie University Agricultural campus (Truro, Nova Scotia, Canada). The gas chromatograph is made up of a heated inlet, an oven and a coiled glass tube (GC channel) coated in a material that acts as the stationary phase. Typically during a GC-MS analysis, the sample is prepared by dissolution or dilution in a solvent. The liquid sample is injected onto the inlet found on the GC side of the system and vaporized into gas form. An inert gas, e.g. helium, is used as the mobile phase to carry the vaporized sample in the GC channel, whereby compounds in the sample interact with the stationary phase. The chemical make-up of the compounds, and interaction with the stationary phase, impacts the speed at which they travel in the channel. The time taken to travel across the GC channel is called the retention time. The variation in speed separates the compounds consecutively, and they leave the GC channel to enter the mass spectrometer. An ion source is applied to bombard electrons on the sample molecule, thus producing charged particles (ions). The ions are divided into fragments of the original molecule and the mass of these fragments divided by the charge is called the mass to charge ratio (m/z). The fragments are accelerated in a magnetic field in a tunnel on the MS side, until they are detected on a plate at the end of the tunnel. Consequently, the m/z and the amount of fragment present in the sample are calculated [38].

For GC-MS characterization of the KL biooil samples in the study described in the present disclosure, the GC injection port was operated at 280 °C in split ratio of 10:1, and 1 mL/min helium was used as carrier gas. 1 $\mu$L of the biooil was analysed in an Rxi-5 ms column(30 m length, 0.25 mm diameter, 0.25 $\mu$m stationary phase) with a low-polarity phase. For a total run of 25 mins, the initial oven temperature was held at 70 °C for 2 min, then firstly increased to 250 °C at a heating rate of 10 °C/min and finally increased to 280 °C at a heating rate of 6 °C/min. An electron impact (EI) source with electron energy of 70 eV, operating in the range 45-400 m/z, was used. The source and transfer line temperatures were 150 °C and 200 °C, respectively. A 6.6 min solvent delay was applied to protect the MS. The 30 largest peaks, based on the integrated peak areas in total ion chromatogram (TIC), were identified by using NIST library.

Kraft Lignin Biooil Production

Variation in Feedstock Temperature

The pyrolysis power level or operating temperature has a significant impact on the yield and quality of KL pyrolytic products. In order to analyze the impact of operating temperature, the Kraft lignin and biochar mixture were pyrolyzed at 300, 450 and 600 W for 30 minutes. This section analyses the heating rate and temperature ranges achieved in the feedstock at applied power levels. Table 4 summarizes the pyrolytic products favored at varied temperatures during decomposition of KL [9,41,65].

*Table 4: KL microwave pyrolysis product selectivity by temperature [38,63]*

| Temperature (°C) | Product Selectivity | Decomposition Stage |
|---|---|---|
| 400-550 | Biochar, Biooil | Primary cracking of KL |
| 550-600 | Biooil, Gas | Secondary cracking of KL |
| Above 600 | Gas | Decomposition of biooil by breakdown of aromatic C-C bonds |

The choice of power level can be made such that the feedstock will decompose selective to the desired product. According to Table 4, in order to promote the production of biooil, the operating temperature should not exceed 600 °C.

Table 5 summarizes the average (of three repeated trials for each factor combination) timely key changes observed in the feedstock temperature and during pyrolysis of Kraft lignin and biochar (50 wt.%:50 wt.%). Temperature analysis for microwave pyrolysis of KL has been previously completed [41], however in the study not include the application of spruce and hemp biochar in the feedstock.

Table 5: Timely feedstock temperature recorded at varied power levels

| Feedstock: Kraft lignin and spruce biochar (50 wt.% : 50 wt.%) | | | |
|---|---|---|---|
| Time/Power | 300 W | 450 W | 600 W |
| 0-10 min | T: 180-440 °C (26 °C/min) | T: 32-350 °C (32 °C/min) | T: 57-560 °C (50 °C/min) |
| 10-15 min | T: 443-520 °C (15 °C/min) | T: 350-470 °C (24 °C/min) | T: 560-550 °C (-1 °C/min) |
| 15-30 min | T: 520-540 °C (1 °C/min) | T: 470-513 °C (3 °C/min) | T: 550-555 °C (0.1 °C/min) |
| Feedstock: Kraft lignin and hemp biochar (50 wt.% : 50 wt.%) | | | |
| 0-10 min | T: 21-230 °C (21 °C/min) | T: 30-360 °C (33 °C/min) | T: 15-270 °C (26 °C/min) |
| 10-15 min | T: 230-380 °C (29 °C/min) | T: 360-490 °C (26 °C/min) | T: 270-450 °C (36 °C/min) |
| 15-30 min | T: 380-540 °C (11 °C/min) | T: 490-560 °C (4 °C/min) | T: 450-620 °C (11 °C/min) |

During the first 10 minutes of KL microwave pyrolysis, the heating rate rose rapidly at average heating rates of 26-50 °C/min and 21-33 °C/min in presence of spruce and hemp biochar, respectively. According to Table 5, the largest rise in temperature was observed from 0-15 minutes, where the temperature increase is above 200-400 °C. The last 15 minutes of the KL microwave pyrolysis trials displayed the lowest thermal gradient, resulting in an average temperature change of approximately 20 °C.

KL-spruce trials at 600 W reached the highest heating rate (50 °C/min) during the first 10 minutes of pyrolysis. After reaching the peak operating temperature, during breakdown of KL-spruce biochar, the temperature stabilizes to reach steady state. When KL and hemp biochar were pyrolyzed at 600 W, the heating rate recorded during the first 10 minutes was 26 °C/min; it was half the heating rate recorded compared to when spruce biochar was applied. At increased power levels, in presence of hemp biochar, at 450 W for a 50 wt.%:50 wt.% KL to microwave receptor distribution in the feedstock, it was observed that hemp biochar as microwave receptor, promoted a faster heating rate of the feedstock compared to spruce biochar.

On addition of hemp biochar, as the power level was raised from 300 W to 600 W, a gradual increase in the final operating temperature was recorded at the end of the 30-minute interval. However, on application of spruce biochar, the operating temperature recorded at 450 W was lower than 300 W. This unexpected temperature observation can be allocated to random errors related to the variation in the biochar and Kraft lignin distribution for the three trials completed and the approximation when trying to position the thermocouple probe in the same position as other trials. Moreover, the systematic error associated with thermocouple can also influence the temperature measurements.

By combining the findings in Tables 4 and 5, it was observed that microwave pyrolysis of KL-spruce biochar at 300 W and 600 W or KL-hemp biochar at 450 W for 30 minutes can be selective for higher biooil yields as the final temperature achieved, i.e., 530-540 °C, is selective towards the production of biochar and biooil. It can also be suggested that if 50 wt.%

hemp biochar is applied to KL at 600 W, the residence time for microwave pyrolysis should be lower than 30 minutes in order to prevent the temperature to reach above 600 °C, thus preventing chemical reactions that further breakdown the biooil and shifts selectivity towards biogas.

Biooil Yield

Based on the factorial design described in section "Materials and Methods" of this specification, 54 trials were completed for microwave pyrolysis of Kraft lignin. Table 6 shows the 18 distinct factor combinations applied during KL pyrolysis, highlighting the trials that produced the highest biooil yield from the three repeated trials carried out for each factor combination. The results for all 54 trials can be viewed in Table 3.

Table 6: KL pyrolytic products yield

| Test | Trial | Biochar Type | Power Level (W) | wt.% Microwave Receptor | Biooil (g) | Biochar (9) | Gas (9) |
|---|---|---|---|---|---|---|---|
| 1 | 1 | Spruce | 600 | 50 | 14.4 | 47.9 | 37.7 |
| 2 | 33 | | | 60 | 11.1 | 65.3 | 23.6 |
| 3 | 26 | | | 70 | 9.4 | 68.9 | 21.7 |
| 4 | 21 | | 450 | 50 | 13.8 | 61.7 | 24.5 |
| 5 | 32 | | | 60 | 11.0 | 66 | 23 |
| 6 | 5 | | | 70 | 8.4 | 65.9 | 25.7 |
| 7 | 48 | | 300 | 50 | 11.8 | 67 | 21.2 |
| 8 | 42 | | | 60 | 7.7 | 74.1 | 18.2 |
| 9 | 36 | | | 70 | 5.1 | 77.5 | 17.4 |
| 10 | 44 | Hemp | 600 | 50 | 10.7 | 61.8 | 27.5 |
| 11 | 19 | | | 60 | 9.5 | 66.5 | 24 |
| 12 | 31 | | | 70 | 8.1 | 70 | 21.9 |
| 13 | 20 | | 450 | 50 | 11.1 | 64.2 | 24.7 |
| 14 | 49 | | | 60 | 9.5 | 66.8 | 23.7 |
| 15 | 29 | | | 70 | 8.1 | 75.9 | 16 |
| 16 | 28 | | 300 | 50 | 8.5 | 72.4 | 19.1 |
| 17 | 15 | | | 60 | 9.4 | 70.5 | 20.1 |
| 18 | 17 | | | 70 | 8.3 | 73.5 | 18.2 |

In order to ensure reliable hypothesis testing by application of statistical tools and tests, the data distribution was analyzed for normality. Reliability of the data and hypotheses testing were completed in R-Console software in the study described in the present disclosure. Summarized statistical output is discussed later in this specification.

A normality test was completed to determine the validity of the following hypothesis:

Null hypothesis: The data is approximately normally distributed
Alternate hypothesis: The data is not normally distributed

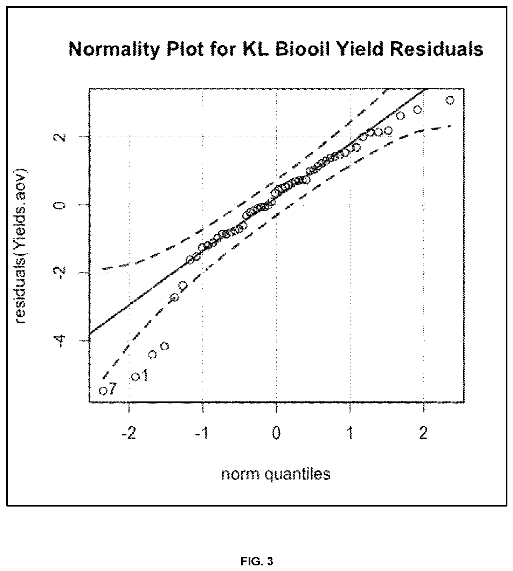

Figure 3 shows the normality plot of KL biooil yield residuals, obtained from the Analysis of Variance (AOV) in R-Console. Most data points fall within the confidence interval to form a linear line, thus suggesting that the null hypothesis is valid and the data can be analyzed using parametric tests.

While it has been previously observed that the addition of biochar as a microwave receptor impacts the heating rate during pyrolysis, this study investigated whether biochar synthesized from different biomass has a varied impact on the yield of KL pyrolytic products and composition of KL biooil. Additionally, from the present inventors' knowledge, spruce and hemp biochar have yet to be used as a microwave receptor during microwave pyrolysis of KL. This contributes to using "use of renewable feedstocks" based on the 12 Green Principles of Chemistry [1] and "renewable rather than depleting" based on the 12 Green Principles of Engineering [2].

The model Equation 1 was modified into Equation 2, in order to present biooil yield as the output influenced by the main effects and the interactions.

*Equation 2*

$$Biooil\ Yield_{ijk} = \mu + \propto_i + \tau_j + \propto \tau_{ij} + \beta_k + \propto \beta_{ik} + \tau\beta_{jk} + \alpha\tau\beta_{ijk} + \varepsilon_{ijk}$$

The hypotheses evaluated in this section include whether:

1. the percentage of microwave receptor ($\propto_i$) in the feedstock has a significant effect on the biooil yield;
2. the microwave receptor types ($\tau_j$) has a significant effect on the biooil yield;
3. the power level ($\beta_k$) has a significant effect on the biooil yield;
4. 2-way or 3-way interactions between applied factors has a significant effect on the biooil yield.

The null hypothesis, as described by Equation 3, are valid if there is evidence that the main effects and interactions do not have significant impact on the biooil yield. From Table 6, all the model terms with a p-value <0.1 shows evidence of significant impact on the biooil yield; it suggests that the alternate hypotheses, described by Equation 4 are valid.

*Equation 3*

Null hypotheses: all $\propto_i = 0$; $\tau_j = 0$; $\beta_k = 0$; $\propto \tau_{ij} = 0$; $\propto \beta_{ik} = 0$; $\tau\beta_{jk} = 0$; $\alpha\tau\beta_{ijk} = 0$.

*Equation 4*

Alternate hypotheses: some $\propto_i \neq 0$; $\tau_j \neq 0$; $\beta_k \neq 0$; ; $\propto \tau_{ij} \neq 0$; $\propto \beta_{ik} \neq 0$; $\tau\beta_{jk} \neq 0$; $\alpha\tau\beta_{ijk} \neq 0$.

Three ANOVA tests were carried out, including Test 1, Test 2 (excluding 3-way interactions) and Test 3 (excluding all interactions). Table 7 summarises partial results from the ANOVA tests.

*Table 7: Significance of main effects and interactions on biooil yield as determined by analysis of variance (ANOVA) F- and p-values.*

| Factors | Test 1 | Test 2 | Test 3 |
|---|---|---|---|
| | p-value | | |
| **Main Effects** | | | |
| $\propto_i$ | **0.00** | **0.00** | **0.00** |
| $\tau_j$ | 0.42 | 0.43 | 0.48 |
| $\beta_k$ | **0.00** | **0.00** | **0.00** |
| **Two-way interactions** | | | |
| $\propto \tau_{ij}$ | **0.00** | **0.00** | - |
| $\propto \beta_{ik}$ | 0.85 | 0.86 | - |
| $\tau\beta_{jk}$ | 0.23 | 0.238 | - |
| **Three-way interaction** | | | |
| $\alpha\tau\beta_{ijk}$ | 0.29 | - | - |

Based on the results from Test 1, there is evidence that the microwave receptor percentage, power level and the interaction between the microwave receptor percentage and microwave receptor type have significant impacts on the KL biooil yield produced from microwave pyrolysis. Consequently, the following alternate hypotheses $\propto_i \neq 0$, $\beta_k \neq 0$ and $\propto \tau_{ij} \neq 0$ are valid. Tests 2 and 3 were carried out by eliminating the 2-way and 3-way interactions from the ANOVA tests; Tests 2 and 3 support the evidence found in Test 1. According to the analysis, in process design for microwave pyrolysis of KL for biooil yield optimization, the following have to be strongly considered:

- The percentage of microwave receptor added
- The microwave power level selected
- The optimal percentage of microwave receptor varies according to the type of microwave receptor used

Impact of Microwave Percentage and Receptor Type in Feedstock

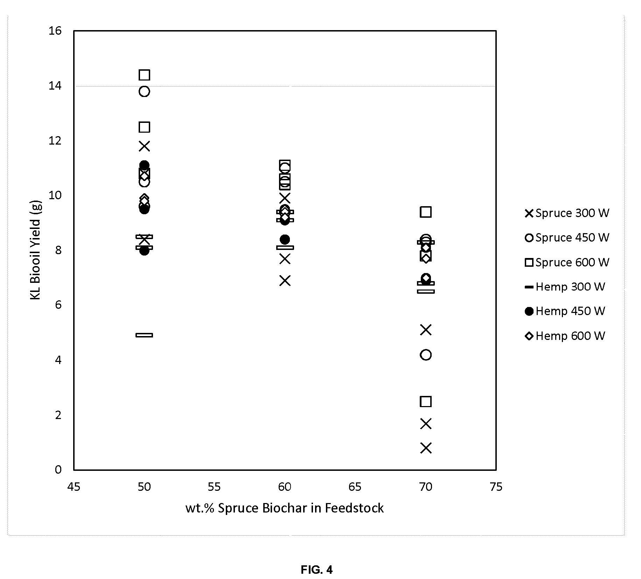

In regard to the influence on the biooil yield, the percent microwave receptor and its interaction with the microwave receptor type were found to have a significant impact. The percentages of microwave receptor used in the feedstock were 50 wt.% , 60 wt. % and 70 wt.%. The impact of microwave receptor type and percentage on KL biooil yield can be observed in Figure 4.

Application of spruce biochar as the microwave receptor resulted in higher KL biooil yields in comparison to hemp biochar. The lowest and highest KL biooil yields were obtained when using 70 wt.% and 50 wt.% spruce biochar, respectively. Yerrayya et al. [147] observed that utilizing a high percentage of microwave receptor requires a longer residence time for completion of pyrolysis and leads to controlled heating of the feedstock. The biooil yield could be higher when the wt. % microwave receptor was increased, i.e., 60 and 70 wt.%, if the residence time was extended beyond 30 minutes to allow for additional biooil collection. In presence of hemp biochar, as illustrated in Figure 4, the biooil yield did not vary considerably when the power level and the percentage of microwave receptor in the feedstock were altered. KL biooil yields were recorded between 4.9-10.7 g and 0.8-14.4 g on application of hemp and spruce biochar, respectively. These results are in agreeance with findings by Yerrayya et al [147], i.e., receptors with higher external surface area allow effective degradation of lignin, thus reducing the biooil yield. Properties of the microwave receptors used in the study described in the present disclosure, i.e., spruce and hemp pyrolyzed at 2700 W, have been summarized in Table 8 [133].

*Table 8: Summary of microwave receptor properties [133]*

| Biochar | Moisture content | BET external surface ($m^2/g$) | Volatile matter | Fixed carbon | Ash | C | H | N | O |
|---------|------------------|-------------------------------|-----------------|--------------|-----|-------|------|------|-------|
| Spruce | 3.9 | 9.96 | 25.0 | 69.1 | 2.0 | 77.48 | 3.64 | 0.10 | 18.78 |
| Hemp | 2.7 | 12.18 | 25.0 | 71.3 | 1.0 | 78.54 | 3.25 | 0.59 | 17.62 |

Overall, it was observed that using 50-60 wt. % of microwave receptor in the feedstock outputs a biooil yield approximately 10 wt.% of total pyrolysis product yield. In contrast to observations made by Yerraya et al. [147], that the highest biooil yield was obtained from 10 g lignin: 90 g microwave receptor (activated carbon), in the study described in the present disclosure the biooil yield decreased when the percentage of microwave receptor was increased. This can be attributed to differences in the microwave receptor particle size, distribution in the feedstock and the condensation conditions. Moisture present in receptor capillaries (nano-sized) contributes to steam cracking of Kraft lignin particles, leading to high biooil yield. Thus, molecular steam cracking would be considerably higher in the presence of activated carbon since its moisture content is 15 wt.% while the moisture content of spruce and hemp biochar is approximately 3.9 and 2.7 wt.%, respectively.

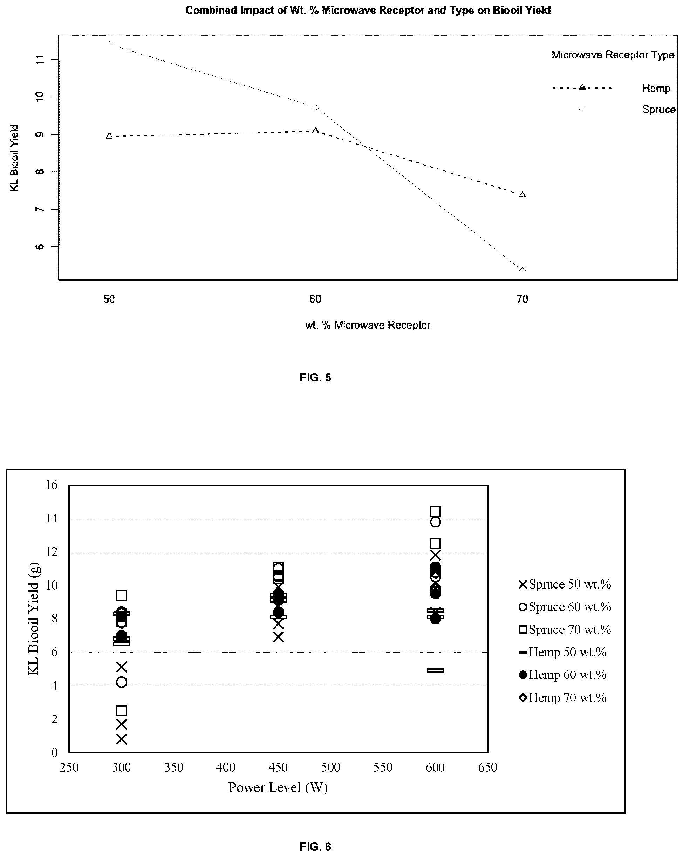

The only interaction, i.e., the two-way interaction between wt.% microwave receptor and type, that showed evidence for influence on the biooil yield has been depicted in Figure 5.

This significance of the interaction reinforces that the wt. % microwave receptor in feedstock has a significant impact on the biooil yield. From Figure 5, it can be observed the biooil yield considerably improves in presence of spruce biochar, when the wt. % microwave receptor is reduced. If a feedstock of 62-70 wt.% microwave receptor was to be added in the feedstock, hemp over spruce biochar should be selected to optimize the biooil yield. From approximately 62-50 wt.% microwave receptor in the feedstock, there is evidence that spruce biochar will output the higher biooil yields in comparison to hemp biochar.

Impact of Power Level

From the ANOVA test, the power level was one of the main effects that showed to have a significant impact on the biooil yield. Figure 6 shows the trend for the impact of microwave pyrolysis power levels on KL biooil yield. For an equal distribution (50 wt.%: 50 wt.%) of KL and biochar mixture in the feedstock, it was observed that the biooil yield increased by 17% when the power level was increased from 300 to 450 W, followed by an additional 4% when going from 450 to 600 W. This shows that in presence of spruce biochar, the biooil yield does not increase significantly beyond 450 W. This trend was confirmed for other feedstock ratios applied. For trials with 60 wt.% and 70 wt.% spruce biochar in the feedstock, the biooil yield increased by over 40% (43 and 65%) when the power level was increased from 300 to 450 W while the rise in biooil yield was considerably lower beyond 450 W.

This was further supported by the analysis of the KL-hemp biochar trials. When the power level was increased from 450 to 600 W, no change or reduction in the biooil yield (in case of the 50-50 wt.% KL to biochar) was observed. Additionally, when increasing the power level from 300 to 450 W, it was observed that for 50 wt.% of hemp biochar in the feedstock, the biooil yield increased by 31%; for 60 wt.% and 70 wt. % of hemp biochar in the feedstock, the change in biooil yield was below 3%.

Optimized Conditions for KL Biooil Yield

The optimized microwave pyrolysis conditions, 4 out of 18 factor combinations, for efficiently achieving a high KL biooil yield have been described in Table 9. According to analysis of experimental data, 50 wt. % microwave receptor in the feedstock outputs the highest biooil yield; the only exception was the trial completed at 300 W with hemp biochar. Consequently the probability of obtaining the highest biooil at 50 wt.% , indifferent of microwave receptor type and power level, is 0.94. By proposing 50 wt. % as the optimal percentage for the microwave receptor, 6 out of 18 factor combinations remained as potential considerations for yield optimization.

*Table 9: Optimized conditions for KL biooil yield*

| Test | wt. % Microwave receptor | Microwave Receptor Type | Power Level (W) | Biooil Yield (g) |
|------|--------------------------|-------------------------|-----------------|------------------|
| 1    |                          | Spruce                  | 600             | 14.4             |
| 4    | 50 wt. %                 | Spruce                  | 450             | 13.8             |
| 10   |                          | Hemp                    | 600             | 10.7             |
| 13   |                          | Hemp                    | 450             | 11.1             |

Spruce biochar was previously determined as the more effective microwave receptor when the wt. % applied is within 50-62 wt.%. However it should be noted that spruce and hemp have dissimilar lignocellulosic composition, thus both biochar were considered for evaluation of the overall optimized conditions. The power levels recommended for biooil yield optimization are 450 and 600 W. This is because the highest yield in presence of spruce and hemp biochar were obtained at 600 and 450 W, respectively. Additionally, it was observed that while at 600 W the highest biooil yield was obtained, operating around 450 W might be the most cost effective. This is because the rise in biooil yield from 300 to 450 W is significant (17-65%) while beyond 450 W, the percentage increase was 0-22%. The operating temperature influences KL depolymerization reactions, thus the impact of all power levels on the biooil composition were investigated for phenolic content optimization. Section "Biooil Composition" in this specification analyses the operating conditions based on the KL biooil composition, with the goal to optimize the phenolic content.

Biooil Composition

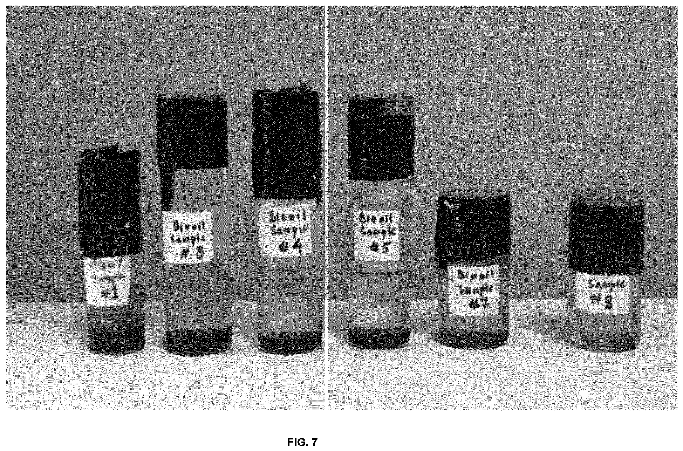

Microwave pyrolysis of KL was completed to synthesize a source of greener chemical building blocks in the form of KL biooil as for resin manufacturing and optimizing the microwave pyrolysis conditions to improve the phenolic content in KL biooil. Gas Chromatography-Mass Spectrometry characterization was carried out to define the chemical composition of KL biooil obtained at different microwave conditions and analyze the suitability of KL biooil as a source of bio-based monomers to replace petroleum-based alternatives. The sample from each test contained two phases, i.e. the biooil heavy phase (BOH) and the biooil light phase (BOL), as shown in Figure 7.

Based on information acquired from yield optimization analysis, the biooil samples as described in Table 10 were analyzed through GC-MS testing.

The heavy and light phases were analyzed separately, thus a total of 12 samples were tested.

*Table 10: KL biooil samples chosen for GC-MS testing*

| Test | Biochar Type | Power Level (W) | wt.% Microwave Receptor | Biooil (g) | Biochar (9) | Gas (g) |
|------|--------------|-----------------|-------------------------|------------|-------------|---------|
| 1    |              | 600             | 50                      | 14.4       | 47.9        | 37.7    |
| 4    | Spruce       | 450             | 50                      | 13.8       | 61.7        | 24.5    |
| 7    |              | 300             | 50                      | 11.8       | 67          | 21.2    |

(continued)

| Test | Biochar Type | Power Level (W) | wt.% Microwave Receptor | Biooil (g) | Biochar (9) | Gas (g) |
|------|--------------|-----------------|--------------------------|------------|-------------|---------|
| 10 | | 600 | 50 | 10.7 | 61.8 | 27.5 |
| 13 | Hemp | 450 | 50 | 11.1 | 64.2 | 24.7 |
| 16 | | 300 | 50 | 8.5 | 72.4 | 19.1 |

The microwave receptors were synthesized from two different lignocellulosic biomass, thus there was an interest to see if further decomposition of distinct biochar will impact the KL biooil. A comparison of KL biooil formed in presence of different biochar has not been completed. Additionally, the power level directly impacts the extent of depolymerization during pyrolysis, hence its effect on chemical composition were analyzed. Table 12 displays the sample composition analysis obtained for one phase of the biooil through GC-MS analysis.

Overview of Chemical Composition for KL Biooil

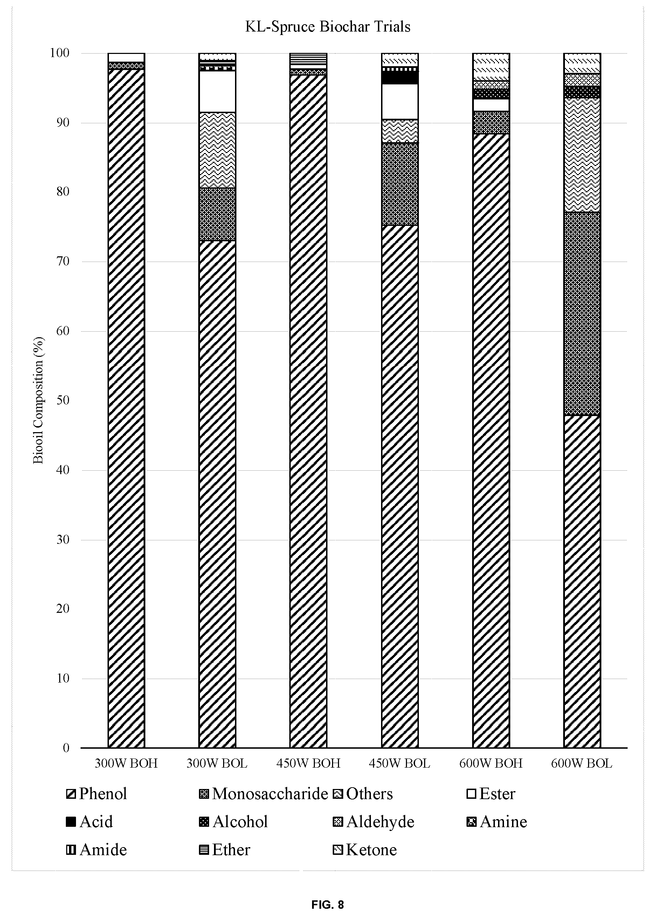

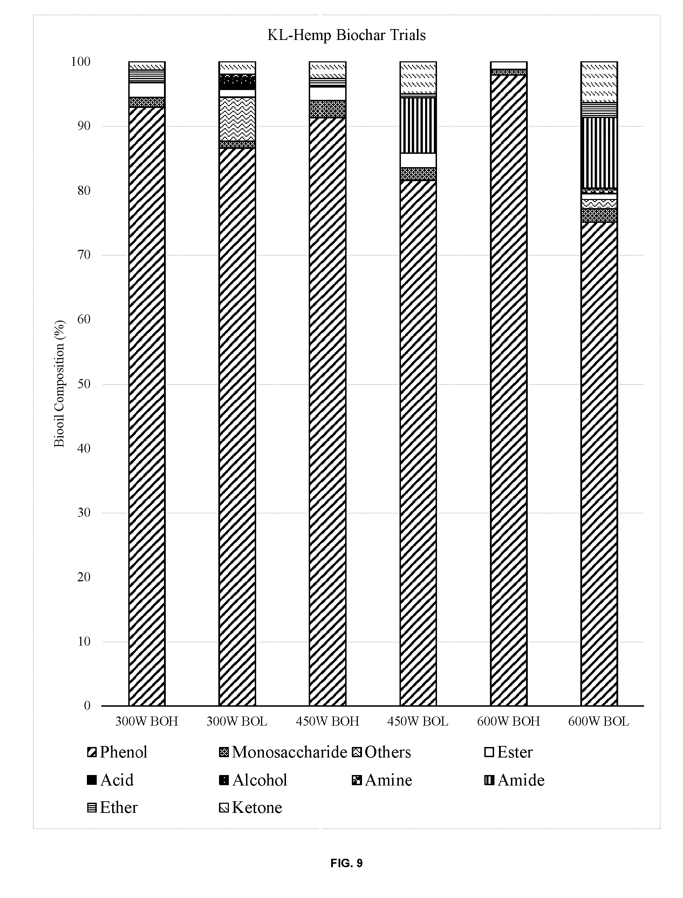

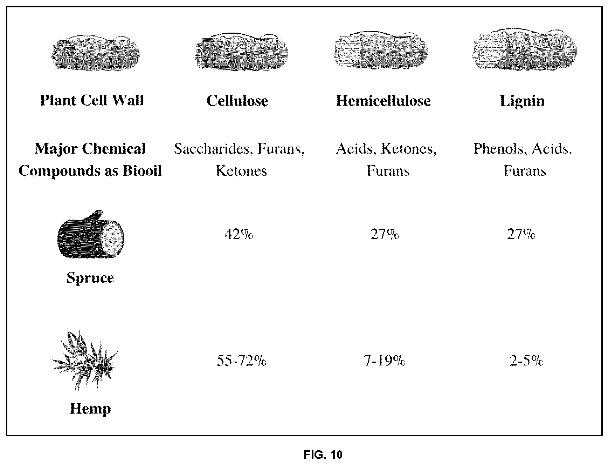

The synthesized KL biooil consisted of two phases, i.e., the heavy phase (BOH) and the light phase (BOL). In the study described in the present disclosure, the yield of BOL ( ~60 wt.%) was larger in comparison to BOH (~40 wt.%). Each phase was analyzed separately to identify the type and the relative yield of different chemical groups produced in the biooil. The major chemical compounds present in the biooil samples have been described in Figures 8 and 9.
Phenol represents the largest chemical compound formed in the KL biooil. Thus, it will be discussed in detail in section "Phenolic Content" of this specification. As seen in Figures 8 and 9, the heavy phase of the biooil has a higher phenolic content compared to the light phase. Both microwave receptor types reached the highest phenolic content observed in BOH, i.e., 97%. This shows that KL is a better feedstock for production of phenols since pyrolysis of other biomass usually produce biooil containing ~ 40% phenolic content [154]. However, spruce biochar can achieve 97% phenolic content at a lower power level (300 W) in comparison to hemp biochar (600 W). Low and moderate power levels, i.e., 300 - 450 W were more selective towards production of phenolic compounds as compared to pyrolyzing KL at 600 W. At increasing power levels, hemp biochar produces a more phenolic BOL (75-86%), while a trend based on power level was not observed for KL-spruce (phenolic content: 47-72%).
The chemical composition of the heavy biooil was affected by the microwave receptor type applied. Spruce is a tree-based biomass while hemp is a fiber crop, thus the organic composition of these raw materials differs. Figure 10 shows the amount [107,128] of cellulose, hemicelluloses, and lignin (proposed median for spruce and a range for hemp) typically found in each biomass as well as the top three chemical compounds formed as biooil when these organic compounds are pyrolyzed from 300 to 700 °C [154].
In this section, the sources and reactions that produce major non-phenolic chemical groups in the KL biooil will be discussed. The optimized conditions to synthesize a phenolic KL biooil will thus take into account factors that are conducive for production of non-phenolic groups and the potential impacts or challenges for the targeted application, i.e. as a raw material for resin manufacturing.

Monosaccharides

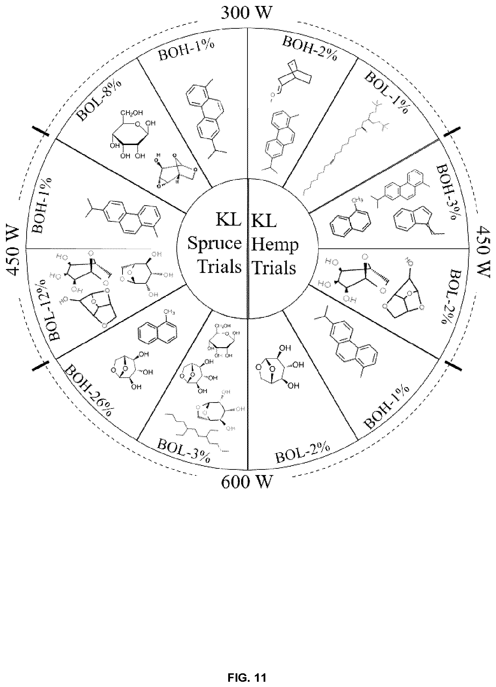

Monosaccharides are simple sugars (smallest carbohydrates) that cannot be reduced to smaller molecules by hydrolysis [8]. In previous studies, application of KL biochar, naphthalene and retene in pyrolysis of KL lead to production of monosaccharides [7,41]. As illustrated in Figure 10, monosaccharides are also formed during pyrolysis of the microwave receptors used. The origin of monosaccharides in the study described in the present disclosure provides evidence that the microwave receptors (spruce and hemp biochar) decomposed further and contributed to the chemical content in the biooil. Figure 11 compares monosaccharides formed at changing experimental conditions and the total yield in the distinct biooil phases.
Light biooil (BOL) produced from KL-spruce biochar trials contained a larger yield of monosaccharides. At 600 W, the monosaccharides formed during KL-spruce trials included d-allose, levoglucosan (1,6 anhydro-a-d-glucopyranose), 2,3-anhydro-d-mannosan, 1 methyl- and 2-methyl naphthalene. For the same power level, the quantity and variety of monosaccharides obtained during KL-hemps trials were considerably lower, including 1,6 anhydro-a-d-glucopyranose and retene.
As seen in Figure 11, at 450 W, the type of microwave receptor used did not significantly affect the type of monosaccharides formed in the light phase (BOL). Naphthalene was only formed in the presence of hemp biochar. Farag et al. [41] used KL biochar as the microwave receptor and obtained similar non-phenolic compounds, including naphthalene and retene. In their study, the amount of retene (1.7- 2.5%) increased as the temperature was increased while the naphthalene (1.8- 3.6%) content was inconsistent. The presence of monosaccharides in the biooil is not expected to hinder the extent of methacrylation, since methacryoyl chloride has successfully been applied in esterification of saccharides to synthesize a cross linking agent [60].

Amides

Amides are carboxylic acid derivatives that contain the -CONH$_2$ functional group [110]. Amides have not been commonly found in KL pyrolytic biooil [7,41]. Similarly in most KL-spruce trials, the synthesized KL biooil did not contain amides, except for microwave pyrolysis completed at 450 W; 1% of N-Acetylprocainamide was obtained in the biooil. KL-hemp trials produced a higher amide content in the biooil. Pyrolysis of KL and hemp biochar at 600 and 450 W produced 10 and 9% of AICAR ($N^1$-($\beta$-D-Ribofuranosyl)-5-aminoimidazole-4-carboxamide), respectively. Conventional pyrolysis of hemp does not produce amides [116]. Consequently, the amides could be a result of internal to external heating that allows production of functional groups which would be otherwise trapped or by chemical interaction between compounds formed from decomposition of KL and secondary decomposition of the hemp biochar. Amides can increase the instability and corrosiveness of the biooil; on a larger scale additional investment in storage facilities could be needed [73].

Ketones

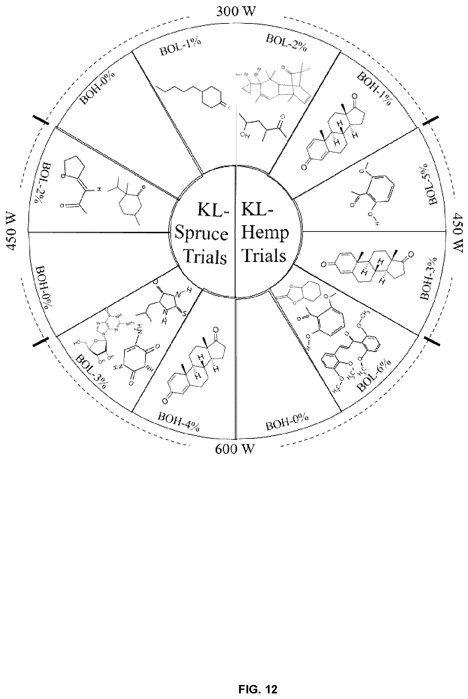

Ketones are chemical compounds that contain a carbonyl group (C=O) attached to two carbon atoms. Ketones have previously been observed in pyrolytic KL biooil, however the compounds formed in the study described in the present disclosure differ from previous studies [7,41]. Figure 12 compares the type of ketones formed at changing experimental conditions and the total yield in the distinct biooil phases.

As illustrated in Figure 12, the biooil from KL-spruce trials, mainly contained ketones in the light phase (BOL), except for the biooil obtained at 600 W. Boldione was a common ketone formed in presence of both spruce and hemp biochar. As the power level decreased from 600 to 450 W, the ketone content in biooil from KL-hemp trials, reduced as well; the ketone yield varied from 1-6%. According to Figure 9, the ketones could have originated from decomposition remaining cellulose and hemicelluloses in spruce and hemp biochar. The presence of ketones is not expected to impact the polymerization process negatively. Ketones have been applied in production of resins as a solvent or toughening agent [46,145].

Esters

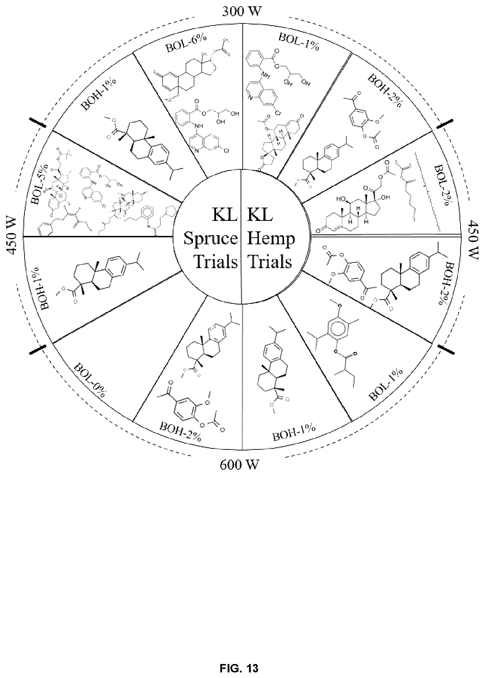

Esters are carboxylic acid derivatives formed when acids react with alcohols [11]. In previous studies, esters have been previously obtained in pyrolytic KL biooil as a low yield non-phenolic compound [41]. Figure 13 compares the type of esters formed at changing experimental conditions and the total yield in the distinct biooil phases.

During the KL-spruce trials, the yield of esters was larger in the BOL compared to the BOH. Additionally, as the power level was increased from 300 to 600 W, the ester in in BOL decreased from 6 to 0%. For both spruce and hemp trials, the ester yield in BOH did not fluctuate significantly; the yield comprised of ~1-2% of the non-phenolic compounds in the biooil. Methyl dehydroabietate was the most common ester formed in the study described in the present disclosure. It was produced at all microwave pyrolysis conditions applied, except for the BOL from the KL-spruce trial completed at 600 W. According to a previous study, pyrolysis of without catalysts did not yield ester in the biooil [18]. Addition of hemp and spruce biochar as microwave receptors increased the selectivity of KL biooil towards esters.

Acids

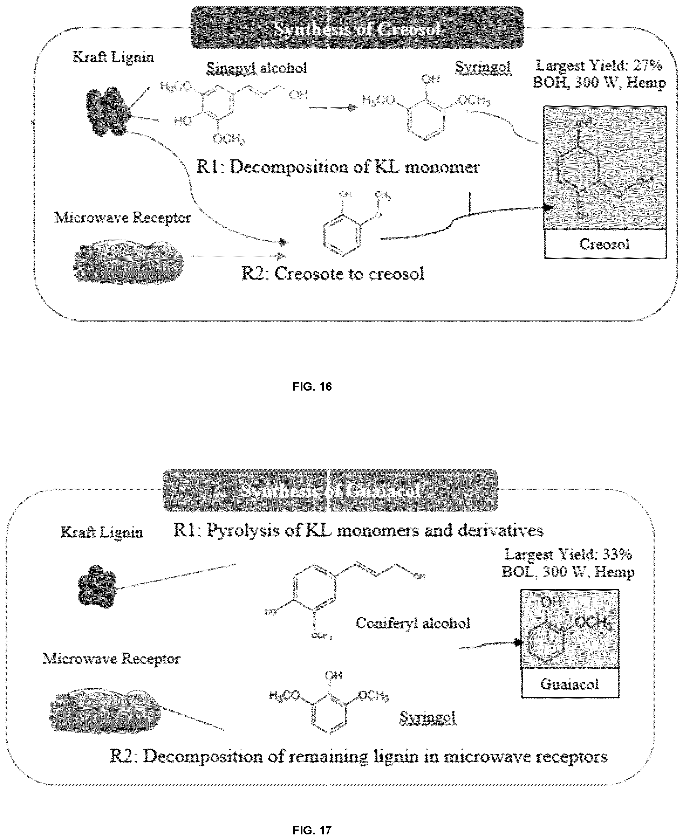

Acids are usually present in relatively low quantities in KL biooil. According to Figure 16, acid is the second most abundant chemical compound formed when lignin is pyrolyzed. In the study described in the present disclosure, acids were formed in the BOL during the KL-spruce trial at 450 W (n-Hexadecanoic acid, L-Glutamine) and the KL-hemp trial performed at 600 W (1-Bromo-3-butene-2-ol); the acid yield was 1-2%. Previous KL microwave pyrolysis studies have shown highest acid yield of 4-5% homovanillic acid at ~880 °C [41,43], formic and acetic acid [7]. The low yield of acids in the KL biooil is not expected to impact the polymerisation process. However, on a larger scale, acid in KL biooil may lead to instability of the biooil and corrosion of equipment [16,76].

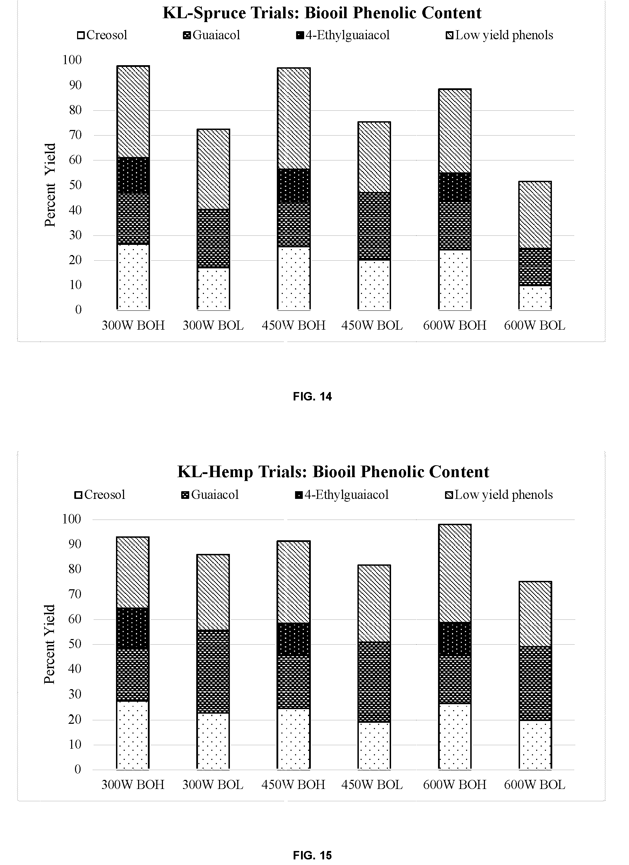

Figures 14 and 15 also include 'others' as a category for chemicals found in the biooil. 'Others' refer to complex chemical compounds, potentially higher molecular weight compounded undetected by the GC-MS test, that were formed mostly in the light phase of the KL biooil. The impact of the unidentified chemical groups could be investigated during the resinification of the KL biooil; this could be done by comparing the chemical and mechanical properties of the resins based on the KL biooil used. The selection of optimal conditions for biooil synthesis should consider the acid and amide contents in the biooil to limit additional pre-treatment of KL biooil before polymerisation and potential equipment costs.

Several studies have been conducted by using an 'ideal' version of Kraft Lignin biooil, whereby a blend of desired and pure phenolic compounds were polymerised to form resins. In the section "Overview of Chemical Composition for KL Biooil" in this specification, varied chemical compounds in the biooil were investigated to understand the potential impact on the polymerisation of crude KL biooil. The next section entitled "Phenolic Content" investigates the impact of experimental conditions on the phenolic yield and compositional distribution in the KL biooil.

PHENOLIC CONTENT

Phenolic hydroxyl groups in Kraft lignin decompose to form monophenols, including phenols, guaiacols, benzenes and catechols in the oil phase [4,40]. Only 10% of the aliphatic hydroxyl groups that was originally present in the KL is usually transferred into the oil phase. In this section, the major phenolic compounds obtained in biooil will be discussed. The impact of microwave receptor type and power level on the selectivity of phenolic compounds have been presented in Figures 14 and 15.

The three primary phenolic compounds that had a yield of at least 10% in the KL biooil, in both phases, included creosol, guaiacol and 4-ethylguaiacol. 'Low yield phenols' represents the sum of approximately 30 distinct phenolic compounds, e.g., catechol, eugenol and vanillin, present on a relatively small scale in the KL biooil; percentages varied from 1-6%. In order to define the optimized conditions for the targeted biooil composition, the impact of microwave receptor type and power level on the phenolic content in KL biooil has been discussed in this section.

Impact of Microwave Receptor Type

As illustrated in Figures 14 and 15, the microwave receptor type impacts the yield of phenolic content in KL biooil. The average phenolic content yield in the BOH phase, for all temperatures applied, from KL-spruce and KL-hemp trials was 94.3% and 94.1% respectively. In the BOL phase, KL-hemp trials were more selective towards phenolic compounds compared to KL-spruce trials. The average phenolic content yields in the BOL phase obtained from the KL-spruce and KL-hemp trials were 65.4 and 81%, respectively. Table 11 compares the high yield phenolic compounds obtained in different studies.

*Table 11: Comparison of the most abundant phenolic compounds obtained in KL biooil*

|  | Current Study (the study described in the present disclosure) (2021) | Farag et al. 2014 [41] | Farag et al. 2016 [43] | Yerrayya et al. 2018 [147] | Wang et al. 2019 [140] | Bartoli et al. 2020 [7] |
|---|---|---|---|---|---|---|
| Microwave Receptor | Spruce/ Hemp biochar | KL biochar | KL biochar | Activated Carbon | Nickel Formate | Pyrolysed Tires/ Wires |
| Most Abundant Phenolic Compounds | Creosol | Creosol | Creosol | Phenol | Guaiacol | Guaiacol |
|  | Guaiacol | Guaiacol | 2,4-Dimethyl phenol | Cresol | 3-Methyl catechol | Syringol |
|  | 4-Ethyl guaiacol | Catechol | p-Methyl phenol | Guaiacol | 4-Methyl catechol | p-Cresol |

From Table 11, it can be observed that application of a lignocellulosic-based microwave receptor yields similar phenolic compounds, e.g., creosol and guaiacol, in larger quantities. If the phenolic selectivity was the only factor to be considered, hemp biochar would be the ideal choice as a microwave receptor in comparison to spruce biochar. The wt.% of BOL is larger in the synthesized biooil samples. KL-hemp trials produced a higher yield of phenolic content in the BOL phase and a slightly lower phenolic content in the BOH phase. However, the remaining non-phenolic compounds and yield optimization should also be considered.

Impact of Power Level

The impact of the power level on the phenolic content yield can be observed by analysis of the BOH phase during KL-spruce trials; when the power level doubled from 300 W to 600 W, the total phenolic content in KL biooil reduced by 10%. This can be related to secondary decomposition of KL as well as breaking down of KL biooil, whereby more compounds were transferred in the gas phase. In contrast to KL-spruce trials, doubling the power level (300 to 600 W) during KL-hemps trials improved the phenolic content in the BOH phase; the total phenolic content improved by 5%. For both KL-spruce and KL-hemp trials, when doubling the power level (300 W to 600 W), the phenolic content in the BOL phase reduced. At 600 W, the BOL phase synthesized during the KL-hemp trial yielded more phenolic compounds compared to the KL-spruce trial. With increasing power levels, it can be observed that the selectivity towards guaiacol and 4-ethylguaiacol decreases.

Pyrolysis of KL and microwave receptors at 450 W yielded a phenolic content and composition which was relatively similar to results obtained at 300 W. When increasing the power level from 300 to 450 W, only a slight change in the heating rate and the final operating temperature is achieved, thus the impact on the phenolic yield and selectivity is not significant. At 450 W, when using spruce as the microwave receptor, the KL biooil is more selective towards creosol and guaiacol by an approximately additional 4% in the BOL phase relative to 300 W, thus leading to a slightly larger phenolic yield at 450 W. In the BOH phase for the KL-spruce trials, while the selectivity towards 4-ethyl guaiacol is reduced at 450 W, a larger number of low yield phenols (<10%) are formed in comparison to 300 W. Consequently, this results in similar phenolic yields in the BOH phase; 97.7% and 96.8% for 300 and 450 W, respectively. Pyrolysis of KL and hemp biochar at 300 W produced the largest yield for creosol, guaiacol and 4-Ethylguaiacol in BOH and BOL phases compared to other power levels. The phenolic composition of biooil from KL-hemp trials at 450 W was similar to 300 W; at 450 W, the creosol content was slightly lower in both phases.

Major Phenolic Compounds

As described in the section, Overview of Chemical Composition for KL Biooil in this specification, over 90% of the synthesized KL biooil is phenolic. From the GC-MS results, found in Tables 12 to Table 18, distinct phenolic compounds formed in the biooil were determined. In this section, the sources and reactions that produce the high yield phenolic compounds in the KL biooil will be discussed.

Table 12 displays an example of the raw data obtained from GC-MS characterization. The GC-MS data was rearranged, in Tables 13 to 18 for ease of analysis.

*Table 12: GC-MS sample raw data: BOH: KL-spruce pyrolyzed at 300 W*

| | RT | Compound Name | Area | total area | compound | % |
|---|---|---|---|---|---|---|
| 1 | 8.469 | Creosol | 20756880 | 78536281.9 | phenolics | 26.42966983 |
| 2 | 6.919 | Phenol, 2-methoxy- | 16069717 | 78536281.9 | phenolics | 20.46151996 |
| 3 | 9.7 | Phenol, 4-ethyl-2-methoxy- | 10991897 | 78536281.9 | phenolics | 13.99594778 |
| 4 | 7.734 | Phenol, 2,5-dimethyl- | 4166547.8 | 78536281.9 | phenolics | 5.30525217 |
| 5 | 10.895 | Phenol, 2-methoxy-4-propyl- | 1902958.8 | 78536281.9 | phenolics | 2.423031437 |
| 6 | 8.264 | 2-Methoxy-6-methylphenol | 1792249.2 | 78536281.9 | phenolics | 2.282065253 |
| 7 | 9.064 | Phenol, 3-ethyl-5-methyl- | 1748528.1 | 78536281.9 | phenolics | 2.226395314 |
| 8 | 8.424 | Catechol | 1538237 | 78536281.9 | phenolics | 1.95863232 |
| 9 | 12.956 | 2-Propanone, 1-(4-hydroxy-3-methoxyphenyl)- | 1366727.1 | 78536281.9 | phenolics | 1.740249305 |
| 10 | 12.421 | Apocynin | 1360479.9 | 78536281.9 | phenolics | 1.732294765 |
| 11 | 11.956 | Phenol, 2-methoxy-4-(1-propenyl)- | 1317209.2 | 78536281.9 | phenolics | 1.677198319 |
| 12 | 9.74 | 1,2-Benzenediol, 4-methyl- | 1280445.6 | 78536281.9 | phenolics | 1.630387343 |
| 13 | 9.349 | 1,2-Benzenediol, 3-methyl- | 1244164.5 | 78536281.9 | phenolics | 1.584190733 |
| 14 | 10.655 | Phenol, 2,6-dimethoxy- | 1133193.9 | 78536281.9 | phenolics | 1.442892218 |
| 15 | 21.129 | Methyl dehydroabietate | 1070978.8 | 78536281.9 | ester | 1.363673928 |
| 16 | 11.015 | 4-Ethylcatechol | 949157.7 | 78536281.9 | phenolics | 1.208559505 |
| 17 | 11.891 | 3,5-Dimethoxy-4-hydroxytoluene | 887547.2 | 78536281.9 | phenolics | 1.13011105 |
| 18 | 11.315 | Vanillin | 884098.4 | 78536281.9 | phenolics | 1.125719704 |
| 19 | 7.159 | Phenol, 2,5-dimethyl- | 792565.4 | 78536281.9 | phenolics | 1.009171024 |

(continued)

| | RT | Compound Name | Area | total area | compound | % |
|---|---|---|---|---|---|---|
| 20 | 7.994 | Phenol, 4-ethyl- | 785815.2 | 78536281.9 | phenolics | 1.000576015 |
| 21 | 8.609 | Phenol, 2,4,6-trimethyl- | 779592.1 | 78536281.9 | phenolics | 0.992652162 |
| 22 | 20.084 | Retene | 746373.7 | 78536281.9 | monosaccharid e | 0.950355278 |
| 23 | 10.81 | Phenol, 4-methoxy-2,3,6-trimethyl- | 724318 | 78536281.9 | phenolics | 0.922271825 |
| 24 | 14.306 | Benzenepropanol, 4-hydroxy-3-methoxy- | 719068.5 | 78536281.9 | phenolics | 0.915587653 |
| 25 | 10.18 | 2-Methoxy-4-vinylphenol | 707334.9 | 78536281.9 | phenolics | 0.900647297 |
| 26 | 9.455 | Phenol, 4-ethyl-2-methoxy- | 606837.1 | 78536281.9 | phenolics | 0.772683765 |
| 27 | 6.618 | Phenol, 3-methyl- | 583981.6 | 78536281.9 | phenolics | 0.743581929 |
| 28 | 10.765 | Eugenol | 562216.4 | 78536281.9 | phenolics | 0.715868369 |
| 29 | 7.954 | Benzaldehyde, 2-hydroxy-4-methyl- | 536677.4 | 78536281.9 | phenolics | 0.68334964 |
| 30 | 8.024 | Phenol, 2,4-dimethyl- | 530484.4 | 78536281.9 | phenolics | 0.675464113 |
| | | | 78536281.9 | | | % |

*Table 13: Biooil composition for KL-spruce pyrolysed at 300 W identified by GC-MS*

| Test 7 - 300 W Spruce, 50 wt.% KL | | | | | |
|---|---|---|---|---|---|
| Compound Type | Compound | Compound % | | Compound Type % | |
| | | Heavy Oil | Light Oil | Heavy Oil | Light Oil |
| Phenolics | Creosol | 26.43 | 16.99 | 98% | 72% |
| | Phenol, 2-methoxy- | 20.46 | 23.32 | | |
| | Phenol, 4-ethyl-2-methoxy- | 14.00 | 3.67 | | |
| | Phenol, 2,5-dimethyl- | 5.31 | 2.36 | | |
| | Phenol, 2-methoxy-4-propyl- | 2.42 | 0.00 | | |
| | 2-Methoxy-6-methylphenol | 2.28 | 0.00 | | |
| | Phenol, 3-ethyl-5-methyl- | 2.23 | 0.00 | | |
| | Catechol | 1.96 | 8.84 | | |
| | 2-Propanone, 1-(4-hydroxy-3-methoxyphenyl)- | 1.74 | 1.71 | | |
| | Apocynin | 1.73 | 0.93 | | |
| | Phenol, 2-methoxy-4-(1-propenyl)- | 1.68 | 0.00 | | |
| | 1,2-Benzenediol, 4-methyl- | 1.63 | 2.85 | | |
| | 1,2-Benzenediol, 3-methyl- | 1.58 | 0.00 | | |
| | Phenol, 2,6-dimethoxy- | 1.44 | 1.23 | | |
| | 4-Ethylcatechol | 1.21 | 0.00 | | |
| | 3,5-Dimethoxy-4-hydroxytoluene | 1.13 | 0.00 | | |
| | Vanillin | 1.13 | 0.00 | | |
| | Phenol, 2,5-dimethyl- | 1.01 | 0.00 | | |
| | Phenol, 4-ethyl- | 1.00 | 0.00 | | |
| | Phenol, 2,4,6-trimethyl- | 0.99 | 0.00 | | |
| | Phenol, 4-methoxy-2,3,6-trimethyl- | 0.92 | 0.00 | | |
| | Benzenepropanol, 4-hydroxy-3-methoxy- | 0.92 | 0.00 | | |
| | 2-Methoxy-4-vinylphenol | 0.90 | 0.00 | | |
| | Phenol, 4-ethyl-2-methoxy- | 0.77 | 0.00 | | |
| | Phenol, 3-methyl- | 0.74 | 0.00 | | |
| | Eugenol | 0.72 | 0.00 | | |
| | Benzaldehyde, 2-hydroxy-4-methyl- | 0.68 | 0.00 | | |
| | Phenol, 2,4-dimethyl- | 0.68 | 0.00 | | |
| | Phenol, TMS derivative | 0.00 | 3.92 | | |
| | 1,2-Benzenediol, 4-methyl- | 0.00 | 2.19 | | |
| | 5-Methoxy-2-[4-(2-methoxyphenyl)-5-methyl-1H-pyrazol-3-yl]phenol | 0.00 | 1.03 | | |
| | 1,2-Benzenediol, o-isobutyryl- | 0.00 | 0.88 | | |
| | 2-Methoxy-5-methylphenol | 0.00 | 0.82 | | |
| | 1,2-Benzenediol, 3-methoxy- | 0.00 | 0.82 | | |
| | Benzaldehyde, 3-hydroxy-4-methoxy- | 0.00 | 0.75 | | |

(continued)

| Test 7 - 300 W Spruce, 50 wt.% KL | | | | | |
|---|---|---|---|---|---|
| **Compound Type** | **Compound** | **Compound %** | | **Compound Type %** | |
| | | **Heavy Oil** | **Light Oil** | **Heavy Oil** | **Light Oil** |
| Others | 1-Decanoyl-2-hydroxy-sn-glycero-3- phosphocholine | 0.00 | 3.44 | 0% | 11% |
| | 1-Decanoyl-2-hydroxy-sn-glycero-3- phosphocholine | 0.00 | 3.18 | | |
| | 1-Decanoyl-2-hydroxy-sn-glycero-3- phosphocholine | 0.00 | 2.77 | | |
| | 1-Decanoyl-2-hydroxy-sn-glycero-3- phosphocholine | 0.00 | 0.81 | | |
| | 1,2-Dioctanoyl PC | 0.00 | 0.70 | | |
| Monosaccharides | Retene | 0.95 | 0.00 | 1% | 8% |
| | D-Allose | 0.00 | 5.88 | | |
| | 3,4-Anhydro-d-galactosan | 0.00 | 0.87 | | |
| | Dodecane, 5,8-diethyl- | 0.00 | 0.82 | | |
| Esters | Methyl dehydroabietate | 1.36 | 0.00 | 1% | 6% |
| | Acetic acid, 5-methoxy-13-methyl-2-oxo-5,6,7,8,9, 11,12,13,14,15,16,17-dodecahydro-2H-cyclopenta [a]phenanthren-17-yl ester | 0.00 | 4.09 | | |
| | Glafenin | 0.00 | 1.94 | | |
| Ketones | 4-Pentylcyclohexanone | 0.00 | 1.10 | 0% | 1% |
| Ethers | Benzene, 1-ethyl-4-methoxy- | 0.00 | 0.66 | 0% | 1% |
| Amines | Dibenzyl ketoxime | 0.00 | 0.74 | 0% | 1 % |

*Table 14: Biooil composition for KL-spruce pyrolysed at 450 W identified by GC-MS*

| Test 4- 450 W Spruce, 50 wt.% KL | | | | | |
|---|---|---|---|---|---|
| | | Compound | % | Compound Type % | |
| Compound Type | Compound | Heavy Oil | Light Oil | Heavy Oil | Light Oil |
| Phenolics | Creosol | 25.39 | 20.16 | 97% | 75% |
| | Phenol, 2-methoxy- (vannilin alcohol) | 17.91 | 26.86 | | |
| | Phenol, 4-ethyl-2-methoxy- (4-ethylguaiacol) | 12.94 | 4.39 | | |
| | Phenol, 2,5-dimethyl- | 6.19 | 0.00 | | |
| | Catechol | 3.40 | 6.79 | | |
| | 1,2-Benzenediol, 4-methyl- | 2.68 | 2.69 | | |
| | Phenol, 4-methoxy-3-methyl- | 2.16 | 0.00 | | |
| | Phenol, 2-ethyl-5-methyl- | 2.07 | 0.00 | | |
| | Phenol, 2-methoxy-4-(1-propenyl)- | 2.03 | 0.00 | | |
| | Phenol, 2-methoxy-4-propyl- | 2.02 | 0.89 | | |
| | 1,2-Benzenediol, 3-methyl- | 1.90 | 0.00 | | |
| | 2-Propanone, 1-(4-hydroxy-3-methoxyphenyl)- | 1.85 | 2.09 | | |
| | Apocynin | 1.78 | 1.73 | | |
| | Phenol, 2,6-dimethoxy- | 1.50 | 1.19 | | |
| | 4-Ethylcatechol | 1.50 | 0.00 | | |
| | Vanillin | 1.32 | 0.00 | | |
| | Phenol, 2,6-dimethyl- | 1.24 | 0.00 | | |
| | Benzenepropanol, 4-hydroxy-3-methoxy- | 1.23 | 0.66 | | |
| | Phenol, 2,4,5-trimethyl- | 1.18 | 0.00 | | |
| | 3,5-Dimethoxy-4-hydroxytoluene | 1.16 | 0.00 | | |
| | Phenol, 4-ethyl- | 1.12 | 0.00 | | |
| | 2-Methoxy-4-vinylphenol | 1.10 | 0.00 | | |
| | Phenol, 4-methoxy-2,3,6-trimethyl- | 0.90 | 0.00 | | |
| | Eugenol | 0.89 | 0.00 | | |
| | Phenol, 4-ethyl-2-methoxy- | 0.78 | 0.00 | | |
| | Phenol, 2-methoxy-4-(1-propenyl)- | 0.62 | 0.00 | | |
| | Phenol, 2,3-dimethyl- | 0.00 | 3.35 | | |
| | Phenol, TMS derivative | 0.00 | 1.81 | | |
| | 1,2-Benzenediol, 4-methyl- | 0.00 | 1.67 | | |
| | 2-Methoxy-5-methylphenol | 0.00 | 0.92 | | |
| Esters | Methyl dehydroabietate | 0.69 | 0.00 | 1% | 5% |
| | Ethyl iso-allocholate | 0.00 | 2.35 | | |
| | 3-(Benzylthio)acrylic acid, methyl ester | 0.00 | 0.73 | | |
| | 3-Cyclopentylpropionic acid, 2-isopropoxyphenyl ester | 0.00 | 0.73 | | |
| | Glafenin | 0.00 | 0.71 | | |
| | Clocortolone pivalate | 0.00 | 0.68 | | |
| Monosaccharides | Retene | 0.82 | 0.00 | 1% | 12% |
| | 1,6-Anhydro-á-d-talopyranose | 0.00 | 9.73 | | |
| | 1,4:3,6-Dianhydro-à-d-glucopyranose | 0.00 | 1.36 | | |
| | 2,3-Anhydro-d-mannosan | 0.00 | 0.76 | | |
| Acids | n-Hexadecanoic acid | 0.00 | 0.89 | 0% | 2% |
| | L-Glutamine | 0.00 | 0.85 | | |

(continued)

| Test 4- 450 W Spruce, 50 wt.% KL | | | | | |
|---|---|---|---|---|---|
| | | Compound | % | Compound Type % | |
| Compound Type | Compound | Heavy Oil | Light Oil | Heavy Oil | Light Oil |
| N-containing Heterocycles | Ajmaline<br>2-Methyl-9-á-d-ribofuranosylhypoxanthine | 0.00<br>0.00 | 0.74<br>0.63 | 0% | 1% |
| Ethers | Oxepine, 2,7-dimethyl-<br>Benzene, 1-ethoxy-3-methoxy- | 1.01<br>0.61 | 0.00<br>0.00 | 0% | 0% |
| Ketones | Cyclohexanone, 2-isopropyl-2,5-dimethyl-<br>2-(Acetylmethylene)tetrahydrofuran | 0.00<br>0.00 | 1.43<br>0.61 | 0% | 2% |
| Halogen-Containing Compounds | Tetrapentacontane, 1,54-dibromo- | 0.00 | 1.99 | 0% | 2% |
| Amides | N-Acetylprocainamide | 0.00 | 0.61 | 0% | 1 % |

*Table 15: Biooil composition for KL-spruce pyrolysed at 600 W identified by GC-MS*

| Compound Type | Compound | Compound % | | Compound Type % | |
|---|---|---|---|---|---|
| | | Heavy Oil | Light Oil | Heavy Oil | Light Oil |
| Phenolics | Creosol | 24.16 | 9.89 | 88% | 52% |
| | Phenol, 2-methoxy- (vannillin alcohol) | 19.40 | 14.75 | | |
| | Phenol, 4-ethyl-2-methoxy- (4-ethylguaiacol) | 11.17 | 1.54 | | |
| | Phenol, 2,4-dimethyl- (2,4-xylenol) | 5.91 | 0.00 | | |
| | trans-Isoeugenol | 2.89 | 0.00 | | |
| | Apocynin | 2.01 | 2.34 | | |
| | Phenol, 2-ethyl-5-methyl- | 1.90 | 0.00 | | |
| | 2-Methoxy-5-methylphenol | 1.89 | 0.00 | | |
| | 2-Propanone, 1-(4-hydroxy-3-methoxyphenyl)- | 1.88 | 1.72 | | |
| | Phenol, 2-methoxy-4-propyl- | 1.66 | 0.96 | | |
| | Eugenol | 1.63 | 0.00 | | |
| | Phenol, 2,6-dimethyl- | 1.59 | 0.00 | | |
| | 2-Methoxy-4-vinylphenol | 1.50 | 0.00 | | |
| | Vanillin | 1.43 | 1.03 | | |
| | Benzenepropanol, 4-hydroxy-3-methoxy- | 1.35 | 1.02 | | |
| | Phenol, 4-ethyl- | 1.31 | 0.00 | | |
| | Phenol, 3-methyl- | 1.30 | 0.00 | | |
| | 1,2-Benzenediol, 4-methyl- | 1.26 | 0.00 | | |
| | Phenol, 2-methoxy-4-(1-propenyl)- | 1.14 | 0.00 | | |
| | 1,2-Benzenediol, 4-methyl- | 1.10 | 1.86 | | |
| | Phenol, 4-ethyl-2-methoxy- | 0.98 | 0.00 | | |
| | 3'-Hydroxy-5,6,7,4'-tetramethoxyflavone | 0.96 | 0.00 | | |
| | Catechol | 0.00 | 5.81 | | |
| | á-D-Glucopyranose, 1,6-anhydro- | 0.00 | 3.62 | | |
| | Phenol, TMS derivative | 0.00 | 2.58 | | |
| | Phenol, 2,3-dimethyl- | 0.00 | 1.59 | | |
| | 1,2-Benzenediol, 3-methyl- | 0.00 | 1.30 | | |
| | Hydroquinone | 0.00 | 0.82 | | |
| | Phenol, 2,6-dimethoxy- | 0.00 | 0.69 | | |
| Monosaccharides | Naphthalene, 1-methyl- | 1.12 | 0.00 | 3% | 26% |
| | á-D-Glucopyranose, 1,6-anhydro- (Levoglucosan) | 1.10 | 0.85 | | |
| | Naphthalene, 2-methyl- | 0.97 | 0.00 | | |
| | D-Allose | 0.00 | 22.42 | | |
| | D-Allose | 0.00 | 0.91 | | |
| | 2,3-Anhydro-d-mannosan | 0.00 | 1.34 | | |
| Others | 1-Decanoyl-2-hydroxy-sn-glycero-3- phosphocholine | 0.00 | 5.10 | 0% | 17% |
| | Azelaoyl PAF | 0.00 | 4.99 | | |
| | 1-Decanoyl-2-hydroxy-sn-glycero-3- phosphocholine | 0.00 | 4.18 | | |
| | 1,2-Didecanoyl PC | 0.00 | 0.86 | | |
| | 1-O-Hexadecyl-2-O-(2E-butenoyl)-sn-glyceryl-3-phosphocholine | 0.00 | 1.41 | | |

Test 16- 600 W Spruce, 50 wt.% KL

(continued)

| Test 16- 600 W Spruce, 50 wt.% KL | | | | | |
| --- | --- | --- | --- | --- | --- |
| **Compound Type** | **Compound** | **Compound %** | | **Compound Type %** | |
| | | **Heavy Oil** | **Light Oil** | **Heavy Oil** | **Light Oil** |
| Ketones | Boldione | 3.99 | 0.00 | 4% | 3% |
| | 5-Aminouracil | 0.00 | 1.27 | | |
| | 4-Imidazolidinone, 5-(2-methylpropyl)-2-thioxo- | 0.00 | 1.01 | | |
| | Guanosine | 0.00 | 0.69 | | |
| Esters | Methyl dehydroabietate | 0.96 | 0.00 | 2% | 0% |
| | 4-Acetoxy-3-methoxyacetophenone | 0.90 | 0.00 | | |
| Alcohols | 1-Pentanol | 1.32 | 0.00 | 1% | 2% |
| | 2-Hexadecanol | 0.00 | 1.58 | | |
| Aldehydes | 5-Hydroxymethylfurfural | 1.22 | 1.86 | 1 % | 2% |

*Table 16: Biooil composition for KL-hemp pyrolysed at 300 W identified by GC-MS*

| Test 16- 300 W Hemp, 50 wt.% KL | | | | | |
|---|---|---|---|---|---|
| **Compound Type** | **Compound** | **Compound wt. %** | | **Compound Type wt. %** | |
| | | **Heavy Oil** | **Light Oil** | **Heavy Oil** | **Light Oil** |
| Phenolics | Creosol | 27.43 | 22.59 | 93% | 86% |
| | Phenol, 2-methoxy- | 21.15 | 32.95 | | |
| | Phenol, 4-ethyl-2-methoxy- | 15.73 | 4.77 | | |
| | Phenol, 2,4-dimethyl- | 4.98 | 0.00 | | |
| | Phenol, 2-methoxy-4-propyl- | 2.52 | 0.00 | | |
| | 2-Methoxy-6-methylphenol | 2.50 | 0.00 | | |
| | Apocynin | 1.71 | 1.55 | | |
| | 2-Propanone, 1-(4-hydroxy-3-methoxyphenyl)- | 1.54 | 1.59 | | |
| | Phenol, 2-methoxy-4-(1-propenyl)- | 1.50 | 0.00 | | |
| | Phenol, 2,6-dimethoxy- | 1.38 | 1.53 | | |
| | Vanillin | 1.28 | 0.00 | | |
| | 3,5-Dimethoxy-4-hydroxytoluene | 1.13 | 0.00 | | |
| | 1,2-Benzenediol, 3-methyl- | 1.12 | 1.85 | | |
| | 1,2-Benzenediol, 4-methyl- | 1.11 | 2.15 | | |
| | Phenol, 4-ethyl- | 1.07 | 0.00 | | |
| | Phenol, 2,6-dimethyl- | 0.90 | 0.00 | | |
| | Eugenol | 0.88 | 0.00 | | |
| | 4-Ethylcatechol | 0.81 | 0.00 | | |
| | Phenol, 2,4,6-trimethyl- | 0.79 | 0.00 | | |
| | Benzenepropanol, 4-hydroxy-3-methoxy- | 0.77 | 0.58 | | |
| | Phenol, 4-ethyl-2-methoxy- | 0.71 | 0.00 | | |
| | Phenol, 3-methyl- | 0.68 | 0.00 | | |
| | p-Cymene-2,5-diol | 0.65 | 0.00 | | |
| | Benzene, 4-ethyl-1,2-dimethoxy- | 0.59 | 0.00 | | |
| | Catechol | 0.00 | 4.37 | | |
| | Phenol, TMS derivative | 0.00 | 3.44 | | |
| | Phenol, 2,5-dimethyl- | 0.00 | 2.59 | | |
| | p-Cresol | 0.00 | 2.15 | | |
| | 2-Methoxy-5-methylphenol | 0.00 | 1.19 | | |
| | Benzaldehyde, 3-hydroxy-4-methoxy- | 0.00 | 1.09 | | |
| | Normorphine | 0.00 | 0.91 | | |
| | m-Guaiacol | 0.00 | 0.57 | | |
| Others | 1,2-Didecanoyl PC | 0.00 | 2.39 | 0% | 7% |
| | 1-Decanoyl-2-hydroxy-sn-glycero-3- phosphocholine | 0.00 | 1.94 | | |
| | 1-Decanoyl-2-hydroxy-sn-glycero-3- phosphocholine | 0.00 | 1.60 | | |
| | 1,2-Dioctanoyl PC | 0.00 | 0.95 | | |
| Esters | Methyl dehydroabietate | 1.28 | 0.00 | 2% | 1% |
| | 4-Acetoxy-3-methoxyacetophenone | 1.00 | 0.00 | | |
| | Spironolactone | 0.00 | 0.66 | | |
| | Glafenin | 0.00 | 0.59 | | |

(continued)

| Test 16- 300 W Hemp, 50 wt.% KL | | | | | |
|---|---|---|---|---|---|
| **Compound Type** | **Compound** | **Compound wt. %** | | **Compound Type wt. %** | |
| | | **Heavy Oil** | **Light Oil** | **Heavy Oil** | **Light Oil** |
| Ketones | Boldione 4-Hydroxy-4-(1-methoxycyclopropyl)-3,3,5,8,10, 10-hexamethyltricyclo[6.2.2.0(2,7)]dodeca-5,11-dien-9-one 3-Hexanone, 5-hydroxy-2-methyl- | 1.29 0.00 0.00 | 0.00 1.32 0.62 | 1% | 2% |
| Monosaccharides | Bicyclo[2.2.2]oct-5-ene, 2-methoxymethylene- Retene 9-Octadecene, 1-[2-(octadecyloxy)ethoxy]- | 0.79 0.77 0.00 | 0.00 0.00 1.04 | 2% | 1% |
| Ethers | Benzene, 1-methoxy-2-(methoxymethyl)- | 1.93 | 0.71 | 2% | 1% |
| Alcohols | 2-Bromo-1-cyclopropylethanol | 0.00 | 1.02 | 0% | 1% |
| Amides | 2-Methyl-9-á-d-ribofuranosylhypoxanthine | 0.00 | 0.73 | 0% | 1% |
| Amines | m-Phenylenediamine, TMS derivative | 0.00 | 0.58 | 0% | 1 % |

*Table 17: Biooil composition for KL-hemp pyrolysed at 450 W identified by GC-MS*

| Compound Type | Compound | Compound wt. % | | Compound Type wt. % | |
|---|---|---|---|---|---|
| | | Heavy Oil | Light Oil | Heavy Oil | Light Oil |
| **Test 13- 450 W Hemp, 50 wt.% KL** | | | | | |
| Phenolics | Creosol | 24.39 | 19.09 | 91% | 82% |
| | Phenol, 2-methoxy- | 21.06 | 31.60 | | |
| | Phenol, 4-ethyl-2-methoxy- | 12.81 | 2.48 | | |
| | Phenol, 2,4-dimethyl- | 5.38 | 0.00 | | |
| | 2-Methoxy-5-methylphenol | 2.32 | 0.88 | | |
| | Phenol, 2-methoxy-4-(1-propenyl)- | 1.92 | 0.00 | | |
| | Phenol, 3-methyl- | 1.91 | 0.00 | | |
| | Benzene, 1-methoxy-2-(methoxymethyl)- | 1.88 | 0.00 | | |
| | Phenol, 2-methoxy-4-propyl- | 1.86 | 0.00 | | |
| | Phenol, 2,6-dimethoxy- | 1.75 | 2.23 | | |
| | Apocynin | 1.74 | 1.71 | | |
| | 2-Methoxy-4-vinylphenol | 1.64 | 0.00 | | |
| | 1,2-Benzenediol, 4-methyl- | 1.56 | 3.82 | | |
| | Phenol, 4-ethyl- | 1.54 | 0.00 | | |
| | 2-Propanone, 1-(4-hydroxy-3-methoxyphenyl)- | 1.48 | 1.95 | | |
| | 3,5-Dimethoxy-4-hydroxytoluene | 1.36 | 0.59 | | |
| | Phenol, 2,6-dimethyl- | 1.26 | 0.00 | | |
| | 1,2-Benzenediol, 3-methyl- | 1.10 | 2.53 | | |
| | Vanillin | 0.99 | 0.00 | | |
| | Phenol, 2,4,6-trimethyl- | 0.88 | 0.00 | | |
| | Benzenepropanol, 4-hydroxy-3-methoxy- | 0.84 | 0.68 | | |
| | 4-Ethylcatechol | 0.83 | 0.00 | | |
| | Eugenol | 0.80 | 0.00 | | |
| | Creosol | 0.00 | 0.62 | | |
| | 1,2-Benzenediol,4-(2-aminopropyl)- | 0.00 | 2.98 | | |
| | Phenol, 2,3-dimethyl- | 0.00 | 2.57 | | |
| | Normorphine | 0.00 | 1.40 | | |
| | 1,2-Benzenediol, 3-methoxy- | 0.00 | 1.19 | | |
| | Normorphine | 0.00 | 1.12 | | |
| | m-Guaiacol | 0.00 | 1.06 | | |
| | Benzaldehyde, 3-hydroxy-4-methoxy- | 0.00 | 0.99 | | |
| | Ethanone, 1-(2-hydroxy-5-methylphenyl)- | 0.00 | 0.95 | | |
| | Phenol, 2,4,5-trimethyl- | 0.00 | 0.58 | | |
| | 5-Methoxy-2-[4-(2-methoxyphenyl)-5-methyl-1H- pyrazol-3-yl]phenol | 0.00 | 0.57 | | |
| Monosaccharides | Retene | 0.95 | 0.00 | 3% | 2% |
| | Naphthalene, 2-methyl- | 0.86 | 0.00 | | |
| | 1H-Indene, 1-ethylidene- | 0.84 | 0.00 | | |
| | 1,6-Anhydro-á-d-talopyranose | 0.00 | 1.28 | | |
| | 1,4:3,6-Dianhydro-à-d-glucopyranose | 0.00 | 0.62 | | |

(continued)

| Test 13- 450 W Hemp, 50 wt.% KL | | | | | |
|---|---|---|---|---|---|
| Compound Type | Compound | Compound wt. % | | Compound Type wt. % | |
| | | Heavy Oil | Light Oil | Heavy Oil | Light Oil |
| Esters | Methyl dehydroabietate | 1.31 | 0.00 | 2% | 2% |
| | 4-Acetoxy-3-methoxyacetophenone | 0.87 | 0.00 | | |
| | Stearic acid, 3-(octadecyloxy)propyl ester | 0.00 | 1.01 | | |
| | Hydrocortisone Acetate | 0.00 | 0.77 | | |
| | Hexanoic acid, 2-isopropoxyphenyl ester | 0.00 | 0.54 | | |
| Ketones | Boldione | 2.59 | 0.00 | 3% | 5% |
| | Ethanone, 1-(2-hydroxy-6-methoxyphenyl)- | 0.00 | 4.99 | | |
| Ethers | (3-Methoxyphenyl) methanol, 3-methylbutyl ether | 0.00 | 0.60 | 1% | 1 % |
| | Oxepine, 2,7-dimethyl- | 1.27 | 0.00 | | |

*Table 18: Biooil composition for KL-hemp pyrolysed at 600 W identified by GC-MS*

| Test 10- 600 W Hemp, 50 wt.% KL | | | | | |
|---|---|---|---|---|---|
| Compound Type | Compound | Compound wt. % | | Compound Type wt. % | |
| | | Heavy Oil | Light Oil | Heavy Oil | Light Oil |
| Phenolics | Creosol | 26.34 | 19.74 | 98% | 75% |
| | Phenol, 2-methoxy- | 19.35 | 29.24 | | |
| | Phenol, 4-ethyl-2-methoxy- | 12.87 | 2.55 | | |
| | Phenol, 2,4-dimethyl- | 5.20 | 0.00 | | |
| | 2-Methoxy-5-methylphenol | 2.32 | 0.00 | | |
| | Phenol, 2-methoxy-4-(1-propenyl)- | 2.08 | 0.00 | | |
| | Catechol | 1.98 | 0.00 | | |
| | 1,2-Benzenediol, 4-methyl- | 1.97 | 4.35 | | |
| | 2-Propanone, 1-(4-hydroxy-3-methoxyphenyl)- | 1.92 | 1.92 | | |
| | Phenol, 2-methoxy-4-propyl- | 1.87 | 0.99 | | |
| | Apocynin | 1.85 | 1.59 | | |
| | Phenol, 3-ethyl-5-methyl- | 1.79 | 0.00 | | |
| | p-Cresol | 1.77 | 0.00 | | |
| | 2-Methoxy-4-vinylphenol | 1.65 | 0.00 | | |
| | Phenol, 2,6-dimethoxy- | 1.55 | 1.49 | | |
| | 1,2-Benzenediol, 3-methyl- | 1.39 | 2.43 | | |
| | Vanillin | 1.30 | 1.08 | | |
| | 3,5-Dimethoxy-4-hydroxytoluene | 1.24 | 0.00 | | |
| | Benzenepropanol, 4-hydroxy-3-methoxy- | 1.17 | 0.75 | | |
| | 4-Ethylcatechol | 1.17 | 0.57 | | |
| | Phenol, 4-ethyl- | 1.06 | 0.00 | | |
| | Phenol, 2,6-dimethyl- | 1.04 | 0.00 | | |
| | Eugenol | 0.95 | 0.00 | | |
| | Ethanone, 1-(3-hydroxy-4-methoxyphenyl)- | 0.92 | 0.00 | | |
| | Phenol, 2,5-dimethyl- | 0.89 | 0.00 | | |
| | Phenol, 2,4,6-trimethyl- | 0.87 | 0.00 | | |
| | Phenol, 4-ethyl-2-methoxy- | 0.71 | 0.00 | | |
| | 1-(2-Hydroxy-4-methoxyphenyl)propan-1-one | 0.69 | 0.00 | | |
| | Phenol, 3,4-dimethyl- | 0.00 | 2.15 | | |
| | Phenol, 3-methyl- | 0.00 | 1.71 | | |
| | 1,2-Benzenediol,4-(2-aminopropyl)- | 0.00 | 1.39 | | |
| | Normorphine | 0.00 | 0.82 | | |
| | 1,2-Benzenediol, o-isobutyryl- | 0.00 | 0.78 | | |
| | Phenol, 4-methoxy-3-methyl- | 0.00 | 0.77 | | |
| | 1,2-Benzenediol, 3-methoxy- | 0.00 | 0.76 | | |
| Ketones | Ethanone, 1-[4-(methylthio)phenyl]- | 0.00 | 3.96 | 0% | 6% |
| | 1,3-Benzodioxol-2-one | 0.00 | 1.43 | | |
| | 2',2,3,6'-Tetramethoxychalcone | 0.00 | 1.01 | | |

(continued)

| Test 10- 600 W Hemp, 50 wt.% KL | | | | | |
|---|---|---|---|---|---|
| **Compound Type** | **Compound** | **Compound wt. %** | | **Compound Type wt. %** | |
| | | **Heavy Oil** | **Light Oil** | **Heavy Oil** | **Light Oil** |
| Ethers | 4-Hydroxy-3-methoxybenzyl alcohol, di(isopropyl) ether | 0.00 | 1.38 | 0% | 2% |
| | 1,3-Diethoxy-2-methylenepropane | 0.00 | 0.89 | | |
| Esters | Methyl dehydroabietate | 1.22 | 0.00 | 1% | 1% |
| | 6-Methoxythymyl isobutyrate | 0.00 | 0.94 | | |
| Monosaccharaides | Retene | 0.85 | 0.00 | 1% | 2% |
| | á-D-Glucopyranose, 1,6-anhydro- | 0.00 | 2.03 | | |
| Others | 1-Decanoyl-2-hydroxy-sn-glycero-3- phosphocholine | 0.00 | 0.94 | 0% | 1% |
| | 1-Decanoyl-2-hydroxy-sn-glycero-3- phosphocholine | 0.00 | 0.55 | | |
| Amides | AICAR | 0.00 | 10.97 | 0% | 11% |
| Amines | Cycloundecanone, oxime | 0.00 | 0.83 | 0% | 1% |

Creosol

Creosol, also known as 4-methyl-guaiacol, was present in the highest concentration in the heavy phase of the biooil, indifferent of the biochar type and power level. Pyrolytic KL biooil usually consists of phenols, guaiacols and syringols as the primary chemical content. In the study described in the present disclosure, the significant presence of creosol can be related to further decomposition of the pre-processed lignocellulosic material used as microwave receptors (pyrolysis of biochar produces tar that can be further broken down) [82]. Creosol was also obtained as the most abundant chemical in KL biooil synthesized by Farag et al. [41], where the microwave receptor applied was KL biochar. Figure 16 shows the proposed depolymerization process overview for production creosol in the study described in the present disclosure.

During pyrolysis, sinapyl alcohol, one of the three major phenylpropane monomers in KL, breaks down to form syringols which can further decompose into creosol [67]. It was observed that during pyrolysis of Kraft lignin and the microwave receptor, the KL biochar formed acts as a 'binder' for the feedstock. The reaction R2, proposed in Figure 16, considers the synthesis of creosote (aromatic tar) from pyrolysis of KL and the secondary decomposition of microwave receptors. A large creosol content in the biooil is expected to be favourable for the production of a thermoplastic polymer, since chemically modified creosol has been successfully applied as a building block for synthesis of a sustainable resin with tunable properties, including melting point and toughness [84].

Guaiacol

Guaiacol or 2-methoxy-phenol was present in the highest concentration in the BOL phase and displayed the second highest yield in the BOH phase. Guaiacols are produced during primary decomposition of the KL, when the operating temperature reaches approximately 350-400 °C [65]. Microwave pyrolysis of KL was selective towards the BOL phase during the primary stage, thus explaining the large yield of guaiacol in BOL. Figure 17 shows the proposed depolymerisation process overview for production guaiacol in the study described in the present disclosure.

According to R1, coniferyl alcohol, the base monolignol of the guaiacyl hydroxyphenyl unit in KL breaks down during primary decomposition to form guaiacol. Additionally, some syringol can undergo demethylation to form guaiacols. It is also proposed that the remaining lignin chains in the microwave receptor breakdown during pyrolysis and contribute to the guaiacol content in the oil. The guaiacol concentration in the biooil is larger during KL-hemp trials, compared to KL-spruce trials. This was attributed to decomposition at a higher extent of spruce compared to hemp, during synthesis of the microwave receptor (i.e., in-house pyrolysis of spruce and hemp to produce biochar). Microwave pyrolysis of spruce and hemp at 2700 W reaches an operating temperature of ~ 600-700 °C and 500-600 °C, respectively. Kaal et al. studied the molecular changes in wood and grass biochar to establish three classes of chars, i.e. unaffected biomass, "transition char" and amorphous char, followed by graphite-like structures [61]. Consequently, it is suggested, the spruce biochar partially transitioned into graphite-like structures while hemp was still in the amorphous char phase where small aromatic elements are still present, thus can further decompose and interact with other compounds. Guaiacol-based monomers, benzoaxine, were used to synthesize alternative sustainable copolymers to bisphenol resins [138]. Additionally, guaiacol has been used in phenolic blends, to produce reactive diluents and resins to be applied in composite applications [126].

4-Ethylguaiacol

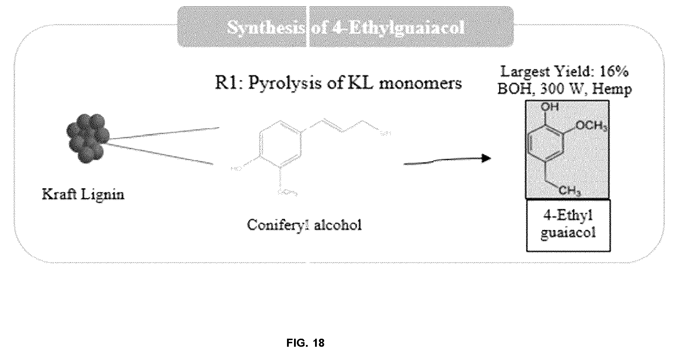

The yield of 4-Ethylguaiacol was lower in comparison to creosol and guaiacol, however it was still higher than 10% in KL biooil. As shown in Figures 14 and 15, 4-ethylguaiacol was formed only in the biooil heavy phase. The high concentration of 4- Ethylguaiacol in the BOH phase suggests that it was produced beyond 400-450 °C during pyrolysis. According to Lu et al., 4-ethylguaiacol is produced by simultaneous decomposition and hydrogenation of lignin [75]. Figure 18 shows the proposed depolymerization process overview for production of 4-ethylguaiacol in the study described in the present disclosure.

Similar to guaiacol, 4-ethylguaiacol is mainly formed by the breakdown of the guaiacyl hydroxyphenyl group (derived from coniferyl alcohol). The largest yield of 4-ethylguaiacol was obtained in presence of hemp as the microwave receptor and applied power level of 300 W. 4-ethylguaiacol is widely applied as chemical intermediates in synthesis of resins and polymers [146], thus presence of 4-ethylguaiacol in KL biooil is expected to be favorable for polymerization into a thermoplastic resin.

The most abundant phenolic compounds make up to 50-60% of the in the heavy phase and 40-50% in the light phase. The remaining compounds that are part of the phenolic content, include mono and polyphenols and the detailed compositional breakdown of the KL biooil samples can be viewed in Tables 13 to 18. Polymerisation of crude KL biooil synthesized by microwave pyrolysis, has yet to be applied in the synthesis of a thermoplastic resin. By understanding the reaction mechanisms that produce the high yield phenolic compounds in KL biooil, microwave pyrolysis conditions can be tuned to target the production or elimination of specific phenolic monomers.

Optimized Conditions for Phenolic Content

The optimized microwave pyrolysis conditions to achieve a highly phenolic KL biooil have been described in Table 19. These conditions were proposed by taking into consideration the analysis completed in sections "Biooil Yield", "Overview of Chemical Composition for KL Biooil" and "Phenolic Content" of this specification. By assuming that the volume percentages across the biooil samples are divided such as BOL is 60 wt. % and BOH is 40 wt. %, the overall phenolic content was calculated by equation 5.

*Equation 5*

$$P_{total} = P_{BOL} \times 60 \text{ wt. \%} + P_{BOH} \times 40 \text{ wt. \%}$$

where,

$P_{total}$ - relative total phenolic content by weight in one biooil sample
$P_{BOL}$ - relative percentage of phenolic content in KL biooil light phase (BOL) as determined by the GC-MS analysis
$P_{BOH}$ - relative percentage of phenolic content in biooil KL light phase (BOH) as determined by the GC-MS analysis

*Table 19: Optimized conditions for phenolic content in KL biooil*

| Test | Microwave Receptor Type | Power Level (W) | Biooil Phase | $P_{BOL}$, $P_{BOH}$ (%) | $P_{total}$ (wt. %) | Acid Content (%) | Amide Content (%) |
|---|---|---|---|---|---|---|---|
| 4 | Spruce | 450 | BOH | 96.9 | 83.9 | - | - |
| | | | BOL | 75.2 | | 1.74 | 0.61 |
| 7 | Spruce | 300 | BOH | 97.8 | 82.9 | - | - |
| | | | BOL | 73.0 | | - | - |
| 13 | Hemp | 450 | BOH | 91.3 | 85.5 | - | - |
| | | | BOL | 81.6 | | - | 8.6 |

(continued)

| Test | Microwave Receptor Type | Power Level (W) | Biooil Phase | $P_{BOL}$, $P_{BOH}$ (%) | $P_{total}$ (wt. %) | Acid Content (%) | Amide Content (%) |
|---|---|---|---|---|---|---|---|
| 16 | Hemp | 300 | BOH | 92.9 | 89.1 | - | - |
| | | | BOL | 86.6 | | 0.73 | - |

The application of hemp biochar as a microwave receptor produced the highest relative total phenolic content in KL biooil. KL-spruce trials output the highest phenolic in BOH, however BOH made up the smaller portion (~40 wt. %) of the total biooil sample. Spruce is still proposed as a suitable microwave receptor type since when applied during microwave pyrolysis of KL at 450 W, the amide content in the synthesized-biooil is lower compared to KL-hemp based biooil; at 300 W KL-spruce based biooil does not contain acid or amide. The highest yield of non-phenolic content was observed when KL was pyrolyzed at 600 W, thus 300 W and 450 W were recommended as a suitable operating power levels. Additionally, the relative total phenolic contents recorded at 300 W and 450 W only differed by 1-4%.

Overall Optimized Microwave Pyrolysis Conditions for KL Biooil

The overall optimized microwave pyrolysis conditions for synthesis of a highly phenolic KL biooil have been developed in response to the objective of proposing the operating conditions that effectively merge the benefits of obtaining a high KL biooil yield and improving the selectivity towards phenolic compounds.

The direct impact of the main effects, i.e. wt. % of microwave receptor, microwave receptor type and power level, and their interactions on the KL biooil yield were investigated in section "Biooil Yield" in this specification. In section "Biooil Composition" of this specification, the results from the GC-MS analysis was applied in compositional analysis of the synthesized KL biooil and the impacts of the main effects on the phenolic selectivity of KL biooil were also investigated. In addition to the main effects, other factors taken into consideration when evaluating the pyrolysis conditions included cost considerations, e.g. "Is the % rise in yield justifiable for increasing the power level applied?", non-phenolic content in the biooil, the need for upgrading treatments post pyrolysis and potential storage issues.

The overall optimized conditions were proposed in Table 20 findings from the section entitled "Optimizing Conditions for KL Biooil Yields" by combining the KL biooil yield and a suitable composition for application as biobased phenolic monomers in polymerization.

*Table 20: Overall optimized microwave pyrolysis conditions*

| Optimization Criteria | wt. % Microwave receptor | Microwave Receptor Type | Power Level (W) | Biooil Yield (g)/ $P_{total}$ (wt.%) |
|---|---|---|---|---|
| Main Effects | 50, 60, 70 | Spruce, Hemp | 300, 450, 600 | - |
| Biooil Yield | 50 | Spruce | 600 | 14.4 |
| | | **Spruce** | **450** | **13.8** |
| | | Hemp | 600 | 10.7 |
| | | Hemp | 450 | 11.1 |
| Phenolic Content | | **Spruce** | **450** | **83.9** |
| | | Spruce | 300 | 82.9 |
| | | Hemp | 450 | 85.5 |
| | | Hemp | 300 | 89.1 |
| **Biooil Yield and Phenolic Content** | **50** | **Spruce** | **450** | **13.8 g / 83.9 wt. %** |

The percentage of microwave receptor used in the feedstock was found to have a significant impact on the biooil yield. Application of 50 wt. % microwave receptor in feedstock, the biooil yield recorded was higher compared to trials using 60 and 70 wt.% microwave receptors for both biochar types and at all power levels, except for pyrolysis of hemp at 300 W. Microwave pyrolysis at 450 W was selected as a favorable operating condition for both biooil yield and phenolic content, thus it was proposed as the overall optimized power level. The biooil yield obtained during the KL-spruce trial at 450 W was ~20% larger than the yield from the KL-hemp trial. Additionally, when increasing the power level from 450 W to 600 W, the yield increased by only 4%. KL biooil produced in presence of spruce contained a lower acid (300 W) and amide content (300 W and 450 W). By choosing spruce biochar, the presence and negative impacts, e.g. additional post pyrolysis treatment steps and cost of storage, of other chemical groups in the biooil can be reduced. Moreover, the high yield non-phenolic content formed in the light phase of KL-spruce biooil, i.e., monosaccharides and ketones, have been previously applied in manufacturing of polymers.

The present invention relates to a method of microwave pyrolysis of KL to boost the content of phenolic compounds in a biooil. The method is carried out under operating conditions that optimize both yield and the phenolic content.

In another embodiment, KL was pyrolyzed in a small-scale Quartz batch reactor connected to a condensation system. The biooil content was analyzed through a qualitative GC-MS (gas chromatography-mass spectroscopy) analyzer to identify their chemical composition.

Furthermore disclosed is a method of microwave pyrolysis of Kraft lignin in the presence of wood biochar to obtain a biooil with lower moisture and higher aromatic organic A biooil is synthesized that can be taken as a precursor material for conversion into a novel bio-based thermoplastic polymer. In one embodiment, spruce biochar as a microwave receptor produces a higher average KL biooil yield at all power levels compared to hemp biochar. In other embodiments, with increasing the microwave power level from 300 W to 600 W, the biooil yield increases with reduced biochar yield. In one embodiment, the combination of 50:50 ratio of KL and spruce biochar feedstock exhibited the highest biooil yield.

EXAMPLES

Materials

Softwood Kraft lignin was supplied from the Resolute Forest Products Thunder Bay Mill through FPInnovations (Ontario, Canada). Spruce and hemp biochar were produced in-house by microwave pyrolysis.

Microwave Pyrolysis Setup and Procedures

Microwave pyrolysis of Kraft lignin was carried out in a nitrogen atmosphere in a setup as depicted in Figure 1. High purity nitrogen was provided by a VWR generator that uses pressure swing adsorption to remove the oxygen, carbon dioxide and water vapour from air. The microwave generator system, designed by MUEGGE, was controlled by software. The microwave power level (maximum microwave power level was 3 kW) was altered to achieve the desired temperature inside the microwave box. Spruce and hemp biochar were synthesized by pyrolysis of 1 kg hemp and spruce at 2700 W for one hour in a nitrogen atmosphere. During the reaction of interest, 100 g of biochar was added as a microwave receptor. The power level and residence time were chosen based on previous research indicating that the lowest moisture content in biochar was achievable at 2700 W [126].

The microwave pyrolysis design parameters pertaining to the current disclosure were varied as per Table 21.

*Table 21: Experiment variables used in the the study described in the present disclosure*

| Biochar Type (Microwave Receptor) | % Kraft lignin in feedstock | Power Level (W) |
|---|---|---|
| Spruce | 30, 40, 50 | 300, 450, 600 |

A trial setup entailed placing half of the desired biochar amount in a quartz glass reactor, followed by KL, then finally adding the remaining biochar. The quartz reactor was placed inside the microwave box and connected to the condensation system. The condensation system consisted of two water-cooled Allihn (bulb) condenser columns and a round-bottom flask placed in an ice bath. Metal tape was used to secure joints and reduce loss of vapours.

The system was purged with nitrogen for approximately five minutes while the ice bath was set up. Cooling water for the microwave generator and the condensation system was allowed to reach steady state while the reactor was purging. The microwave software was used to select and maintain the desired power level constant for a residence time of 30 minutes per trial. During the trial, the thermocouple was used to measure the feedstock temperature with an accuracy of $\pm$ 2 °C. At the end of a trial, the microwave generator was turned off, to allow the system to cool down. When the reactor temperature reached approximately 50-60 °C, the biochar was collected from the reactor and stored in a Ziploc® bag. It was key to allow for gradual cooling for the quartz glass and to prevent combustion of biochar by premature exposure to oxygen. The non-condensable gas flowed to the fume hood during the trial. The condensable gas was partially cooled, collected as biooil, then refrigerated.

Analytical Instruments

GC-MS analysis was conducted with a Perkin Elmer Clarus 680 GC coupled to a Clarus SQ8 MS at Dalhousie University Agricultural campus (Truro, Nova Scotia, Canada). The GC injection port was operated at 280 °C in split ratio of 10:1, and 1 mL/min helium was used as carrier gas. 1 $\mu$L of the biooil was analysed in a Rxi-5 ms column (30 m length, 0.25 mm diameter, 0.25 $\mu$m stationary phase) with a low-polarity phase. For a total run of 25 mins, the initial oven temperature was held at 70 °C for 2 min, then firstly increased to 250 °C at a heating rate of 10 °C/min and finally increased to 280 °C at a heating rate of 6 °C/min. An electron impact (EI) source with electron energy of 70 eV, operating in the range 45-400 m/z was used. The source and transfer line temperatures were 150 °C and 200 °C, respectively. A 6.6 min solvent delay was applied to protect the MS. The 30 largest peaks, based on the integrated peak areas in total ion chromatogram (TIC), were identified by using NIST library.

RESULT AND DISCUSSION

Kraft Lignin Pyrolysis Product Yield

Based on a factorial design, 18 unique combinations of experimental conditions applied were completed to analyze the impact of 1) using spruce or hemp biochar as a microwave receptor, 2) biochar - KL ratio in feedstock (or % of KL in feedstock), and 3) the microwave power level applied. Due to the heterogeneous nature of KL, each combination was repeated three times. Selective results, based on the trials that resulted in the highest biooil yields, have been summarized in Table 22.

While it is known that addition of biochar as a microwave receptor impacts the heating rate during pyrolysis [147], this study investigated whether biochar from different biomass have varied impact on the yield of pyrolytic products and compositions. Yerrayya et al. [147]. observed that utilizing a high percentage of microwave receptor (in their case activated carbon) requires a longer residence time for completion of pyrolysis, but also leads to controlled heating of feedstock. Additionally, moisture present in receptor capillaries (nano-sized) contributes to steam cracking of Kraft lignin particles, leading to high biooil yield. Biochar production is favored during the primary decomposition of KL, at $\leq$ 400 °C [47]. Breakdown of KL ether linkages, within the polymer, results in sidechain reactions of phenolic compounds and prevents monomeric products from evaporating, thus forming KL biochar [65].

*Table 22: Yield by Weight of Pyrolytic Products*

| Biochar Type | Power Level (W) | % Kraft lignin | Biooil (g) | Biochar (g) | Gas (g) |
|---|---|---|---|---|---|
| **Spruce** | **600** | **50** | **14.4** | **47.9** | 37.7 |
| | | **40** | **11.1** | **65.3** | 23.6 |
| | | **30** | **9.4** | **68.9** | 21.7 |
| | **450** | **50** | **13.8** | **61.7** | 24.5 |
| | | **40** | **11** | **66** | 23 |
| | | **30** | **84** | **65.9** | 25.7 |
| | **300** | **50** | **11.8** | **67** | 21.2 |
| | | **40** | **7.7** | **74.1** | 18.2 |
| | | **30** | **5.1** | **77.5** | 17.4 |
| **Hemp** | **600** | **50** | **10.7** | **61.8** | 27.5 |
| | | **40** | **9.5** | **66.5** | 24 |
| | | **30** | **8.1** | **70** | 21.9 |
| | 450 | **50** | **11.1** | **64.2** | 24.7 |
| | | **40** | **9.5** | **66.8** | 23.7 |
| | | **30** | **8.1** | **75.9** | 16 |
| | 300 | **50** | **8.5** | **72.4** | 19.1 |
| | | **40** | **9.4** | **70.5** | 20.1 |
| | | **30** | **8.3** | **73.5** | 18.2 |

*Biooil Yield*

Application of spruce biochar as the microwave receptor displayed higher biooil yields in comparison to hemp biochar. In the presence of spruce biochar, at all power levels applied, 30 wt. % of Kraft lignin (or 70 wt. % of the biochar) in the feedstock outputs the lowest biooil yield. Additionally, the biooil yield increased as higher power levels were applied. In the presence of hemp biochar, the biooil yield did not vary considerably when the power level and the amount of microwave receptor in the feedstock were altered.

These results are in agreement with findings by Yerraya et al. [147] i.e., receptors with high external surface area allow effective degradation of lignin, thus reducing the biooil yield. The BET (Brunauer-Emmett-Teller) external surface area of spruce and hemp biochar are 9.96 m$^2$/g and 12.18 m$^2$/g, respectively [33]. Overall, it was observed that using 50-60 g of microwave receptor in feedstock outputs biooil yield approximately equal to or greater than 10 wt.%. In contrast to an observation made by Yerrayya et al.[147], that the highest biooil yield was obtained from 10 g lignin:90 g microwave receptor, in the study described in the present disclosure the biooil yield was found to decrease when the percentage of receptor was increased in the feedstock. This can be attributed to differences in the microwave receptor particle size and distribution in the feedstock. Moreover, molecular steam cracking would be considerably higher in presence of activated carbon since its moisture content is 15 wt.% while the moisture content of spruce and hemp biochar is approximately 3.9 wt.% and 2.7 wt.%, respectively [133].

*Biochar Yield*

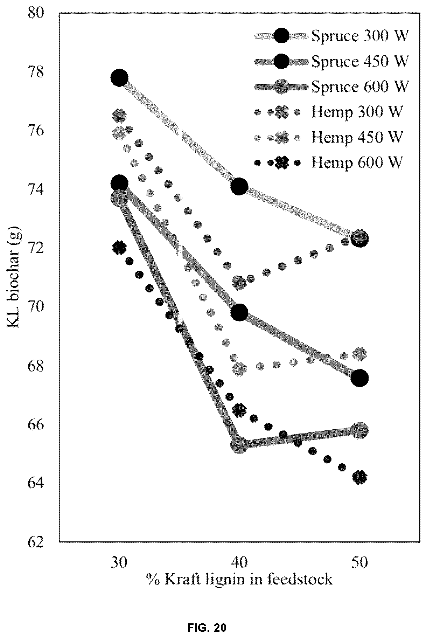

In presence of both spruce and hemp biochar, the biochar yield increased as the power level was reduced from 600 W to 300 W, as depicted in Figure 20.

The feedstock was subjected to different heating rates based on the power level applied. At a lower power level, the feedstock undergoes primary decomposition longer, versus at higher power levels, thus promoting side chain polymerization reactions (formation of C-C) over evaporation of monomers. Consequently, the polymerized chemicals are stored as KL biochar [65].

GC-MS Analysis of Kraft lignin Biooil

The goal of GC-MS analysis was to investigate the suitability of KL biooil as a source of bio-based monomers to replace petroleum-based alternatives. In order to optimize yield as well as the composition, biooil samples obtained by pyrolysis of 50 g KL:50 g biochar at varied biochar type and power levels were analyzed.

*Overview of KL biooil Chemical Composition*

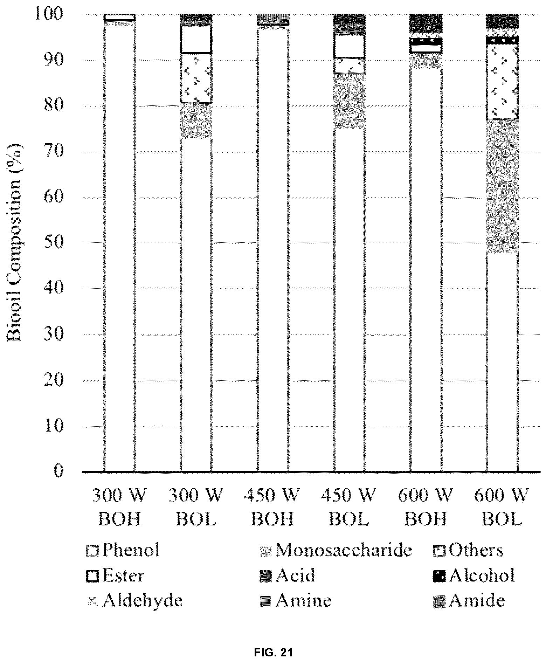

The synthesized KL biooil consisted of two phases, i.e., heavy phase (BOH) and light phase (BOL). The light phase, also referred to as the aqueous phase of the biooil, usually has a high moisture content and a small percentage of organic compounds [40]. The water produced is due to breakdown of binding sites in KL as the temperature increases from room temperature to 450°C. The oil yield is higher than water yield above 450°C. Major organic groups in both aqueous and oil phases include phenols, heavy molecular weight compounds (HMWC), single ring non-phenolic groups, and aliphatic compounds. The yield of phenols and HMWC are higher as lignin is mainly made up of aromatic compounds. Moreover, microwave heating at moderate temperatures prevents secondary reactions that produce aliphatic compounds [39]. The major chemical compounds present in synthesized KL biooil samples have been described in Figure 21.

As seen in Figure 21, the heavy phase of the biooil has a higher phenolic content compared to the light phase. Low and moderate power levels, i.e., 300 - 450 W were more selective towards production of phenolic compounds as compared to pyrolyzing at 600 W. The chemical composition of heavy biooil produced in the presence of hemp biochar were similar. Both biochar types reached the highest phenolic content observed in BOH, i.e., 97%. However, spruce biochar can achieve 97% phenolic content at a lower power level (300 W) in comparison to hemp biochar (600 W). At increasing power levels, hemp biochar produces a more phenolic BOL (75-86%), while a trend based on power level was not observed for spruce biochar (47-72%).

*Phenolic Compounds*

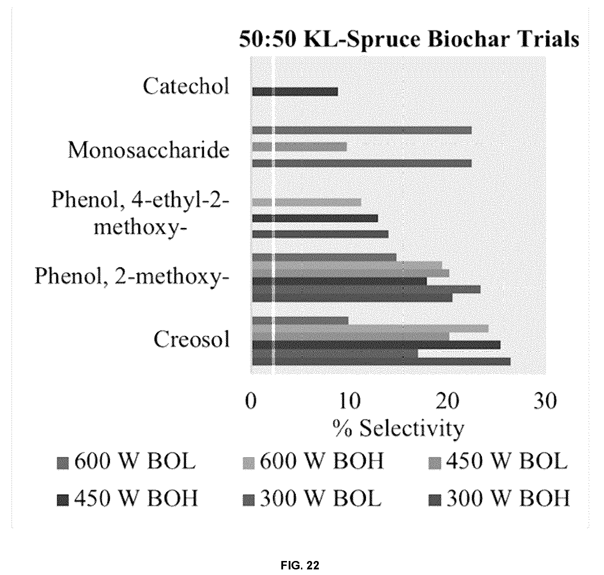

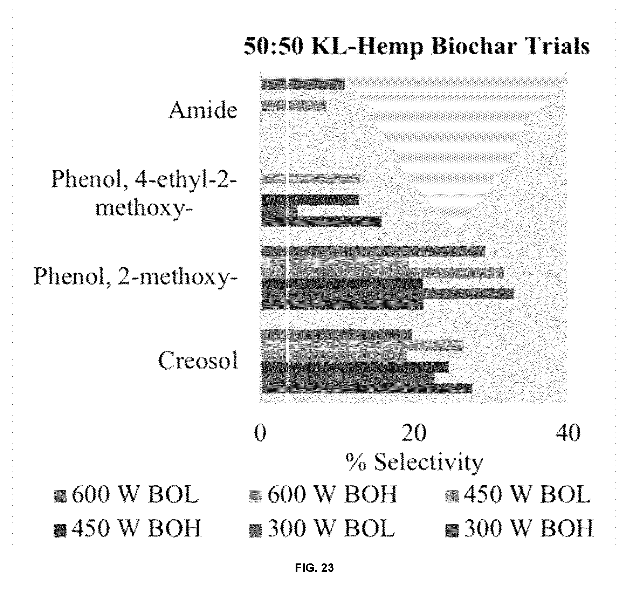

Phenolic hydroxyl groups decompose to form monophenols, including phenols, guaiacols, benzenes and catechols in the oil phase [1][40]. Only 10% of the aliphatic hydroxyl groups that were originally present in the KL was transferred into the oil phase [40]. However, if the operating pressure of the microwave reactor is reduced, non-aromatic content in the biooil can be relatively high [4]. Figures 22 and 23 include a summary of the top three chemical compounds that were found for each set of conditions applied.

Creosol was the primary chemical group in the heavy phase of the biooil, indifferent of the biochar type and power level. Pyrolytic KL biooil usually consists of phenols, guaiacols and syringols as the primary chemical content [7][147].. In this case, the significant presence of creosol can be possibly related to further decomposition of a pre-processed lignocellulosic material as the microwave receptor.

2-methoxyphenol was the second most common (obtained at all experimental conditions applied) compound formed in both BOH and BOL during pyrolysis, while 4-ethyl-2-methoxyphenol was mainly found in BOH. Findings by Kawamoto [65] indicate that during secondary decomposition of lignin, guaiacol and syringols are broken down into o-cresols (2-methoxy phenol) alongside other phenol. With increasing power levels, it can be observed that the selectivity towards 2-methoxyphenol and 4-ethyl-2-methoxyphenol decreases. This is due to the faster rise in temperature for the same residence time, whereby beyond 550°C more monomers start to transfer into gas form while being subjected to the same condensation settings [65].

The pyrolysis of Kraft lignin in the presence of biochar at varied power levels is carried out to optimize the biooil yield and aromatic composition.

In another embodiment, the highest biooil yield is obtained in presence of spruce biochar. In other embodiments, biooil yield increases with rise in power levels when spruce biochar is applied, while change in power level does not have a significant impact on the yield when hemp biochar is used.

In another embodiment, KL biochar yield is at the highest at 300 W due to side reactions and restricted evaporation of monomers.

In another embodiment, results from the GC-MS analysis confirm that the KL biooil is highly phenolic. In another embodiment, hemp biochar as a microwave receptor produces a more phenolic light oil.

In another embodiment, creosol is formed at all experimental conditions applied; however, it is the primary compound in the heavy oil.

The present invention, relates to optimized microwave pyrolysis and feedstock conditions to produce phenolic-rich biooils that are applied in the production of bio-based monomers to replace petrochemicals. Biooil yield is improved by an improved condensation system and other means. Furthermore downstream upgrading and polymerization of biooil is carried out. The polymerization process is optimized for synthesis of a bio-based low viscosity thermoplastic resin.

Conclusion

Pyrolyzed Kraft lignin has shown potential in replacing petroleum-based monomers in synthesis of resins. In certain aspects, the goal of this work was to determine the optimized operating conditions for microwave pyrolysis of Kraft lignin to obtain biobased chemical building blocks in form of KL biooil. Kraft lignin was depolymerised by varying the microwave pyrolysis conditions in a nitrogen atmosphere, in an attempt to achieve the highest biooil yield possible and improve selectivity towards phenolic monomers. The optimal conditions for production of a highly phenolic Kraft lignin biooil was determined by completing microwave pyrolysis at three power levels with two distinct lignocellulosic biochars, as microwave receptors. In certain aspects of the present invention, certain key findings of the research have been summarised as follows:

1. Spruce and hemp biochar are effective microwave receptors for pyrolysis of KL. A higher operating temperature was achieved, during microwave pyrolysis, by using hemp biochar as a microwave receptor (630 °C) in comparison to spruce biochar (540 °C).
2. The KL biooil yield decreased when the percentage microwave receptor in the feedstock was increased from 50 wt.% to 70 wt.% for the same residence time, i.e. 30 minutes.
3. KL-spruce trials output the highest KL biooil yield. This was attributed to the higher moisture content and lower BET external surface of spruce biochar compared to hemp biochar.
4. With the power level increase from 300 W to 450 W, the KL biooil yield showed an increase by 17-65%. The yields obtained at 450 W and 600 W were comparable; 3-4% increase in biooil yield was observed. The highest biooil yield was observed at 600 W.
5. The optimized microwave pyrolysis conditions for KL biooil yield were 450 or 600 W for power level using spruce or hemp biochar as microwave receptor at 50 wt. % in the feedstock.
6. KL biooil comprised of two phases, including a heavy phase (~40 wt.%) and a light phase (~60 wt.%). Phenols were the highest yield chemical group found in the biooil; the phenolic content recorded was 75-97 %.
7. Biooil heavy phase yielded a larger phenolic content compared to the light phase. The largest phenolic content during KL-spruce trials was found at 300 W and 450 W for BOH (97.6%) and BOL (75.2%), respectively. For KL-hemp trials, the largest phenolic content was found at 600 W (97.9%) and 300 W (86.5%).
8. The optimized microwave pyrolysis conditions for phenolic content were 300 W for power level using spruce biochar as microwave receptor and 50 wt.% microwave receptor in the feedstock.
9. The overall optimized microwave pyrolysis conditions proposed for synthesis of a highly phenolic KL biooil at the highest biooil yield achievable were application of 450 W as the operating power level and addition of spruce biochar as microwave receptor at 50 wt.% in the feedstock. The compositional analysis provides evidence that KL biooil synthesized at the proposed conditions can be applied as a chemical building block in sustainable resin manufacturing.

In one embodiment, condensable KL gas was collected through a two column-condensation system that was cooled by water running at 16-19 °C and an ice bath. The biooil yield was limited by the cooling capacity of the system. Additionally, the heavy biooil is highly viscous and partially condenses at the top of the distillation column during pyrolysis.

In another embodiment, a chiller is connected to the condensation system to provide cooling water at lower temperatures or the number of distillation stages is increased.

In another embodiment, the biooil sample is subjected to Karl Fischer titration, viscosity test and Gel Permeation Chromatography analysis. By determining the moisture, rheological properties and molecular weights of KL biooil, potential impacts on polymer properties can be predicted and avoided by upgrading the biooil.

In another embodiment, polymerization can be implemented wherein crude or purified KL biooil can be successfully applied in production of thermoplastic biopolymers.

**References**

Anastas, P., & Warner, J. (1998). Green Chemistry: Theory and Practice. New York: Oxford University Press.

Anastas, P., & Zimmerman, J. (2003). Peer Reviewed: Design Through the 12 Principles of Green Engineering. Environmental Science & Technology, 37(5), 94A-101A. doi:10.1021/es032373g

Andres, J.-N., Siddiqui, H., & Fong, M. (2021). The Chemists' Gold: An Analysis of Gas Chromatography-Mass Spectrometry and Future Directions. In M. Clayton, & N. Abbas, Voices of Forensic Science (pp. 231-249). Toronto: University of Toronto Libraries Journal Production Services.

Ashik, K. P., & Sharma, R. (2015). A Review on Mechanical Properties of Natural Fiber Reinforced Hybrid Polymer Composites. Journal of Minerals and Materials Characterization and Engineering, 3(5). doi:10.4236/jmmce.2015.35044

Bajpai, P. (2015). Basic Overview of Pulp and Paper Manufacturing Process. In Green Chemistry and Sustainability in Pulp and Paper Industry (pp. 11-39). Springer, Cham. doi:10.1007/978-3-319-18744-0_2

Bajwa, D. S., Pourhashem, G., Ullah, A. H., & Bajwa, S. G. (2019, January). A concise review of current lignin production, applications, products and their environment impact. Industrial Crops and Products, 139. doi:10.1016/j.indcrop.2019.111526

Bartoli, M., Rosi, L., & Frediani, M. (2020, December ). Bio-oils from microwave assisted pyrolysis of kraft lignin operating at reduced residual pressure. Fuel, 118-175. doi:10.1016/j.fuel.2020.118175

BeMiller, J. N. (2018). Monosaccharides. In J. N. BeMiller, Carbohydrate Chemistry for Food Scientists (pp. 2-22). Elsevier Science & Technology.

Ben, H., & Ragauskas, A. J. (2011, April 27). NMR Characterization of Pyrolysis Oils from Kraft Lignin. Energy Fuels, 25(5), 2322-2332.

Ben, H., & Ragauskas, A. J. (2011, September 13). Pyrolysis of Kraft Lignin with Additives. Energy Fuels, 25(10), 4662-4668.

Bewick, S., Parsons, R., Forsythe, T., Robinson, S., Dupon, J., Ball, D., . . . Scott, R. (2019, August 22). The LibreTexts. Retrieved from The LibreTexts: https://chem.libretexts.org/@go/page/177593

Bhudolia, S. K., Joshi, S. C., Bert, A., Makam, R., Boon, Y. D., & Gohel, G. (2019). Flexural characteristics of novel carbon methylmethacrylate composites. Composites Communications, 13, 129-133.

Bi, Y., Lei, X., Xu, G., Chen, H., & Hu, J. (2018). Catalytic Fast Pyrolysis of Kraft Lignin over Hierarchical HZSM-5 and Hβ Zeolites. Catalysts, 8(2), 82.

Biron, M. (2015). Material Selection for Thermoplastic Parts : Practical and Advanced Information. Elsevier Science & Technology Books.

Bisto, D., Leahy, A., Bond, K., Saha, G., & Afzal, M. (2021). Lignocellulosic biopolymer from biomass pyrolysis and polymerization of biooil: review and research perspective. Biopolymers, 50.

Borges, F. C., Du, Z., Xie, Q., Trierweiler, J. O., Cheng, Y., Wan, Y., . . . Ruan, R. (2014). Fast microwave assisted pyrolysis of biomass using microwave absorbent. Bioresource Technology, 156, 267-274.

Bridgwater, A. V. (2012, March). Review of fast pyrolysis of biomass and product upgrading. Biomass and Bioenergy, 38, 68-94. doi:10.1016/j.biombioe.2011.01.048

Bu, Q., Lei, H., Wang, L., & Wei, Y. (2014, June). Bio-based phenols and fuel production from catalytic microwave pyrolysis of lignin by activated carbons. Bioresource Technology, 162, 142-147.

Budari, V., Gronnow, M., Shuttleworth, P., & Clark, J. (2013). Microwave-assisted pyrolysis biorefineries. In R. Luque, & J. C. Colmenares, An Introduction to Green Chemistry Methods (pp. 99-111). Future Science Ltd.

Burdick, D. L., & Leffler, W. L. (2010). Petrochemicals in Nontechnical Language (4th Edition ed.). PennWell Corporation.

Cabarello, J. A., Font, R., & Marcilla, A. (1997). Pyrolysis of Kraft lignin: yields and correlations. Journal of Analytical and Applied Pyrolysis, 39(2), 161-183. doi:10.1016/S0165-2370(96)00965-5

Calvo-Flores, F., Dobado, J., Isac-Garcia, J., & Martin-Martinez, F. (2015). Lignin and Lignans as Renewable Raw Materials. West Sussex: Wiley. Retrieved from https://ebookcentral.proquest.com/lib/unb/reader.action?docID=2055784#

Chanda, M. (2017). Plastics technology handbook. Taylor & Francis Group.

Chen, J., Liu, C., Wu, S., Liang, J., & Lei, M. (2016). Enhancing the quality of bio-oil from catalytic pyrolysis of kraft black liquor lignin. RSC Advances(109).

Choi, H. S., & Meier, D. (2013). Fast pyrolysis of Kraft ligin - Vapor cracking over various fixed-bed catalysts. Journal of Analytical and Applied Pyrolysis, 100, 207-212.

Cochran, E. W., Bai, X., Qu, W., Huang, Y., & Luo, Y. (2020). United States of America Patent No. 0255572. Retrieved from https://www.freepatentsonline.com/y2020/0255572.html

Collins, M., Nechifor, M., Tanasã, F., Zãnoagã, M., McLoughlin, A., Stróżyk, M., . . . Teacã, A. (2019, June 15). Valorization of lignin in polymer and composite systems for advanced engineering applications - A review. International Journal of Biological Macromolecules, 131, 828-849. doi:10.1016/j.ijbiomac.2019.03.069

CompositesWorld. (2016, March 14). CompositesWorld. (Gardner Business Media) Retrieved from CompositesWorld Web site: https://www.compositesworld.com/articles/composites-101-fibers-and-resins

Crestini, C., Lange, H., Sette, M., & Argyropoulous, D. (2017). On the structure of softwood kraft lignin. Green Chemistry(17), 4101-4121.

CSIRO. (2021). SigmaAldrich. Retrieved from SigmaAldrich Web site : https://www.sigmaaldrich.com/CA/en/technical-documents/protocol/materials-science-and-engineering/polymer-synthesis/raft-polymerization

Dang, L. N., Thi, T. B., Duong, L. D., & Kim, D. O. (2011, December 17). An ecofriendly and efficient route of lignin extraction from black liquor and a lignin-based copolyester synthesis. Polymer Bulletin, 68, 879-890.

de la Hoz, A., Diaz-Ortiz, A., & Moreno, A. (2005, January 12). Microwaves in organic synthesis. Thermal and non-thermal microwave effects. Chemical Society Reviews(2), 164-178. doi:10.1039/b411438h

Delucis, R., Calado, V., d'Almeida, J., & Amico, S. (2017). Carbon Fibers from Sustainable Resources. In V. Thakur, M. Thakur, & M. Kessler, Handbook of Composite from Renewable Materials, Fundamentals, Synthesis and Methodsa. Scrivener Publishing LLC.

Dessbesell, L., Paleologou, M., Leitch, M., Pulkki, R., & Xu, C. (2020, May). Global lignin supply overview and kraft lignin potential as an alternative for petroleum-based polymers. Renewable and Sustainable Energy Reviews, 123.

Dong, Z., Liu, Z., Zhang, X., Yang, H., Li, J., Xia, S., . . . Chen, H. (2019, November 15). Pyrolytic characteristics of hemicellulose, cellulose and lignin under $CO_2$ atmosphere. Fuel, 256.

Dorino, M., & Berge, G. (2005). Basell spherilene technology for LLDPE and HDPE production. In R. Meyers, Handbook of Petrochemicals Production Processes. McGraw-Hill Education.

Ebnesajjad, S. (2016). Introduction to Plastics. In E. Baur, K. Ruhrberg, & W. Woishnis, In Plastics Design Library, Chemical Resistance of Commodity Thermoplastics (pp. xiii-xxv). William Andrew Publishing.

EL - Science, Phoenix Vapers Limited. (2021). Phoenix Vapers Limited. Retrieved from Phoenix Vapers Limited Web site : https://elscience.co.uk/our-lab/gcms-work/

Fan, L., Song, H., Lu, Q., Leng, L., Li, K., Liu, Y., . . . Zhou, W. (2019, May 22). Screening microwave susceptors for microwave-assisted pyrolysis of lignin: Comparison of product yield and chemical profile. Journal of Analytical and Applied Pyrolysis. doi:10.1016/j.jaap.2019.05.012

Fan, L., Zhang, Y., Liu, S., Zhou, N., Chen, P., Cheng, Y., . . . Ruan, R. (2017, October). Bio-oil from fast pyrolysis of lignin: Effects of process and upgrading parameters. Bioresource Technology, 241, 1118-1126.

Farag, S., Fu, D., Jessop, P., & Chaouki, J. (2014, September). Detailed compositional analysis and structural investigation of a bio-oil from microwave pyrolysis of kraft lignin. Journal of Analytical and Applied Pyrolysis, 109, 249-257. Retrieved from https://www.sciencedirect.com/science/article/pii/S0165237014001363

Farag, S., Kouisni, L., & Chaouki, J. (2014). Lumped Approach in Kinetic Modeling of Microwave Pyrolysis of Kraft Lignin. Energy Fuels, 28(2), 1406-1417.

Farag, S., Mudraboyina, B., Jessop, P. j., & Chaouki, J. (2016, December ). Impact of the heating mechanism on the yield and composition of bio-oil from pyrolysis of kraft lignin. Biomass and Bioenergy, 95, 344-353. doi:10.1016/j.biombioe.2016.07.005

Fernandaz, Y., Arenillas, A., & Menendez, J. A. (2011). Microwave heating applied to pyrolysis. In S. Grundas, Advances in Induction and Microwave Heating of Mineral and Organic Material (pp. 723-752). Oviedo: IntechOpen. Retrieved from http://digital.csic.es/bitstream/10261/32630/1/microwave_heating_applied_to_pyr olysis.pdf

Fiscus, D., & Doufas, A. D. (2017). Polyolefins. In C. S. Hsu, & P. R. Robinson, Springer Handbook of Petroleum Technology (pp. 1088-1093). Springer International Publishing AG.

Francis, B., Rao, V., Jose, S., Catherine, B., Ramaswamy, R., Jose, J., & Thomas, S. (2006). Poly(ether ether ketone) with pendent methyl groups as a toughening agent for amine cured DGEBA epoxy resin. Journal of Materials Science, 41, 5467-5479. Retrieved from https://link.springer.com/article/10.1007%2Fs10853-006-0294-2

French, R., & Czernik, S. (2010, January ). Catalytic pyrolysis of biomass for biofuels production. Fuel Processing Technology, 91(1), 25-32.

Gellerstedt, G. (2015, December 23). Softwood kraft lignin: Raw material for the future. Industrial Crops and Products, 77, 845-854. doi:https://doi.org/10.1016/j.indcrop.2015.09.040

Godwin, P. M., Pan, Y., Xiao, H., & Afzal, M. T. (2019, February). Progress in Preparation and Application of Modified Biochar for Improving Heavy Metal Ion Removal From Wastewater. Journal of Bioresources and Bioproducts, 4(1), 31-42.

Gooty, A. K., Li, D., Berruti, F., & Briens, C. (2014, March). Kraft-lignin pyrolysis and fractional condensation of its bio-oil vapors. Journal of Analytical and Applied Pyrolysis, 106, 33-40.

Goundalkar, M., Corbett, D., & Bujanovic, B. (2014). Comparative Analysis of Milled Wood Lignins (MWLs) Isolated from Sugar Maple (SM) and Hot-Water Extracted Sugar Maple (ESM). Energies, 1363-1375. doi:10.3390/en7031363

Harfoot, M., Tittensor, D., Knight, S., Arnell, A., Blyth, S., Brooks, S., . . . Burgess, N. (2018). Present and future biodiversity risks from fossil fuel exploitation. (J. Busch, Ed.) Conservation Letters, 11(4). doi:10.1111/conl.12448

Holmberg, A., Karavolias, M. G., & Epps, T. H. (2015). RAFT polymerization and associated reactivity ratios of methacrylate-functionalized mixed bio-oil constituents. Polymer Chemistry, 6(31), 5728-5739. Retrieved from https://pubs.rsc.org/en/content/articlelanding/2015/py/c5py00291 e#! divAbstract

Holmberg, A., Reno, K., Nguyen, N., Wool, R., & Epps, T. (2016). Syringyl Methacrylate, a Hardwood Lignin-Based Monomer for High-Tg Polymeric Materials. ACS Macro, 5(5), 574-578. doi:10.1021/acsmacrolett.6b00270

Horvat, A. (2016). A study of the uncertainty associated with tar measurement and an investigation of tar evolution and composition during the air-blown fluidised bed gasification of torrefied and non-torrefied grassy biomass. University Carlos III de Madrid. ResearchGate.

Hu, Z., Du, X., Liu, J., Chang, H., & Jameel, H. (2016, August 18). Structural Characterization of Pine Kraft Lignin: BioChoice Lignin vs Indulin AT. Journal of Wood Chemistry and Technology, 36(6), 432-446. doi:10.1080/02773813.2016.1214732

Huang, Y.-F., Chiueh, P.-T., & Lo, S.-L. (2016, May). A review on microwave pyrolysis of lignocellulosic biomass. Sustainable Environment Research, 26(3), 103-109. doi:10.1016/j.serj.2016.04.012Get

Ibeh, C. C. (2011). Thermoplastic Materials : Properties, Manufacturing Methods, and Applications. Taylor & Francis Group.

Jahirul, M. I., Rasul, M., Chowdhury, A. A., & Ashwath, N. (2012). Biofuels Production through Biomass Pyrolysis -A Technological Review. Energies, 5(12), 4952-5001. doi:10.3390/en5124952

Jantas, R., Herczyńska, L., & Potakowska, J. (2011). Preparation and cross-linking properties of methacrylated sucrose. Polymer Bulletin, 67, 1865-1874. Retrieved from https://link.springer.com/article/10.1007/s00289-011-0526-8

Kaal, J., Schneider, M., & Schmidt, M. (2012). Rapid molecular screening of black carbon (biochar) thermosequences obtained from chestnut wood and rice straw: A pyrolysis-GC/MS study. Biomass and Bioenergy, 45, 115-129.

Kabir, G., & Hameed, B. H. (2017). Recent progress on catalytic pyrolysis of lignocellulosic biomass to high-grade bio-oil and bio-chemicals. Renewable and Sustainable Energy Reviews, 70, 945-967. doi:10.1016/j.rser.2016.12.001

Kapur, S. (2005). Abb Lummus Global SRT® cracking technology for the production of ethylene. In R. Meyers, Handbook of Petrochemicals Production Processes. McGraw-Hill Education.

Kauffman, G. B., Gent, A. N., Bierwagen, G. P., Stevens, M. P., Preston, J., & Rodriguez, F. (2016, April 16). Retrieved from Encyclopædia Britannica: https://www.britannica.com/topic/industrial-polymers-468698

Kawamoto, H. (2017). Lignin Pyrolysis Reactions. Journal of Wood Science, 63, 117-132. Retrieved from https://jwoodscience.springeropen.com/articles/10.1007/s10086-016-1606-z

Kim, J.-S. (2015). Production, separation and applications of phenolic-rich bio-oil - A review. Bioresource Technology, 90-98. doi:10.1016/j.biortech.2014.08.121

Kim, K. H., Kim, T.-S., Lee, S.-M., Choi, D., Yeo, H., Choi, I.-G., & W., C. J. (2013). Comparison of physicochemical features of biooils and biochars produced from various woody biomasses by fast pyrolysis. Renewable Energy, 50, 188-195.

Kim, Y.-M., Park, S., Kang, B. S., Jae, J., Rheed, G. H., Jung, S.-C., & Park, Y.-K. (2018, October 25). Suppressed char agglomeration by rotary kiln reactor with alumina ball during the pyrolysis of Kraft lignin. Journal of Industrial and Engineering Chemistry, 66, 72-77.

Lazaridis, P. A., Fotopoulos, A. P., Karakoulia, S. A., & Triantafyllidis, K. S. (2018). Catalytic Fast Pyrolysis of Kraft Lignin With Conventional, Mesoporous and Nanosized ZSM-5 Zeolite for the Production of Alkyl-Phenols and Aromatics. Frontiers in Chemistry, 6(295).

Lei, H., Ren, S., & Julson, J. (2009). The Effects of Reaction Temperature and Time and Particle Size of Corn Stover on Microwave Pyrolysis. Energy Fuels, 23(6), 3254-3261. doi:10.1021/ef9000264

Li, H., & McDonald, A. (2014, December). Fractionation and characterization of industrial lignins. Industrial Crops and Products, 62, 67-76. doi:10.1016/j.indcrop.2014.08.013

Li, J., Li, Y., Wu, Y., & Zheng, M. (2014, September 15). A comparison of biochars from lignin, cellulose and wood as the sorbent to an aromatic pollutant. Journal of Hazardous Materials, 280, 450-457. doi:10.1016/j.jhazmat.2014.08.033

Liu, Y., Zhai, Y., Li, S., Liu, X., Liu, X., Wang, B., . . . Li, C. (2020). Production of biooil with low oxygen and nitrogen contents by combined hydrothermal pretreatment and pyrolysis of sewage sludge. Energy, 203. doi:10.1016/j.energy.2020.117829

Lobato-Peralta, D., Duque-Brito, E., Villafán-Vidales, H., Longoria, A., Sebastian, P., Cuentas-Gallegos, A., . . . Okoye, P. (2021, April 15). A review on trends in lignin extraction and valorization of lignocellulosic biomass for energy applications. Journal of Cleaner Production, 293.

Lu, Q., Zhang, Z.-b., Ye, X.-n., Li, W.-t., Hu, B., Dong, C.-q., & Yang, Y.-p. (2017). Selective production of 4-ethyl guaiacol from catalytic fast pyrolysis of softwood biomass using Pd/SBA-15 catalyst. Journal of Analytical and Applied Pyrolysis, 123, 237-243. doi:10.1016/j.jaap.2016.11.021

Lyckeskog, H. (2016). Hydrothermal Liquefaction of Lignin into Bio-Oil. Gothenburg: Chalmers University of Technology. Retrieved from https://core.ac.uk/download/pdf/74356647.pdf

Ma, Z., Troussard, E., & van Bokhoven, J. (2012). Controlling the selectivity to chemicals from lignin via catalytic fast pyrolysis. Applied Catalysis A: General, 423, 130-136.

Macquarrie, D. J., Clark, J. H., & Fitzpatrick, E. (2012, June 11). The microwave pyrolysis of biomass. Biofuels, Bioproducts and Biorefining, 6(5).

Maldhure, A., & Ekhe, J. (2013, December ). Pyrolysis of purified kraft lignin in the presence of AlCl3 and ZnCl2. Journal of Environmental Chemical Engineering, 4(1), 844-849.

Mali, G., Kasabe, P., & Dandge, P. (2017, October 4). Statistically optimized production and characterization of vanillin from creosol using newly isolated Klebsiella pneumoniae P27. Annals of Microbiology, 67, 727-737. doi:10.1007/s13213-017-1300-4

Mathers, R. (2012, January 1). How well can renewable resources mimic commodity monomers and polymers? Journal of Polymer Science. Part A: Polymer Chemistry. , 50(1), pp. 1-15. doi:10.1002/pola.24939

Meylemans, H., Groshens, T., & Harvey, B. (2012, January). Synthesis of Renewable Bisphenols from Creosol. Special Issue: Green Nanocatalysis, 5(1). doi:10.1002/cssc.201100402

MIT OpenCourseWare. (2012). Retrieved from https://ocw.mit.edu/courses/chemistry/5-301-chemistry-laboratory-techniques-january-iap-2012/labs/MIT5_301IAP12_Work_Handout.pdf

Moad, G. (2012). Radical Polymerisation. Polymer Science: A Comprehensive Reference, 3, 59-118.

Monasterolo, I., & Raberto, M. (2019, January). The impact of phasing out fossil fuel subsidies on the low-carbon transition. Energy Policy, 124, 355-370. doi:10.1016/j.enpol.2018.08.051

Mondal, A. K., Qin, C., Ragauskas, A. J., Ni, Y., & Huang, F. (2020, February 3). Preparation and Characterization of Various Kraft Lignins and Impact on Their Pyrolysis Behaviors. Industrial & Engineering Chemistry Research, 59, 3310-3320. doi:10.1021/acs.iecr.9b06690

Monore, P., & D'Amato. (2019). The role of sustainability standards in the uptake of biobased chemicals. Current Opinion in Green and Sustainable Chemistry, 45-49. doi:10.1016/j.cogsc.2019.05.003Get

Mostafazadeh, A. K., Solomatnikova, O., Drogui, P., & Tyagi, R. D. (2018, June 29). A review of recent research and developments in fast pyrolysis and bio-oil upgrading. Biomass Conversion and Biorefinery(8), 739-773. doi:10.1007/s13399-018-0320-z

Mukarakate, C., McBrayer, J., Evans, T., Budhi, S., Robichaud, D., Lisa, K., . . . Nimlos, M. (2015). Catalytic fast pyrolysis of biomass: the reactions of water and aromatic intermediates produces phenols. Green Chemistry(17), 4217-4227. doi:10.1039/C5GC00805K

Mukkamala, S., Clayton Wheeler, M., van Heiningen, A., & DeSisto, W. (2012). Formate-Assisted Fast Pyrolysis of Lignin. Energy Fuels, 1380-1384. doi:10.1021/ef201756a

Muranaka, Y., Murata, R., Hasegawa, I., & Mae, K. (2015). Production of depolymerized lignin resin material from lignocellulosic biomass using acetone-water binary solution. Chemical Engineering Journal, 265-273. doi:10.1016/j.cej.2015.04.009

N, G., Ward, M., & Georgiou, T. (2014). Well-defined "Click-able" Copolymers in One-Pot Synthesis. The Royal Society of Chemistry. Retrieved from http://www.rsc.org/suppdata/cc/c4/c4cc02660h/c4cc02660h1.pdf

Nair, V., & Vinu, R. (2016, May). Production of guaiacols via catalytic fast pyrolysis of alkali lignin using titania, zirconia and ceria. Journal of Analytical and Applied Pyrolysis, 119, 31-39.

Olmos, D., & Gonzalez-Benito, J. (2007, April ). Visualization of the morphology at the interphase of glass fibre reinforced epoxy-thermoplastic polymer composites. European Polymer Journal, 43(4), 1487-1500.

Omar, N. N., Mustafa, I. S., Abdullah, N., & Hashim, R. (2018). The Use of Environmentally Friendly Bio-Oil in the Production of Phenol Formaldehyde (PF) Resin. Pertanika Journal of Science & Technology, 26(1), 177-192.

Pascault, J., Sautereau, H., Verdu, J., & Williams, R. (2002). Thermosetting polymers. Marcel Decker.

Percy, M. (2011). Application uses for polyetherrtherketone films in the oil & gas section . High Performance Thermoplastics & Composites for Oil & Gas Applications MLA (Modern Language Assoc.) Smithers. High Performance Thermoplastics & Composites for Oil & Gas Applications 2011 : [Conference Proceedings]: Houston, USA, 11-12 October 2011. Smit (pp. 62-69). Houston: Smithers Rapra Technology Ltd.

PerkinElmer, Inc. (2013). PerkinElmer, Inc. Retrieved from PerkinElmer, Inc Web site : https://www.perkinelmer.com/CMSResources/Images/44-129699BRO_ClarusSQ8Brochure.pdf

Perrier, S. (2017). 50th Anniversary Perspective: RAFT Polymerization□A User Guide. Macromolecules, 50, 7433-7447. Retrieved from https://pubs.acs.org/doi/pdf/10.1021/acs.macromol.7b00767

$P_lht_ll_l$, H., & Tosun, N. (2002). Investigation of the wear behaviour of a glass-fibre-reinforced composite and plain polyester resin. Composites Science and Technology, 62(3), 367-370. doi:10.1016/S0266-3538(01)00196-8

Pilon, G., & Lavoie, J.-M. (2012, November 30). Pyrolysis of Switchgrass (Panicum virgatum L.) at Low Temperatures within N2 and CO2 Environments: Product Yield Study. ACS Sustainable Chemical Engineering , 198-204.

Plastics Engineering Company. (2019, May 1). Plastics Engineering Company . Retrieved from Plastics Engineering Company Web site: https://www.plenco.com/phenolic-novolac-resol-resins.htm

Pourkarimi, S., Hallajisani, A., Alizadehdakhel, A., & Nouralishahi, A. (2019, September). Biofuel production through micro- and macroalgae pyrolysis - A review of pyrolysis methods and process parameters. Journal of Analytical and Applied Pyrolysis, 142. doi:10.1016/j.jaap.2019.04.015

Prakash, A., Singh, R., Balagurumurthy, B., Bhaskar, T., Arora, A., & Puri, S. (2015). Chapter 16 - Thermochemical Valorization of Lignin. In A. Pandey, T. Bhaskar, M. Stocker, & R. Sukumaran, Recent Advances in Thermochemical Conversion of Biomass (pp. 455-478). Elsevier. doi:10.1016/B978-0-444-63992-9.00003-3

Qu, W., Huang, Y., Luo, Y., Kalluru, S., Cochran, E., Forrester, M., & Bai, X. (2019, April). Controlled Radical Polymerization of Crude Lignin Bio-oil Containing Multihydroxyl Molecules for Methacrylate Polymers and the Potential Applications. ACS Sustainable Chemical Engineering, 7(9), 9050-9060.

Räisänen, T., & Athanassiadis, D. (2013). Basic Chemical Composition of the Biomass Components of Pine, Spruce and Birch. BioFuel Region.

Ratna, D. (2009). Handbook of Thermoset Resins. Rapra Technology Ltd.

Redwing, R. (2020). John A. Dutton e-Education Institute. Retrieved from John A. Dutton e-Education Institute Web site: https://www.e-education.psu.edu/matse81/node/2210

Reusch, W. (2020, September 13). LibreTexts. Retrieved from https://chem.libretexts.orgBookshelves/Organic_ Chemistry/Supplemental_Modul es_(Organic_Chemistry)/Amides/Properties_of_Amides/Physical_Properties_of_ Carboxylic_Acid_Derivatives

Riaz, U., & Ashraf, S. M. (2012). Lignin: Properties and Applications. In R. J. Paterson, Lignin: Properties and Applications in Biotechnology and Bioenergy (pp. 69-73). Nova Science Publishers, Inc.

Rodriguez-Narvaez, O., Peralta-Hernandez, J., Goonetilleke, A., & Bandala, E. (2019). Biochar-supported nanomaterials for environmental applications. Journal of Industrial and Engineering Chemistry. doi:10.1016/jjiec.2019.06.008

Rogers, D. (2015). Lignin-derived thermosetting vinyl ester resins for high. Rowan University.

Rößiger, B., Unkelbach, G., & Putky-Heinrich, D. (2018). Base-Catalyzed Depolymerization of Lignin: History, Challenges and Perspectives. In M. Poletto, Lignin-Trends and Applications. IntechOpen. doi:10.5772/intechopen.72964

Sadeghifar, H., Cui, C., & Argyropoulos. (2012, December 4). Toward Thermoplastic Lignin Polymers. Part 1. Selective Masking of Phenolic Hydroxyl Groups in Kraft Lignins via Methylation and Oxypropylation Chemistries. Industrial & Engineering Chemistry Research, 16713-16720. doi:10.1021/ie301848j

Sahaf, A., Laborie, M.-P., Englund, K., Garcia-Perez, M., & McDonald, A. (2013, February 20). Rheological Properties and Tunable Thermoplasticity of Phenolic Rich Fraction of Pyrolysis Bio-Oil. Biomacromolecules, 14(4), 1132-1139. doi:10.1021/bm4000184

Salami, A., Heikkinen, J., Tomppo, L., Hyttinen, M., Kekäläinen, T., Jänis, J., . . . Lappalainen, R. (2021). A Comparative Study of Pyrolysis Liquids by Slow Pyrolysis of Industrial Hemp Leaves, Hurds and Roots. Moelcules, 26.

Salema, A., Afzal, M., & Bennamoun, L. (2017, June). Pyrolysis of corn stalk biomass briquettes in a microwave technology. Bioresource Technology, 233, 233-362.

Scala, J., Orlicki, J., Winston, C., Robinette, J., Sands, J., & Palmese, G. (2005). The use of bimodal blends of vinyl ester monomers to improve resin processing and toughen polymer properties. Polymer, Elsevier(9), 2908-2921.

Scarlat, N., Dallemand, J.-F., Monforti-Ferrario, F., & Nita, V. (2015). The role of biomass and bioenergy in a future bioeconomy: Policies and facts. Environmental Development, 15, 3-34. doi:10.1016/j.envdev.2015.03.006

Schutyser, W., Renders, T., Van den Bosch, S., Koelewijn, S.-F., Beckham, G. T., & Sels, B. F. (2018). Chemicals from lignin: an interplay of lignocellulose fractionation, depolymerisation, and upgrading. Chemical Society Reviews, 47(3), 852-908. Retrieved from https://pubs.rsc.org/en/content/articlelanding/2018/cs/c7cs00566k#!divAbstract

Senneca, O., Cerciello, F., Wütscher, A., Muhler, M., & Apicella, B. (2020, July 1). Thermal treatment of lignin, cellulose and hemicellulose in nitrogen and carbon dioxide. Fuel, 271.

Shafaghat, H., Rezaei, P. S., Ro, D., Jae, J., Kim, B.-S., Jung, S.-C., . . . Park, Y.-K. (2017, October 25). In-situ catalytic pyrolysis of lignin in a bench-scale fixed bed pyrolyzer. Journal of Industrial and Engineering Chemistry, 54, 447-453.

Sham Aan, P., Krishna, M., & Narasimhamoorthy, H. (2011). Mechanical, Thermal, Morphoological and Flame Retardance Properties of Modified Novolac GFRP Composites. International Journal of Advanced Engineering Technology.

Sigma-Aldrich Co. LLC. . (2020). MilliporeSigma. Retrieved from MilliporeSigma Web site: https://www.sigmaaldrich.com/content/dam/sigma-aldrich/docs/SAJBrochure/1/controlled-radical-polymerization-guide.pdf

Stanzione, J., Giangiulio, P., Sadler, J., La Scala, J., & Wool, R. (2013). Lignin-Based Bio-Oil Mimic as Biobased Resin for Composite Applications. ACS Sustainable Chemistry and Engineering, 1(4), 419-426. doi:10.1021/sc3001492

Stanzione, J., Sadler, J., La Scala, J., & Wool, R. (2012, July). Lignin Model Compounds as Bio-Based Reactive Diluents for Liquid Molding Resins. Chemsuschem, 5(7), 1291-1297. doi:10.1002/cssc.201100687

Thakur, V., Thakur, M., Raghavan, P., & Kessler, M. (2014, March 12). Progress in Green Polymer Composites from Lignin for Multifunctional Applications: A Review. ACS Sustainable Chemistry & Engineering, 2(5), 1072-1092. doi:10.1021/sc500087z

Thomsen, A. B., Rasmussen, S., Bohn, V., & Nielsen, K. V. (2005). Hemp raw materials: The effect of cultivar, growth conditions and pretreatment on the chemical composition of the fibres. Roskilde: Risø National Laboratory. Retrieved from https://www.votehemp.com/wp-content/uploads/2018/09/ris-r-1507.pdf

Tipler, A., De Lorenzo, F., Garnica, R., Kaplan, Y., & May, D. (2012, March 20). A novel high sensitivity mass spectrometric detector for gas chromatography. Retrieved from https://www.slideshare.net/PerkinElmer/sq8-technical-talk

Trinh, T., Jensen, P., Sárossy, Z., Dam-Johansen, K., Knudsen, N., Sørensen, H., & Egsgaard, H. (2013, July 18). Fast pyrolysis of lignin using a pyrolysis centrifuge reactor. Energy and Fuels, 27(7), 3802-3810.

Valle, B., Remiro, A., García-Gómez, N., Gayubo, A., & Bilbao, J. (2018). Recent research progress on bio-oil conversion into bio-fuels and raw chemicals: a review. Journal of Chemical Technology and Biotechnology, 94(3), 670-689. doi:10.1002/jctb.5758

Vithanage, A., Chowdhury, E., Alejo, L., Pomeroy, P., DeSisto, W., Frederick, B., & Gramlich, W. (2017). Renewably sourced phenolic resins from lignin bio-oil. Journal of Applied Polymer Science. doi:10.1002/app.44827

Wallace, C., Afzal, M., & Saha, G. (2019). Effect of feedstock and microwave pyrolysis temperature on physio-chemical and nano-scale mechanical properties of biochar. Bioresources and Bioprocessing, 6(33). doi:10.1186/s40643-019-0268-2

Wan, J., Liu, L., Ayub, K. S., Zhang, W., Shen, G., Hu, S., & Qian, X. (2020). Characterization and adsorption performance of biochars derived from three key biomass constituents. Fuel, 269.

Wan, Y., Chen, P., Zhang, B., Yang, C., Liu, Y., Lin, X., & Ruan, R. (2009, September). Microwave-assisted pyrolysis of biomass: Catalysts to improve product selectivity. Journal of Analytical and Applied Pyrolysis, 86(1), 161-167. doi:10.1016/j.jaap.2009.05.006

Wang, B., Gao, B., & Fang, J. (2018, January 4). Recent advances in engineered biochar productions and applications. Critical Reviews in Environmental Science and Technology, 47(22), 2158-2207. doi:10.1080/10643389.2017.1418580

Wang, C., Kelley, S., & Venditti, R. (2016). Lignin-Based Thermoplastic Materials. ChemSusChem, 9(8), 770-783. doi:10.1002/cssc.201501531

Wang, C., Sun, J., Sudo, A., & Endo, T. (2012). Synthesis and copolymerization of fully bio-based benzoxazines from guaiacol, furfurylamine and stearylamine. Green Chemistry(10). Retrieved from https://pubs.rsc.org/en/content/articlelanding/2012/gc/c2gc35796h#!divAbstract

Wang, S., & Luo, Z. (2016). Pyrolysis of Biomass, Hangzhou: De Gruyter, Inc..

Wang, W., Wang, M., Huang, J., Zhao, X., Su, Y., Wang, Y., & Li, X. (2019, April ). Formate-assisted analytical pyrolysis of kraft lignin to phenols. Bioresource Technology, 278, 464-467.

Wise, W. (2005). Minerals | Zeolites. Encyclopedia of Geology, 591-600.

Xiu, S., & Shahbazi, A. (2012, September). Bio-oil production and upgrading research: A review. Renewable and Sustainable Energy Reviews, 16(7), 4406-4414. doi:10.1016/j.rser.2012.04.028

Yadav, S., Schmalbach, K., Kinaci, E., Stanzione III, J., & Palmese, G. (2018). Recent advances in plant-based vinyl ester resins and reactive diluents. European Polymer Journal, 98, 199-215. doi:10.1016/j.eurpolymj.2017.11.002

Yan, Q., Li, J., Zhang, J., & Cai, Z. (2018, June). Thermal Decomposition of Kraft Lignin under Gas Atmospheres of Argon, Hydrogen, and Carbon Dioxide. Polymers, 10(7).

Yang, H.-M., Zhao, W., Norinaga, K., Fang, J.-J., Wang, Y.-G., Zong, Z.-M., & Wie, X.-Y. (2015). Separation of phenols and ketones from bio-oil produced from ethanolysis of wheat stalk. Separation and Purification Technology, 152, 238-245. doi:10.1016/j.seppur.2015.03.032

Ye, Y., Zhang, Y., & Chang, J. (2012, August). Selective production of 4-ethylphenolics from lignin via mild hydrogenolysis. Bioresource Technology, 118, 648-651. doi:10.1016/j.biortech.2012.05.127

Yerrayya, A., Suriapparao, D., Natarajan, U., & Vinu, R. (2018). Selective production of phenols from lignin via microwave pyrolysis using different carbonaceous susceptors. Bioresource Technology, 519-528.

Yu, Y., Li, X., Su, L., Zhang, Y., Wang, Y., & Zhang, H. (2012). The role of shape selectivity in catalytic fast pyrolysis of lignin with zeolite catalysts. Applied Catalysis A: General, 447-448, 115-123.

Zadeh, Z. E., Abdulkhani, A., & Saha, B. (2020). Characterization of Fast Pyrolysis BioOil from Hardwood and Softwood Lignin. Energies, 13(4), 887.

Zhang, Q., Zhang, L., Wang, T., Xu, Y., Zhang, Q., Ma, L., . . . Li, K. (2014). Upgrading of Bio-oil by Removing Carboxylic Acids in Supercritical Ethanol. The 6th International Conference on Applied Energy - ICAE2014. 61, pp. 1033-1036. Guangzhou: Elsevier.

Zhang, X., Ma, H., & Wu, S. (2020, May 15). Effects of temperature and atmosphere on the formation of oligomers during the pyrolysis of lignin. Fuel, 268.

Zhang, Y., Chen, P., Liu, S., Fan, L., Zhou, N., Min, M., . . . Ruan, R. (2017). Microwave-Assisted Pyrolysis of Biomass for Bio-Oil Production. In M. Samer, Pyrolysis. IntechOpen.

Zhang, Z., Zhu, Z., Shen, B., & Liu, L. (2019, March 15). Insights into biochar and hydrochar production and applications: A review. Energy, 171, 581-598. doi:10.1016/j.energy.2019.01.035

Zhao, C., Jiang, E., & Aihui, C. (2017, December). Volatile production from pyrolysis of cellulose, hemicellulose and lignin. Journal of the Energy Institute, 90(6), 902-913. doi:10.1016/j.joei.2016.08.004

Zhou, N. (2020). Microwave-assisted lignin depolymerisation for bio-oil and phenolic mo. Dalhousie University. Retrieved from https://dalspace.library.dal.ca/bitstream/handle/10222/80133/Zhou-Ningning-MSc-AGRI-Nov-2020.pdf?sequence=1

**Claims**

1. A method of pyrolysis of Kraft lignin, comprising:

   providing a microwave generator system,
   providing Kraft lignin feedstock in the system
   providing spruce biochar and/or a hemp biochar in the system, as a microwave receptor wherein the spruce biochar and/or hemp biochar is in the range of 50 wt.% to 70 wt.%, of the total of the Kraft lignin and the spruce biochar and/or the hemp biochar,
   providing a nitrogen atmosphere in the system, and
   heating the Kraft lignin and the spruce and/or hemp biochar using microwave energy to make a biooil.

2. The method of claim 1, wherein the microwave energy is generated at a power level in the range of 300 W to 600 W.

3. The method of claim 1 or 2, wherein the microwave energy is generated at a power level selected from the group consisting of 300 W, 450 W and 600 W.

4. The method of any one of claims 1 to 3, wherein the Kraft Lignin and the spruce biochar and/or the hemp biochar are heated for a residence time of 30 minutes.

5. The method of any one of claims 1 to 4, wherein the microwave energy is applied using a power level selected such that the temperature of the Kraft lignin does not exceed 600 °C.

6. The method of any one of claims 1 to 4, wherein the microwave energy is applied for a residence time such that the temperature of the Kraft lignin does not exceed 600 °C.

7. The method of any one of claims 1 to 4, wherein the microwave energy is applied using a combination of a power level and a residence time selected such that the temperature of the Kraft lignin does not exceed 600 °C.

8. The method of any one of claims 1 to 7, wherein the spruce and/or hemp biochar is 50 wt.% of the of the total of the Kraft lignin and the spruce biochar and/or the hemp biochar.

9. The method of any one of claims 1 to 7, wherein the spruce biochar and/or the hemp biochar is 60 wt.% or 70 wt.% of the of the total of the Kraft lignin and the spruce biochar and/or the hemp biochar.

10. The method of any one of claims 1 to 7, wherein the spruce biochar and/or the hemp biochar is 50 wt.% to 60 wt.% of the total of the Kraft lignin and the spruce biochar and/or the hemp biochar.

11. The method of any one of claims 1 to 7, wherein the spruce biochar and/or the hemp biochar is in the range of 60 wt.% to 70 wt.% of the total of the Kraft lignin and the spruce biochar and/or the hemp biochar.

12. The method of any one of claims 1 to 11, further comprising the step of collecting the biooil as a non-condensable gas.

13. The method of claim 12, wherein the non-condensable gas is cooled.

14. The method of claim 1, wherein the biochar is selected as spruce biochar.

15. The method of claim 2, wherein the biochar is selected as hemp biochar.

**Patentansprüche**

1. Verfahren zur Pyrolyse von Kraft-Lignin, umfassend:

Bereitstellen eines Mikrowellengeneratorsystems,
Bereitstellen von Kraft-Lignin-Rohstoffen in dem System,
Bereitstellen von Fichtenbiokohle und/oder einer Hanfbiokohle in dem System als Mikrowellenrezeptor, wobei die Fichtenbiokohle und/oder Hanfbiokohle in der Spanne von 50 Gew.-% bis 70 Gew.-% der Summe aus dem Kraft-Lignin und der Fichtenbiokohle und/oder der Hanfbiokohle ist,
Bereitstellen einer Stickstoffatmosphäre in dem System, und
Erhitzen des Kraft-Lignins und der Fichten- und/oder Hanfbiokohle unter Verwendung von Mikrowellenenergie, um ein Bioöl zu fertigen.

2. Verfahren nach Anspruch 1, wobei die Mikrowellenenergie auf einem Leistungsniveau in der Spanne von 300 W bis 600 W erzeugt wird.

3. Verfahren nach Anspruch 1 oder 2, wobei die Mikrowellenenergie auf einem Leistungsniveau ausgewählt aus der Gruppe bestehend aus 300 W, 450 W und 600 W erzeugt wird.

4. Verfahren nach einem der Ansprüche 1 bis 3, wobei das Kraft-Lignin und die Fichtenbiokohle und/oder die Hanfbiokohle für eine Verweilzeit von 30 Minuten erhitzt werden.

5. Verfahren nach einem der Ansprüche 1 bis 4, wobei die Mikrowellenenergie unter Verwendung eines Leistungsniveaus angewendet wird, das ausgewählt ist, sodass die Temperatur des Kraft-Lignins 600 °C nicht überschreitet.

6. Verfahren nach einem der Ansprüche 1 bis 4, wobei die Mikrowellenenergie für eine Verweilzeit angewendet wird, sodass die Temperatur des Kraft-Lignins 600 °C nicht überschreitet.

7. Verfahren nach einem der Ansprüche 1 bis 4, wobei die Mikrowellenenergie unter Verwendung einer Kombination aus einem Leistungsniveau und einer Verweilzeit angewendet wird, die ausgewählt sind, sodass die Temperatur des Kraft-Lignins 600 °C nicht überschreitet.

8. Verfahren nach einem der Ansprüche 1 bis 7, wobei die Fichten- und/oder Hanfbiokohle 50 Gew.-% der der Summe aus dem Kraft-Lignin und der Fichtenbiokohle und/oder der Hanfbiokohle ist.

9. Verfahren nach einem der Ansprüche 1 bis 7, wobei die Fichtenbiokohle und/oder die Hanfbiokohle 60 Gew.-% oder 70 Gew.-% der der Summe aus dem Kraft-Lignin und der Fichtenbiokohle und/oder der Hanfbiokohle ist.

10. Verfahren nach einem der Ansprüche 1 bis 7, wobei die Fichtenbiokohle und/oder die Hanfbiokohle 50 Gew.-% bis 60 Gew.-% der Summe aus dem Kraft-Lignin und der Fichtenbiokohle und/oder der Hanfbiokohle ist.

11. Verfahren nach einem der Ansprüche 1 bis 7, wobei die Fichtenbiokohle und/oder die Hanfbiokohle in der Spanne von 60 Gew.-% bis 70 Gew.-% der Summe aus dem Kraft-Lignin und der Fichtenbiokohle und/oder der Hanfbiokohle ist.

12. Verfahren nach einem der Ansprüche 1 bis 11, ferner umfassend den Schritt des Sammelns des Bioöls als nicht kondensierbares Gas.

13. Verfahren nach Anspruch 12, wobei das nicht kondensierbare Gas gekühlt ist.

14. Verfahren nach Anspruch 1, wobei die Biokohle als Fichtenbiokohle ausgewählt ist.

15. Verfahren nach Anspruch 2, wobei die Biokohle als Hanfbiokohle ausgewählt ist.

**Revendications**

1. Procédé de pyrolyse de lignine Kraft, comprenant :

la fourniture d'un système générateur de micro-ondes,
la fourniture de matière première de lignine Kraft dans le système,
la fourniture de biocharbon d'épicéa et/ou d'un biocharbon de chanvre dans le système, en tant que récepteur de micro-ondes,

dans lequel le biocharbon d'épicéa et/ou le biocharbon de chanvre est compris dans la plage de 50 % en poids à 70 % en poids, du total de la lignine Kraft et du biocharbon d'épicéa et/ou du biocharbon de chanvre,
la fourniture d'une atmosphère d'azote dans le système, et
le chauffage de la lignine Kraft et du biocharbon d'épicéa et/ou de chanvre au moyen d'une énergie de micro-ondes pour produire une bio-huile.

2. Procédé de la revendication 1, dans lequel l'énergie de micro-ondes est générée à un niveau de puissance compris dans la plage de 300 W à 600 W.

3. Procédé de l'une des revendications 1 ou 2, dans lequel l'énergie de micro-ondes est générée à un niveau de puissance choisi dans le groupe constitué de 300 W, 450 W et 600 W.

4. Procédé de l'une quelconque des revendications 1 à 3, dans lequel la lignine Kraft et le biocharbon d'épicéa et/ou le biocharbon de chanvre sont chauffés pendant un temps de séjour de 30 minutes.

5. Procédé de l'une quelconque des revendications 1 à 4, dans lequel l'énergie de micro-ondes est appliquée à un niveau de puissance choisi de sorte que la température de la lignine Kraft ne dépasse pas 600 °C.

6. Procédé de l'une quelconque des revendications 1 à 4, dans lequel l'énergie de micro-ondes est appliquée pendant un temps de séjour tel que la température de la lignine Kraft ne dépasse pas 600 °C.

7. Procédé de l'une quelconque des revendications 1 à 4, dans lequel l'énergie de micro-ondes est appliquée selon une combinaison d'un niveau de puissance et d'un temps de séjour choisis de sorte que la température de la lignine Kraft ne dépasse pas 600 °C.

8. Procédé de l'une quelconque des revendications 1 à 7, dans lequel le biocharbon d'épicéa et/ou de chanvre représente 50 % en poids du du total de la lignine Kraft et du biocharbon d'épicéa et/ou du biocharbon de chanvre.

9. Procédé de l'une quelconque des revendications 1 à 7, dans lequel le biocharbon d'épicéa et/ou le biocharbon de chanvre représente 60 % en poids ou 70 % en poids du du total de la lignine Kraft et du biocharbon d'épicéa et/ou du biocharbon de chanvre.

10. Procédé de l'une quelconque des revendications 1 à 7, dans lequel le biocharbon d'épicéa et/ou le biocharbon de chanvre représente 50 % en poids à 60 % en poids du total de la lignine Kraft et du biocharbon d'épicéa et/ou du biocharbon de chanvre.

11. Procédé de l'une quelconque des revendications 1 à 7, dans lequel le biocharbon d'épicéa et/ou le biocharbon de chanvre est compris dans la plage de 60 % en poids à 70 % en poids du total de la lignine Kraft et du biocharbon d'épicéa et/ou du biocharbon de chanvre.

12. Procédé de l'une quelconque des revendications 1 à 11, comprenant en outre l'étape de collecte de la bio-huile en tant que gaz non condensable.

13. Procédé de la revendication 12, dans lequel le gaz non condensable est refroidi.

14. Procédé de la revendication 1, dans lequel le biocharbon est choisi en tant que biocharbon d'épicéa.

15. Procédé de la revendication 2, dans lequel le biocharbon est choisi en tant que biocharbon de chanvre.

FIG. 1

FIG. 2

FIG. 3

FIG. 4

Combined Impact of Wt. % Microwave Receptor and Type on Biooil Yield

FIG. 5

FIG. 6

FIG. 7

FIG. 8

FIG. 9

| Plant Cell Wall | Cellulose | Hemicellulose | Lignin |
|---|---|---|---|
| **Major Chemical Compounds as Biooil** | Saccharides, Furans, Ketones | Acids, Ketones, Furans | Phenols, Acids, Furans |
| **Spruce** | 42% | 27% | 27% |
| **Hemp** | 55-72% | 7-19% | 2-5% |

FIG. 10

FIG. 11

FIG. 12

FIG. 13

FIG. 14

FIG. 15

**FIG. 16**

**FIG. 17**

FIG. 18

A

B

FIG. 19 (Prior Art)

FIG. 20

FIG. 21

FIG. 22

FIG. 23

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 0255572 A, Cochran, E. W., Bai, X., Qu, W., Huang, Y., & Luo, Y.

**Non-patent literature cited in the description**

- **ANASTAS, P.** ; **WARNER, J.** Green Chemistry: Theory and Practice. Oxford University Press, 1998
- **ANASTAS, P.** ; **ZIMMERMAN, J.** Peer Reviewed: Design Through the 12 Principles of Green Engineering. *Environmental Science & Technology*, 2003, vol. 37 (5), 94A-101A
- The Chemists' Gold: An Analysis of Gas Chromatography-Mass Spectrometry and Future Directions. **ANDRES, J.-N.** ; **SIDDIQUI, H.** ; **FONG, M.** ; **M. CLAYTON** ; **N. ABBAS**. Voices of Forensic Science. University of Toronto Libraries Journal Production Services, 2021, 231-249
- **ASHIK, K. P.** ; **SHARMA, R.** A Review on Mechanical Properties of Natural Fiber Reinforced Hybrid Polymer Composites.. *Journal of Minerals and Materials Characterization and Engineering*, 2015, vol. 3 (5)
- Basic Overview of Pulp and Paper Manufacturing Process. **BAJPAI, P.** Green Chemistry and Sustainability in Pulp and Paper Industry. Springer, 2015, 11-39
- **BAJWA, D. S.** ; **POURHASHEM, G.** ; **ULLAH, A. H.** ; **BAJWA, S. G.** A concise review of current lignin production, applications, products and their environment impact.. *Industrial Crops and Products*, January 2019, vol. 139
- **BARTOLI, M.** ; **ROSI, L.** ; **FREDIANI, M.** Bio-oils from microwave assisted pyrolysis of kraft lignin operating at reduced residual pressure.. *Fuel*, December 2020, 118-175
- Monosaccharides. **BEMILLER, J. N.** Carbohydrate Chemistry for Food Scientists. Elsevier Science & Technology, 2018, 2-22
- **BEN, H.** ; **RAGAUSKAS, A. J.** NMR Characterization of Pyrolysis Oils from Kraft Lignin.. *Energy Fuels,*, 27 April 2011, vol. 25 (5), 2322-2332
- **BEN, H.** ; **RAGAUSKAS, A. J.** Pyrolysis of Kraft Lignin with Additives. *Energy Fuels*, 13 September 2011, vol. 25 (10), 4662-4668

- **BEWICK, S.** ; **PARSONS, R.** ; **FORSYTHE, T.** ; **ROBINSON, S.** ; **DUPON, J.** ; **BALL, D.** ; **SCOTT, R.** *The LibreTexts*, 22 August 2019, https://chem.libretexts.org/@go/page/177593
- **BHUDOLIA, S. K.** ; **JOSHI, S. C.** ; **BERT, A.** ; **MAKAM, R.** ; **BOON, Y. D.** ; **GOHEL, G.** Flexural characteristics of novel carbon methylmethacrylate composites. *Composites Communications*, 2019, vol. 13, 129-133
- **BI, Y.** ; **LEI, X.** ; **XU, G.** ; **CHEN, H.** ; **HU, J.** Catalytic Fast Pyrolysis of Kraft Lignin over Hierarchical HZSM-5 and Hβ Zeolites. *Catalysts*, 2018, vol. 8 (2), 82
- **BIRON, M.** Material Selection for Thermoplastic Parts : Practical and Advanced Information.. Elsevier Science & Technology Books, 2015
- **BISTO, D.** ; **LEAHY, A.** ; **BOND, K.** ; **SAHA, G.** ; **AFZAL, M.** Lignocellulosic biopolymer from biomass pyrolysis and polymerization of biooil: review and research perspective. *Biopolymers*, 2021, vol. 50
- **BORGES, F. C.** ; **DU, Z.** ; **XIE, Q.** ; **TRIERWEILER, J. O** ; **CHENG, Y.** ; **WAN, Y.** ; **RUAN, R.** Fast microwave assisted pyrolysis of biomass using microwave absorbent. *Bioresource Technology*, 2014, vol. 156, 267-274
- **BRIDGWATER, A. V.** Review of fast pyrolysis of biomass and product upgrading.. *Biomass and Bioenergy*, March 2012, vol. 38, 68-94
- **BU, Q.** ; **LEI, H.** ; **WANG, L.** ; **WEI, Y.** Bio-based phenols and fuel production from catalytic microwave pyrolysis of lignin by activated carbons. *Bioresource Technology*, June 2014, vol. 162, 142-147
- Microwave-assisted pyrolysis biorefineries. **BUDARI, V.** ; **GRONNOW, M.** ; **SHUTTLEWORTH, P.** ; **CLARK, J.** An Introduction to Green Chemistry Methods. Future Science Ltd., 2013, 99-111
- **BURDICK, D. L.** ; **LEFFLER, W. L.** Petrochemicals in Nontechnical Language. PennWell Corporation, 2010

- **CABARELLO, J. A.** ; **FONT, R.** ; **MARCILLA, A.** Pyrolysis of Kraft lignin: yields and correlations.. *Journal of Analytical and Applied Pyrolysis*, 1997, vol. 39 (2), 161-183
- **CALVO-FLORES, F.** ; **DOBADO, J.** ; **ISAC-GARCIA, J.** ; **MARTIN-MARTINEZ, F.** Lignin and Lignans as Renewable Raw Materials. Wiley, 2015
- **CHANDA, M.** Plastics technology handbook. Taylor & Francis Group, 2017
- **CHEN, J.** ; **LIU, C.** ; **WU, S.** ; **LIANG, J.** ; **LEI, M.** Enhancing the quality of bio-oil from catalytic pyrolysis of kraft black liquor lignin. *RSC Advances*, 2016, vol. 109
- **CHOI, H. S** ; **MEIER, D.** Fast pyrolysis of Kraft ligin - Vapor cracking over various fixed-bed catalysts.. *Journal of Analytical and Applied Pyrolysis*, 2013, vol. 100, 207-212
- **COLLINS, M.** ; **NECHIFOR, M.** ; **TANASÃ, F.** ; **ZÃNOAGÃ, M.** ; **MCLOUGHLIN, A.** ; **STRÓŻYK, M.** ; **TEACÃ, A.** Valorization of lignin in polymer and composite systems for advanced engineering applications - A review. *International Journal of Biological Macromolecules*, 15 June 2019, vol. 131, 828-849
- CompositesWorld. Gardner Business Media, 14 March 2016
- **CRESTINI, C.** ; **LANGE, H.** ; **SETTE, M.** ; **ARGYR-OPOULOUS, D.** On the structure of softwood kraft lignin. *Green Chemistry*, 2017 (17), 4101-4121
- *SigmaAldrich*, 2021, https://www.sigmaaldrich.com/-CA/en/technical-documents/protocol/materials-science-and-engineering/polymer-synthesis/raft-polymerization
- **DANG, L. N.** ; **THI, T. B.** ; **DUONG, L. D.** ; **KIM, D. O.** An ecofriendly and efficient route of lignin extraction from black liquor and a lignin-based copolyester synthesis. *Polymer Bulletin*, 17 December 2011, vol. 68, 879-890
- **DE LA HOZ, A.** ; **DIAZ-ORTIZ, A.** ; **MORENO, A.** Microwaves in organic synthesis. Thermal and non-thermal microwave effects. *Chemical Society Reviews*, 12 January 2005 (2), 164-178
- Carbon Fibers from Sustainable Resources. **DELU-CIS, R.** ; **CALADO, V.** ; **D'ALMEIDA, J.** ; **AMICO, S.** Handbook of Composite from Renewable Materials, Fundamentals, Synthesis and Methodsa. Scrivener Publishing LLC, 2017
- **DESSBESELL, L.** ; **PALEOLOGOU, M.** ; **LEITCH, M.** ; **PULKKI, R.** ; **XU, C.** Global lignin supply overview and kraft lignin potential as an alternative for petroleum-based polymers.. *Renewable and Sustainable Energy Reviews*, May 2020, vol. 123
- **DONG, Z.** ; **LIU, Z.** ; **ZHANG, X.** ; **YANG, H.** ; **LI, J.** ; **XIA, S.** ; **CHEN, H.** Pyrolytic characteristics of hemicellulose, cellulose and lignin under CO2 atmosphere. *Fuel*, 15 November 2019, vol. 256
- Basell spherilene technology for LLDPE and HDPE production. **DORINO, M.** ; **BERGE, G.** Handbook of Petrochemicals Production Processes.. McGraw-Hill Education, 2005
- Introduction to Plastics. **EBNESAJJAD, S.** Plastics Design Library, Chemical Resistance of Commodity Thermoplastics. William Andrew Publishing, 2016, xiii-xxv
- Phoenix Vapers Limited. EL - Science, Phoenix Vapers Limited, 2021
- **FAN, L.** ; **SONG, H.** ; **LU, Q.** ; **LENG, L.** ; **LI, K** ; **LIU, Y.** ; **ZHOU, W.** Screening microwave susceptors for microwave-assisted pyrolysis of lignin: Comparison of product yield and chemical profile.. *Journal of Analytical and Applied Pyrolysis.*, 22 May 2019
- **FAN, L.** ; **ZHANG, Y.** ; **LIU, S.** ; **ZHOU, N.** ; **CHEN, P.** ; **CHENG, Y.** ; **RUAN, R.** Bio-oil from fast pyrolysis of lignin: Effects of process and upgrading parameters. *Bioresource Technology*, October 2017, vol. 241, 1118-1126
- **FARAG, S.** ; **FU, D.** ; **JESSOP, P.** ; **CHAOUKI, J.** Detailed compositional analysis and structural investigation of a bio-oil from microwave pyrolysis of kraft lignin.. *Journal of Analytical and Applied Pyrolysis*, September 2014, vol. 109, 249-257, https://www.sciencedirect.com/science/article/-pii/S0165237014001363
- **FARAG, S.** ; **KOUISNI, L.** ; **CHAOUKI, J.** Lumped Approach in Kinetic Modeling of Microwave Pyrolysis of Kraft Lignin. *Energy Fuels*, 2014, vol. 28 (2), 1406-1417
- **FARAG, S.** ; **MUDRABOYINA, B.** ; **JESSOP, P. J.** ; **CHAOUKI, J.** Impact of the heating mechanism on the yield and composition of bio-oil from pyrolysis of kraft lignin.. *Biomass and Bioenergy*, December 2016, vol. 95, 344-353
- Microwave heating applied to pyrolysis. **FERNAN-DAZ, Y.** ; **ARENILLAS, A.** ; **MENENDEZ, J. A.** Advances in Induction and Microwave Heating of Mineral and Organic Material. IntechOpen, 2011, 723-752
- Polyolefins. **FISCUS, D.** ; **DOUFAS, A. D.** Springer Handbook of Petroleum Technology. Springer International Publishing AG, 2017, 1088-1093
- **FRANCIS, B.** ; **RAO, V.** ; **JOSE, S.** ; **CATHERINE, B.** ; **RAMASWAMY, R.** ; **JOSE, J.** ; **THOMAS, S.** Poly(ether ether ketone) with pendent methyl groups as a toughening agent for amine cured DGEBA epoxy resin.. *Journal of Materials Science*, 2006, vol. 41, 5467-5479, https://link.springer.com/article/10.1007%2Fs10853-006-0294-2
- **FRENCH, R.** ; **CZERNIK, S.** Catalytic pyrolysis of biomass for biofuels production.. *Fuel Processing Technology*, January 2010, vol. 91 (1), 25-32
- **GELLERSTEDT, G.** Softwood kraft lignin: Raw material for the future. *Industrial Crops and Products*, 23 December 2015, vol. 77, 845-854

- **GODWIN, P. M.** ; **PAN, Y.** ; **XIAO, H.** ; **AFZAL, M. T.** Progress in Preparation and Application of Modified Biochar for Improving Heavy Metal Ion Removal From Wastewater.. *Journal of Bioresources and Bioproducts*, February 2019, vol. 4 (1), 31-42
- **GOOTY, A. K.** ; **LI, D.** ; **BERRUTI, F.** ; **BRIENS, C.** Kraft-lignin pyrolysis and fractional condensation of its bio-oil vapors.. *Journal of Analytical and Applied Pyrolysis*, March 2014, vol. 106, 33-40
- **GOUNDALKAR, M.** ; **CORBETT, D.** ; **BUJANOVIC, B.** Comparative Analysis of Milled Wood Lignins (MWLs) Isolated from Sugar Maple (SM) and Hot-Water Extracted Sugar Maple (ESM).. *Energies*, 2014, 1363-1375
- Present and future biodiversity risks from fossil fuel exploitation. **HARFOOT, M.** ; **TITTENSOR, D.** ; **KNIGHT, S.** ; **ARNELL, A.** ; **BLYTH, S.** ; **BROOKS, S.** ; **BURGESS, N.** Conservation Letters. 2018, vol. 11
- **HOLMBERG, A.** ; **KARAVOLIAS, M. G.** ; **EPPS, T. H.** RAFT polymerization and associated reactivity ratios of methacrylate-functionalized mixed bio-oil constituents. *Polymer Chemistry*, 2015, vol. 6 (31), 5728-5739, https://pubs.rsc.org/en/content/articlelanding/2015/py/c5py00291
- **HOLMBERG, A.** ; **RENO, K.** ; **NGUYEN, N.** ; **WOOL, R.** ; **EPPS, T.** Syringyl Methacrylate, a Hardwood Lignin-Based Monomer for High-Tg Polymeric Materials. *ACS Macro*, 2016, vol. 5 (5), 574-578
- **HORVAT, A.** A study of the uncertainty associated with tar measurement and an investigation of tar evolution and composition during the air-blown fluidised bed gasification of torrefied and non-torrefied grassy biomass.. University Carlos III de Madrid, 2016
- **HU, Z.** ; **DU, X.** ; **LIU, J.** ; **CHANG, H.** ; **JAMEEL, H.** Structural Characterization of Pine Kraft Lignin: BioChoice Lignin vs Indulin AT. *Journal of Wood Chemistry and Technology*, 18 August 2016, vol. 36 (6), 432-446
- **HUANG, Y.-F.** ; **CHIUEH, P.-T.** ; **LO, S.-L.** A review on microwave pyrolysis of lignocellulosic biomass. *Sustainable Environment Research,*, May 2016, vol. 26 (3), 103-109
- **IBEH, C. C.** Thermoplastic Materials : Properties, Manufacturing Methods, and Applications. Taylor & Francis Group, 2011
- **JAHIRUL, M. I.** ; **RASUL, M.** ; **CHOWDHURY, A. A.** ; **ASHWATH, N.** Biofuels Production through Biomass Pyrolysis -A Technological Review. *Energies*, 2012, vol. 5 (12), 4952-5001
- **JANTAS, R.** ; **HERCZYŃSKA, L.** ; **POTAKOWSKA, J.** Preparation and cross-linking properties of methacrylated sucrose. *Polymer Bulletin*, 2011, vol. 67, 1865-1874, https://link.springer.com/article/10.1007/s00289-011-0526-8
- **KAAL, J.** ; **SCHNEIDER, M.** ; **SCHMIDT, M.** Rapid molecular screening of black carbon (biochar) thermosequences obtained from chestnut wood and rice straw: A pyrolysis-GC/MS study.. *Biomass and Bioenergy*, 2012, vol. 45, 115-129
- **KABIR, G.** ; **HAMEED, B. H.** Recent progress on catalytic pyrolysis of lignocellulosic biomass to high-grade bio-oil and bio-chemicals. *Renewable and Sustainable Energy Reviews*, 2017, vol. 70, 945-967
- Abb Lummus Global SRT® cracking technology for the production of ethylene. **KAPUR, S.** Handbook of Petrochemicals Production Processes.. McGraw-Hill Education, 2005
- **KAUFFMAN, G. B.** ; **GENT, A. N.** ; **BIERWAGEN, G. P.** ; **STEVENS, M. P.** ; **PRESTON, J.** ; **RODRIGUEZ, F.** Encyclopædia Britannica. 16 April 2016
- **KAWAMOTO, H.** Lignin Pyrolysis Reactions.. *Journal of Wood Science*, 2017, vol. 63, 117-132, https://jwoodscience.springeropen.com/articles/10.1007/s10086-016-1606-z
- **KIM, J.-S.** Production, separation and applications of phenolic-rich bio-oil - A review. *Bioresource Technology*, 2015, 90-98
- **KIM, K. H.** ; **KIM, T.-S.** ; **LEE, S.-M.** ; **CHOI, D.** ; **YEO, H.** ; **CHOI, I.-G.** ; **W., C. J.** Comparison of physicochemical features of biooils and biochars produced from various woody biomasses by fast pyrolysis. *Renewable Energy*, 2013, vol. 50, 188-195
- **KIM, Y.-M.** ; **PARK, S.** ; **KANG, B. S.** ; **JAE, J.** ; **RHEED, G. H.** ; **JUNG, S.-C.** ; **PARK, Y.-K.** Suppressed char agglomeration by rotary kiln reactor with alumina ball during the pyrolysis of Kraft lignin.. *Journal of Industrial and Engineering Chemistry*, 25 October 2018, vol. 66, 72-77
- **LAZARIDIS, P. A.** ; **FOTOPOULOS, A. P.** ; **KARAKOULIA, S. A.** ; **TRIANTAFYLLIDIS, K. S.** Catalytic Fast Pyrolysis of Kraft Lignin With Conventional, Mesoporous and Nanosized ZSM-5 Zeolite for the Production of Alkyl-Phenols and Aromatics. *Frontiers in Chemistry*, 2018, vol. 6 (295)
- **LEI, H.** ; **REN, S.** ; **JULSON, J.** The Effects of Reaction Temperature and Time and Particle Size of Corn Stover on Microwave Pyrolysis.. *Energy Fuels*, 2009, vol. 23 (6), 3254-3261
- **LI, H.** ; **MCDONALD, A.** Fractionation and characterization of industrial lignins. *Industrial Crops and Products*, December 2014, vol. 62, 67-76
- **LI, J.** ; **LI, Y.** ; **WU, Y.** ; **ZHENG, M.** A comparison of biochars from lignin, cellulose and wood as the sorbent to an aromatic pollutant.. *Journal of Hazardous Materials*, 15 September 2014, vol. 280, 450-457

- **LIU, Y.** ; **ZHAI, Y.** ; **LI, S.** ; **LIU, X.** ; **LIU, X.** ; **WANG, B.** ; **LI, C.** Production of biooil with low oxygen and nitrogen contents by combined hydrothermal pretreatment and pyrolysis of sewage sludge. *Energy*, 2020, vol. 203

- **LOBATO-PERALTA, D.** ; **DUQUE-BRITO, E.** ; **VILLAFÁN-VIDALES, H.** ; **LONGORIA, A.** ; **SEBASTIAN, P.** ; **CUENTAS-GALLEGOS, A.** ; **OKOYE, P.** A review on trends in lignin extraction and valorization of lignocellulosic biomass for energy applications.. *Journal of Cleaner Production*, 15 April 2021, vol. 293

- **LU, Q.** ; **ZHANG, Z.-B.** ; **YE, X.-N.** ; **LI, W.-T.** ; **HU, B.** ; **DONG, C.-Q.** ; **YANG, Y.-P.** Selective production of 4-ethyl guaiacol from catalytic fast pyrolysis of softwood biomass using Pd/SBA-15 catalyst.. *Journal of Analytical and Applied Pyrolysis*, 2017, vol. 123, 237-243

- **LYCKESKOG, H.** Hydrothermal Liquefaction of Lignin into Bio-Oil. Chalmers University of Technology, 2016

- **MA, Z.** ; **TROUSSARD, E.** ; **VAN BOKHOVEN, J.** Controlling the selectivity to chemicals from lignin via catalytic fast pyrolysis. *Applied Catalysis A: General*, 2012, vol. 423, 130-136

- **MACQUARRIE, D. J.** ; **CLARK, J. H.** ; **FITZPATRICK, E.** The microwave pyrolysis of biomass. *Biofuels, Bioproducts and Biorefining*, 11 June 2012, vol. 6 (5)

- **MALDHURE, A.** ; **EKHE, J.** Pyrolysis of purified kraft lignin in the presence of AlCl3 and ZnCl2.. *Journal of Environmental Chemical Engineering*, December 2013, vol. 4 (1), 844-849

- **MALI, G.** ; **KASABE, P.** ; **DANDGE, P.** Statistically optimized production and characterization of vanillin from creosol using newly isolated Klebsiella pneumoniae P27. *Annals of Microbiology*, 04 October 2017, vol. 67, 727-737

- **MATHERS, R.** How well can renewable resources mimic commodity monomers and polymers?. *Journal of Polymer Science. Part A: Polymer Chemistry.*, 01 January 2012, vol. 50 (1), 1-15

- **MEYLEMANS, H.** ; **GROSHENS, T.** ; **HARVEY, B.** Synthesis of Renewable Bisphenols from Creosol.. *Special Issue: Green Nanocatalysis*, January 2012, vol. 5 (1)

- *MIT OpenCourseWare*, 2012, https://ocw.mit.edu/courses/chemistry/5-301-chemistry-laboratory-techniques-january-iap-2012/labs/MIT5_301IAP12_-Work_Handout.pdf

- **MOAD, G.** Radical Polymerisation.. *Polymer Science: A Comprehensive Reference*, 2012, vol. 3, 59-118

- **MONASTEROLO, I.** ; **RABERTO, M.** The impact of phasing out fossil fuel subsidies on the low-carbon transition.. *Energy Policy*, January 2019, vol. 124, 355-370

- **MONDAL, A. K.** ; **QIN, C.** ; **RAGAUSKAS, A. J.** ; **NI, Y.** ; **HUANG, F.** Preparation and Characterization of Various Kraft Lignins and Impact on Their Pyrolysis Behaviors.. *Industrial & Engineering Chemistry Research*, 03 February 2020, vol. 59, 3310-3320

- **MONORE, P.** ; **D'AMATO**. The role of sustainability standards in the uptake of biobased chemicals. *Current Opinion in Green and Sustainable Chemistry*, 2019, 45-49

- **MOSTAFAZADEH, A. K.** ; **SOLOMATNIKOVA, O.** ; **DROGUI, P.** ; **TYAGI, R. D.** A review of recent research and developments in fast pyrolysis and bio-oil upgrading.. *Biomass Conversion and Biorefinery*, 29 June 2018 (8), 739-773

- **MUKARAKATE, C.** ; **MCBRAYER, J.** ; **EVANS, T.** ; **BUDHI, S.** ; **ROBICHAUD, D.** ; **LISA, K.** ; **NIMLOS, M.** Catalytic fast pyrolysis of biomass: the reactions of water and aromatic intermediates produces phenols. *Green Chemistry*, 2015 (17), 4217-4227

- **MUKKAMALA, S** ; **CLAYTON WHEELER, M.** ; **VAN HEININGEN, A.** ; **DESISTO, W.** Formate-Assisted Fast Pyrolysis of Lignin.. *Energy Fuels*, 2012, 1380-1384

- **MURANAKA, Y.** ; **MURATA, R.** ; **HASEGAWA, I.** ; **MAE, K.** Production of depolymerized lignin resin material from lignocellulosic biomass using acetone-water binary solution.. *Chemical Engineering Journal*, 2015, 265-273

- **N, G., WARD, M.** ; **GEORGIOU, T.** Well-defined ''Click-able'' Copolymers in One-Pot Synthesis. The Royal Society of Chemistry, 2014

- **NAIR, V.** ; **VINU, R.** Production of guaiacols via catalytic fast pyrolysis of alkali lignin using titania, zirconia and ceria.. *Journal of Analytical and Applied Pyrolysis*, May 2016, vol. 119, 31-39

- **OLMOS, D.** ; **GONZALEZ-BENITO, J.** Visualization of the morphology at the interphase of glass fibre reinforced epoxy-thermoplastic polymer composites. *European Polymer Journal*, April 2007, vol. 43 (4), 1487-1500

- **OMAR, N. N.** ; **MUSTAFA, I. S.** ; **ABDULLAH, N.** ; **HASHIM, R.** The Use of Environmentally Friendly Bio-Oil in the Production of Phenol Formaldehyde (PF) Resin. *Pertanika Journal of Science & Technology*, 2018, vol. 26 (1), 177-192

- **PASCAULT, J.** ; **SAUTEREAU, H.** ; **VERDU, J.** ; **WILLIAMS, R.** Thermosetting polymers. Marcel Decker, 2002

- Application uses for polyetherrtherketone films in the oil & gas section .. **PERCY, M.** High Performance Thermoplastics & Composites for Oil & Gas Applications MLA (Modern Language Assoc.) Smithers. High Performance Thermoplastics & Composites for Oil & Gas Applications 2011 : [Conference Proceedings]. Smithers Rapra Technology Ltd, 2011, 62-69

- PerkinElmer, Inc.. PerkinElmer, Inc, 2013

- **PERRIER, S.** 50th Anniversary Perspective: RAFT Polymerization□A User Guide. *Macromolecules*, 2017, vol. 50, 7433-7447, https://pubs.acs.org/-doi/pdf/10.1021/acs.macromol.7b00767
- **PILON, G.** ; **LAVOIE, J.-M.** Pyrolysis of Switchgrass (Panicum virgatum L.) at Low Temperatures within N2 and CO2 Environments: Product Yield Study. *ACS Sustainable Chemical Engineering*, 30 November 2012, 198-204
- Plastics Engineering Company. Plastics Engineering Company, 01 May 2019
- **POURKARIMI, S.** ; **HALLAJISANI, A.** ; **ALIZADEH-DAKHEL, A.** ; **NOURALISHAHI, A.** Biofuel production through micro- and macroalgae pyrolysis - A review of pyrolysis methods and process parameters.. *Journal of Analytical and Applied Pyrolysis,*, September 2019, vol. 142
- Thermochemical Valorization of Lignin. **PRAKASH, A.** ; **SINGH, R.** ; **BALAGURUMURTHY, B.** ; **BHASKAR, T.** ; **ARORA, A.** ; **PURI, S.** Recent Advances in Thermochemical Conversion of Biomass. Elsevier, 2015, 455-478
- **QU, W.** ; **HUANG, Y.** ; **LUO, Y.** ; **KALLURU, S.** ; **COCHRAN, E.** ; **FORRESTER, M.** ; **BAI, X.** Controlled Radical Polymerization of Crude Lignin Bio-oil Containing Multihydroxyl Molecules for Methacrylate Polymers and the Potential Applications. *ACS Sustainable Chemical Engineering*, April 2019, vol. 7 (9), 9050-9060
- **RÄISÄNEN, T.** ; **ATHANASSIADIS, D.** Basic Chemical Composition of the Biomass Components of Pine, Spruce and Birch. BioFuel Region, 2013
- **RATNA, D.** Handbook of Thermoset Resins. Rapra Technology Ltd, 2009
- **REDWING, R.** John A. Dutton e-Education Institute. John A. Dutton e-Education Institute, 2020
- **REUSCH, W.** *LibreTexts*, 13 September 2020, https://chem.libretexts.orgBookshelves/Organic_-Chemistry/Supplemental_Modul es_(Organic_-Chemistry)/Amides/Properties_of_Amides/Physical_Properties_of_ Carboxylic_Acid_Derivatives
- Lignin: Properties and Applications. **RIAZ, U.** ; **ASHRAF, S. M.** Lignin: Properties and Applications in Biotechnology and Bioenergy. Nova Science Publishers, Inc., 2012, 69-73
- **RODRIGUEZ-NARVAEZ, O.** ; **PERALTA-HERNANDEZ, J.** ; **GOONETILLEKE, A.** ; **BANDALA, E.** Biochar-supported nanomaterials for environmental applications.. *Journal of Industrial and Engineering Chemistry.*, 2019
- **ROGERS, D.** Lignin-derived thermosetting vinyl ester resins for high. Rowan University, 2015
- Base-Catalyzed Depolymerization of Lignin: History, Challenges and Perspectives. **RÖßIGER, B.** ; **UNKELBACH, G.** ; **PUTKY-HEINRICH, D.** Lignin-Trends and Applications. IntechOpen, 2018
- **SADEGHIFAR, H.** ; **CUI, C.** ; **ARGYROPOULOS**. Thermoplastic Lignin Polymers. Part 1. Selective Masking of Phenolic Hydroxyl Groups in Kraft Lignins via Methylation and Oxypropylation Chemistries. *Industrial & Engineering Chemistry Research*, 04 December 2012, 16713-16720
- **SAHAF, A.** ; **LABORIE, M.-P.** ; **ENGLUND, K.** ; **GARCIA-PEREZ, M.** ; **MCDONALD, A.** Rheological Properties and Tunable Thermoplasticity of Phenolic Rich Fraction of Pyrolysis Bio-Oil.. *Biomacromolecules*, 20 February 2013, vol. 14 (4), 1132-1139
- **SALAMI, A.** ; **HEIKKINEN, J.** ; **TOMPPO, L.** ; **HYTTINEN, M.** ; **KEKÄLÄINEN, T.** ; **JÄNIS, J.** ; **LAPPALAINEN, R.** A Comparative Study of Pyrolysis Liquids by Slow Pyrolysis of Industrial Hemp Leaves, Hurds and Roots. *Moelcules*, 2021, vol. 26
- **SALEMA, A.** ; **AFZAL, M.** ; **BENNAMOUN, L.** Pyrolysis of corn stalk biomass briquettes in a microwave technology. *Bioresource Technology*, June 2017, vol. 233, 233-362
- The use of bimodal blends of vinyl ester monomers to improve resin processing and toughen polymer properties. **SCALA, J.** ; **ORLICKI, J.** ; **WINSTON, C.** ; **ROBINETTE, J.** ; **SANDS, J.** ; **PALMESE, G.** Polymer. Elsevier, 2005, 2908-2921
- **SCARLAT, N.** ; **DALLEMAND, J.-F.** ; **MONFORTI-FERRARIO, F.** ; **NITA, V.** The role of biomass and bioenergy in a future bioeconomy: Policies and facts. *Environmental Development*, 2015, vol. 15, 3-34
- **SCHUTYSER, W.** ; **RENDERS, T.** ; **VAN DEN BOSCH, S.** ; **KOELEWIJN, S.-F.** ; **BECKHAM, G. T.** ; **SELS, B. F.** Chemicals from lignin: an interplay of lignocellulose fractionation, depolymerisation, and upgrading.. *Chemical Society Reviews*, 2018, vol. 47 (3), 852-908, https://pubs.rsc.org/en/content/articlelanding/2018/cs/c7cs00566k#!divAbstract
- **SENNECA, O.** ; **CERCIELLO, F.** ; **WÜTSCHER, A.** ; **MUHLER, M** ; **APICELLA, B.** Thermal treatment of lignin, cellulose and hemicellulose in nitrogen and carbon dioxide. *Fuel*, 01 July 2020, vol. 271
- **SHAFAGHAT, H.** ; **REZAEI, P. S.** ; **RO, D.** ; **JAE, J.** ; **KIM, B.-S.** ; **JUNG, S.-C.** ; **PARK, Y.-K.** In-situ catalytic pyrolysis of lignin in a bench-scale fixed bed pyrolyzer.. *Journal of Industrial and Engineering Chemistry*, 25 October 2017, vol. 54, 447-453
- **SHAM AAN, P.** ; **KRISHNA, M.** ; **NARASIMHA-MOORTHY, H.** Mechanical, Thermal, Morphoological and Flame Retardance Properties of Modified Novolac GFRP Composites. *International Journal of Advanced Engineering Technology.*, 2011
- MilliporeSigma. Sigma-Aldrich Co. LLC, 2020

- **STANZIONE, J.** ; **GIANGIULIO, P.** ; **SADLER, J.** ; **LA SCALA, J.** ; **WOOL, R.** Lignin-Based Bio-Oil Mimic as Biobased Resin for Composite Applications. *ACS Sustainable Chemistry and Engineering*, 2013, vol. 1 (4), 419-426
- **STANZIONE, J.** ; **SADLER, J.** ; **LA SCALA, J.** ; **WOOL, R.** Lignin Model Compounds as Bio-Based Reactive Diluents for Liquid Molding Resins. *Chemsuschem*, July 2012, vol. 5 (7), 1291-1297
- **THAKUR, V.** ; **THAKUR, M.** ; **RAGHAVAN, P.** ; **KESSLER, M.** Progress in Green Polymer Composites from Lignin for Multifunctional Applications: A Review. *ACS Sustainable Chemistry & Engineering*, 12 March 2014, vol. 2 (5), 1072-1092
- **THOMSEN, A. B.** ; **RASMUSSEN, S.** ; **BOHN, V.** ; **NIELSEN, K. V.** Hemp raw materials: The effect of cultivar, growth conditions and pretreatment on the chemical composition of the fibres. Risø National Laboratory, 2005
- **TIPLER, A.** ; **DE LORENZO, F.** ; **GARNICA, R.** ; **KAPLAN, Y.** ; **MAY, D.** *A novel high sensitivity mass spectrometric detector for gas chromatography*, 20 March 2012, https://www.slideshare.net/PerkinElmer/sq8-technical-talk
- **TRINH, T.** ; **JENSEN, P.** ; **SÁROSSY, Z.** ; **DAM-JOHANSEN, K.** ; **KNUDSEN, N.** ; **SØRENSEN, H.** ; **EGSGAARD, H.** Fast pyrolysis of lignin using a pyrolysis centrifuge reactor. *Energy and Fuels*, 18 July 2013, vol. 27 (7), 3802-3810
- **VALLE, B.** ; **REMIRO, A.** ; **GARCÍA-GÓMEZ, N.** ; **GAYUBO, A.** ; **BILBAO, J.** Recent research progress on bio-oil conversion into bio-fuels and raw chemicals: a review. *Journal of Chemical Technology and Biotechnology*, 2018, vol. 94 (3), 670-689
- **VITHANAGE, A.** ; **CHOWDHURY, E.** ; **ALEJO, L.** ; **POMEROY, P.** ; **DESISTO, W** ; **FREDERICK, B.** ; **GRAMLICH, W.** Renewably sourced phenolic resins from lignin bio-oil.. *Journal of Applied Polymer Science*, 2017
- **WALLACE, C.** ; **AFZAL, M.** ; **SAHA, G.** Effect of feedstock and microwave pyrolysis temperature on physio-chemical and nano-scale mechanical properties of biochar. *Bioresources and Bioprocessing*, 2019, vol. 6 (33)
- **WAN, J.** ; **LIU, L.** ; **AYUB, K. S.** ; **ZHANG, W.** ; **SHEN, G.** ; **HU, S.** ; **QIAN, X.** Characterization and adsorption performance of biochars derived from three key biomass constituents. *Fuel*, 2020, vol. 269
- **WAN, Y.** ; **CHEN, P.** ; **ZHANG, B.** ; **YANG, C.** ; **LIU, Y.** ; **LIN, X.** ; **RUAN, R.** Microwave-assisted pyrolysis of biomass: Catalysts to improve product selectivity.. *Journal of Analytical and Applied Pyrolysis*, September 2009, vol. 86 (1), 161-167
- **WANG, B.** ; **GAO, B.** ; **FANG, J.** Recent advances in engineered biochar productions and applications. *Critical Reviews in Environmental Science and Technology*, 04 January 2018, vol. 47 (22), 2158-2207
- **WANG, C.** ; **KELLEY, S.** ; **VENDITTI, R.** Lignin-Based Thermoplastic Materials. *ChemSusChem*, 2016, vol. 9 (8), 770-783
- **WANG, C.** ; **SUN, J.** ; **SUDO, A.** ; **ENDO, T.** Synthesis and copolymerization of fully bio-based benzoxazines from guaiacol, furfurylamine and stearylamine. *Green Chemistry*, 2012 (10), https://pubs.rsc.org/en/content/articlelanding/2012/gc/c2gc35796h#!divAbstract
- **WANG, S.** ; **LUO, Z.** Pyrolysis of Biomass. De Gruyter, Inc., 2016
- **WANG, W.** ; **WANG, M.** ; **HUANG, J.** ; **ZHAO, X.** ; **SU, Y.** ; **WANG, Y.** ; **LI, X.** Formate-assisted analytical pyrolysis of kraft lignin to phenols.. *Bioresource Technology*, April 2019, vol. 278, 464-467
- Minerals | Zeolites. **WISE, W.** Encyclopedia of Geology. 2005, 591-600
- **XIU, S.** ; **SHAHBAZI, A.** Bio-oil production and upgrading research: A review. *Renewable and Sustainable Energy Reviews*, September 2012, vol. 16 (7), 4406-4414
- **YADAV, S.** ; **SCHMALBACH, K.** ; **KINACI, E.** ; **STANZIONE III, J.** ; **PALMESE, G.** Recent advances in plant-based vinyl ester resins and reactive diluents.. *European Polymer Journal*, 2018, vol. 98, 199-215
- **YAN, Q** ; **LI, J.** ; **ZHANG, J.** ; **CAI, Z.** Thermal Decomposition of Kraft Lignin under Gas Atmospheres of Argon, Hydrogen, and Carbon Dioxide. *Polymers*, June 2018, vol. 10 (7)
- **YANG, H.-M.** ; **ZHAO, W.** ; **NORINAGA, K.** ; **FANG, J.-J.** ; **WANG, Y.-G.** ; **ZONG, Z.-M.** ; **WIE, X.-Y.** Separation of phenols and ketones from bio-oil produced from ethanolysis of wheat stalk.. *Separation and Purification Technology*, 2015, vol. 152, 238-245
- **YE, Y.** ; **ZHANG, Y.** ; **CHANG, J.** Selective production of 4-ethylphenolics from lignin via mild hydrogenolysis.. *Bioresource Technology*, August 2012, vol. 118, 648-651
- **YERRAYYA, A.** ; **SURIAPPARAO, D.** ; **NATARAJAN, U.** ; **VINU, R.** Selective production of phenols from lignin via microwave pyrolysis using different carbonaceous susceptors. *Bioresource Technology*, 2018, 519-528
- **YU, Y.** ; **LI, X.** ; **SU, L.** ; **ZHANG, Y.** ; **WANG, Y.** ; **ZHANG, H.** The role of shape selectivity in catalytic fast pyrolysis of lignin with zeolite catalysts. *Applied Catalysis A: General*, 2012, vol. 447-448, 115-123

- **ZADEH, Z. E.** ; **ABDULKHANI, A.** ; **SAHA, B.** Characterization of Fast Pyrolysis BioOil from Hardwood and Softwood Lignin. *Energies*, 2020, vol. 13 (4), 887
- Upgrading of Bio-oil by Removing Carboxylic Acids in Supercritical Ethanol.. **ZHANG, Q.** ; **ZHANG, L.** ; **WANG, T.** ; **XU, Y.** ; **ZHANG, Q.** ; **MA, L.** ; **LI, K.** The 6th International Conference on Applied Energy - ICAE2014.. Elsevier, 2014, vol. 61, 1033-1036
- **ZHANG, X.** ; **MA, H.** ; **WU, S.** Effects of temperature and atmosphere on the formation of oligomers during the pyrolysis of lignin.. *Fuel*, 15 May 2020, vol. 268
- Microwave-Assisted Pyrolysis of Biomass for Bio-Oil Production. **ZHANG, Y.** ; **CHEN, P.** ; **LIU, S.** ; **FAN, L.** ; **ZHOU, N.** ; **MIN, M.** ; **RUAN, R.** Pyrolysis. IntechOpen, 2017
- **ZHANG, Z.** ; **ZHU, Z.** ; **SHEN, B.** ; **LIU, L.** Insights into biochar and hydrochar production and applications: A review. *Energy*, 15 March 2019, vol. 171, 581-598
- **ZHAO, C.** ; **JIANG, E.** ; **AIHUI, C.** Volatile production from pyrolysis of cellulose, hemicellulose and lignin.. *Journal of the Energy Institute*, December 2017, vol. 90 (6)
- **ZHOU, N.** Microwave-assisted lignin depolymerisation for bio-oil and phenolic mo. Dalhousie University, 2020